# EUROPÄISCHE PATENTSCHRIFT

(11) **EP 1 660 591 B1**
(45) Veröffentlichungstag und Bekanntmachung des Hinweises auf die Patenterteilung: **27.10.2010**
(21) Anmeldenummer: 04763390.4
(22) Anmeldetag: 22.07.2004
(51) Int. Cl.: C09B 69/06

(54) **KATIONISCHE FLUORALKYLPHOSPHAT FARBSTOFFE**
CATIONIC FLUOROALKYL-PHOSPHATE DYES
COLORANTS DE FLUORALKYLPHOSPHATES CATIONIQUES

(30) Priorität: 21.08.2003 DE 10338834; 21.08.2003 DE 10338933; 09.12.2003 DE 10357360; 09.12.2003 DE 10357359; 17.02.2004 DE 102004007611; 17.02.2004 DE 102004007610
(43) Veröffentlichungstag der Anmeldung: 31.05.2006
(60) Teilanmeldung: 10008076.1
(73) Patentinhaber: Merck Patent GmbH, 64293 Darmstadt (DE)
(72) Erfinder: IGNATYEV, Nikolai (Mykola), 47058 Duisburg (DE); WELZ-BIERMANN, Urs, 64646 Heppenheim (DE); WILLNER, Helge, 45481 Mülheim/Ruhr (DE); FINZE, Maik, 31582 Nienburg (DE); BERNHARDT, Eduard, 42107 Wuppertal (DE); KUCHERYNA, Andriy, 42117 Wuppertal (DE)
(86) Internationale Anmeldenummer: PCT/EP2004/008174
(87) Internationale Veröffentlichungsnummer: WO 2005/021661

(56) Entgegenhaltungen:
- EP-A- 0 731 147
- EP-A- 1 092 753
- US-A- 4 367 334
- US-A- 5 401 618

## Beschreibung

Die vorliegende Erfindung betrifft kationische Farbstoffe mit neuen Anionen, die zum Färben von Kunststoffen und Kunststofffiasern, zur Herstellung von Flexodruckfarben, Kugelschreiberpasten, Stempelfarben zum Färben von Leder und Papier in der traditionellen Anwendung, die jedoch auch in der Photo- und Lasertechnik sowie in der elektronischen Industrie verwendet werden können.

Eine Vielzahl von Farbstoffen sind heute bekannt. Man unterscheidet nach der Herkunft zwischen natürlichen und synthetischen Farbstoffen. Bekannte synthetische Farbstoffe sind z.B. Anilinblau, Fuchsin oder Methylorange. Die Bezeichnung der Farbstoffe erfolgt (a) durch den wissenschaftlichen Namen nach rein chemischen Gesichtspunkten aufgrund der Chromophoren-Konfiguration (z.B.: Azo-, Azin-, Anthrachinon-, Acridin-, Cyanin-, Oxazin-, Polymethin-, Thiazin-, Triarylmethan-Farbstoffe); (b) nach dem Verhalten zur Faser und der anzuwendenden Färbetechnik; basische oder kationische Farbstoffe, Beizen-, Direkt-, Dispersions-, Entwicklungs-, Küpen-, Metallkomplex-, Reakiv-, Säure- oder Schwefel-Farbstoffe; (c) nach dem Colour Index mit seinem Ziffemsystem (C. I...) oder dem Wort/Ziffernsystem (Acid Red..); (d) durch im allgemeinen als Warenzeichen geschützte Namen (Handels-Farbstoff-Bezeichnung); z.B.: Sirius-, Anthrasol-, Erio-, Indanthren-, Remazol-, Basilen-, Levafix-, Cibacron-, Drimaren- oder Procion-Farbstoffe.
Die meisten synthetischen Farbstoffe sind aromatische bzw. heterocyclische und entweder ionische (z.B. alle wasserlöslichen Farbstoffe) oder nichtionische Verbindungen (z.B. Dispersions-Farbstoffe). Bei ionischen Farbstoffen unterscheidet man zwischen anionischen und kationischen Farbstoffen.

Kationische Farbstoffe bestehen aus organischen Kationen mit positiven Ladungen die über konjugierte Bindungen delokalisiert sind und einem meist anorganischen Anion. Es sind zumeist Farbstoffe, deren Aminogruppen, die auch substituiert sein können, mit in die Resonanz einbezogen sind. Die Auswahl an bekannten kationischen Farbstoffen ist groß, die Zahl der Anionen hingegen beschränkt sich auf Chloride, Bromide, lodide, Perchlorate, Tetrafluoroborate, Hexafluorophosphate, Alkyl- oder Aryl-S ulfate, insbesondere Tosylate, Acetate oder Oxalate, wie in H. Zollinger, Color Chemistry, VCH, Weinheim 1991 beschrieben.

Bekannte kationische Farbstoffe sind z.B. Rhodamin, Safranin oder Viktoriablau, die üblicherweise Chlarid-lonen oder Tosylate als Gegenion besitzen. Diese Verbindungen sind elektrochemisch nicht sehr stabil. Im Stand der Technik findet man Bemühungen, neue Anionen einzuführen, die Farbstoffe elektrochemisch stabiler machen, Die eingesetzten Anionen wie (BF₄)⁻ oder (PF₆)⁻ weisen jedoch andere Nachteile auf. Farbstoffe mit Tetrafluoroborat-Anionen sind thermisch weniger stabil und besitzen eine schlechte Löslichkeit in organischen Lösungsmitteln. Farbstoffe mit Hexafluorophosphat-Anionen weisen weder gute thermische noch gute Hydrolysestabilität auf.

EP 1092753 offenbart kationische Cyanin-Farbstoffe, welche mit PF₆⁻-Anionen assoziiert sind.

JP-A-2-3052 beschreibt den Farbstoff 3,3'-Diethoxyethyl-2,2'-thiadicarbocyanin Trifluormethyltrifluorborat als Photopolymerisationsinitiator. Diese und ähnliche Verbindungen wurden synthetisiert, um luftstabile Initiatoren zu erhalten, die bei Bestrahlung von Licht mit Wellenlängen von 600 - 900 nm oder mehr, eine Polymerisation auslösen können.

Die Aufgabe der vorliegenden Erfindung war, Farbstoffe zur Verfügung zu Stoffen, die elektrochemisch stabil, thermisch stabil und hydrolysestabil sind, sowie eine gute Löslichkeit in organischen Lösungsmitteln aufweisen. Gelöst wird die Aufgabe durch kationische Farbstoffe der allgemeinen Formel (I):

CAT⁺ Y⁻ (I),

wobei Y⁻
ein Fluoralkylphosphat der allgmeinen Formel (II-2)

[P(Cₚ₂F₂ₚ₂₊₁₋ₘ₂Hₘ₂)_{y2}F_{6-y2}]⁻ (II-2)

ist, mit
- p2:: 1 bis 20,
- m2:: 0, 1, 2 oder 3 und
- y2:: 1, 2, 3 oder 4,
und
CAT⁺ ein Kation ist, ausgewählt aus der Gruppe der Azin-, Xanthen-, Polymethin-, Styryl-, Azo-, Tetrazolium-, Pyrylium-, Benzopyrylium-, Thiopyrylium-, Benzothiopyrylium-, Thiazin-, Oxazin-, Triarylmethan-, Diarylmethan-, Acridin-, Chinolin-, Iso-Chinolin- oder quarternierten Azafluorenon-Farbstoffe.

Die Fluoralkylphospht-Anionen, im folgenden als FAP-Anionen abgekürzt, und Verfahren zu deren Herstellung sind aus EP 0929558 B1 und US 6,423,454 bekannt.
In Formel II-2 ist p2 bevorzugt 1, 2, 3, 4, 5, 6, 7 oder 8, besonders bevorzugt 2, 3 oder 4.
Besonders bevorzugte FAP-Anionen sind ⁻PF₃(C₂F₅)₃, ⁻PF₃(C₄F₉)₃, ⁻PF₃(C₃F₇)₃ oder ⁻PF₄(C₂F₅)₂.

Das Anion Y⁻ bedeutet daher bevorzugt ⁻PF₃(C₂F₅)₃, ⁻PF₃(C₄F₉)₃, ⁻PF₃(C₃F₇)₃, ⁻PF₄(C₂F₅)₂.

Besonders bevorzugt ist Y⁻, ⁻PF₃(C₂F₅)₃, ⁻PF₃(₄F₉)₃, ⁻PF₃(C₃F₇)₃, ⁻PF₄(C₂F₅)₂, ganz besonders bevorzugt ⁻PF₃(C₂F₅)₃,

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Azinfarbstoffs ist.
Verbindungen mit einem Azingrundgerüst sind beispielsweise Verbindungen basierend auf Phenazin 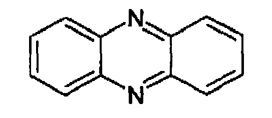 oder
Chinoxalin

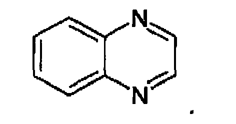

Aus der Gruppe der Phenazine sind wiederum Safranine, Induline und Nigrosine bevorzugt.
Bevorzugte Kationen können durch die Formel III 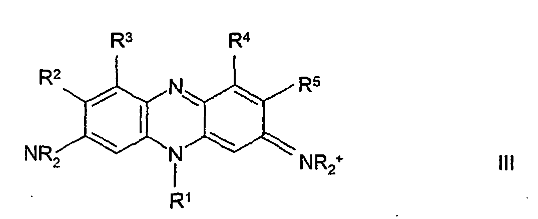 beschrieben werden, wobei
- R: jeweils unabhängig voneinander H, Alkyl oder Aryl,
- R¹: Wasserstoff oder Aryl,
- R², R³, R⁴, R⁵: jeweils unabhängig voneinander H, Alkyl, Aryl oder NR₂ bedeutet.

In den vorstehenden oder nachfolgenden Formeln bedeutet Alkyl eine Alkylgruppe, die linear oder verzweigt ist und 1 bis 20 C-Atome, vorzugsweise 1 bis 12 C-Atome, besonders bevorzugt 1, 2, 3 oder 4 C-Atome hat und gegebenenfalls vollständig oder teilweise fluoriert ist. Alkyl bedeutet vorzugsweise Methyl, weiterhin Ethyl, Isopropyl, Propyl, Butyl, Isobutyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl oder Hexyl. Gegebenenfalls Fluormethyl, Difluormethyl, Trifluormethyl, Pentafluorethyl, Heptafluorpropyl oder Nonafluorbutyl. Besonders bevorzugt ist Methyl oder Ethyl.

In den nachfolgenden Formeln steht Alkenyl für ein geradkettiges oder verzweigtes Alkenyl mit 2 bis 20 C-Atomen, wobei auch mehrere Doppelbindungen vorhanden sein können, vorzugsweise für Allyl, 2- oder 3-Butenyl, Isobutenyl, sek.-Butenyl, ferner bevorzugt ist 4-Pentenyl, iso-Pentenyl oder 5-Hexenyl.

In den nachfolgenden Formeln steht Alkinyl für ein geradkettiges oder verzweigtes Alkinyl mit 2 bis 20 C-Atomen, wobei auch mehrere Dreifachbindungen vorhanden sein können, vorzugsweise für Ethinyl, 1- oder 2-Propinyl, 2- oder 3-Butinyl, ferner bevorzugt ist 4-Pentinyl, 3-Pentinyl oder 5-Hexinyl.

In Alkyl-Aryl hat Aryl eine der nachfolgend angegebenen bevorzugten Bedeutungen. Besonders bevorzugt für Alkyl-Aryl ist Benzyl, 4-Methoxyphenylethyl, 3-Methoxyphenylethyl, 2-Methoxybenzyl, 3-Methoxybenzyl, 4-Methoxybenzyl, 2-Ethoxybenzyl, 2-Methylbenzyl, 3-Methylbenzyl, 4-tert.-Butylbenzyl, 2-(Trifluormethyl)benzyl, 3-(Trifluormethyl)benzyl, 4-Fluorbenzyl, 3-lodbenzyl, 4-(Trifluormethoxy)benzyl, 3-(Trifluormethoxy)benzyl oder 4-(Trifluormethylsulfanyl)benzyl.

In den vorstehenden oder nachfolgenden Formeln bedeutet Aryl vorzugsweise durch Z mono-, di- oder trisubstituiertes Phenyl, wobei Z Wasserstoff, Alkyl, NO₂, F, Cl, Br, I, OH, Carboxy, Alkoxy, OCF₃, SCN, SCF₃, C(O)OAlkyl, CH₂-C(O)OAlkyl, Amino oder Alkylamino bedeuten kann. In die Definition von Aryl ist auch perfluoriertes Aryl, insbesondere perfluoriertes Phenyl eingeschlossen.

Aryl bedeutet daher bevorzugt Phenyl, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Aminophenyl, o-, m- oder p-(N,N-Dimethylamino)phenyl, o-, m- oder p-Nitrophenyl, o-, m- oder p-Hydroxyphenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfanyl)phenyl, o-, m- oder p-Fluorphenyl, o-, m- oder p-Chlorphenyl, o-, m- oder p-Bromphenyl, o-, m- oder p-lodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In den nachfolgenden Formeln bedeutet Arylalkyl Aryl, das ein- oder mehrfach durch Alkyl mit 1-4 C-Atomen substituiert ist.

In den nachfolgenden Formeln bedeutet Carbocyclus einen ungesättigen mono- oder bicyclischen Rest mit 5 bis 14 Ringgliedern, vorzugsweise Cyclopentenyl, Cyclopentadienyl, Cyclohexenyl, 1,3- oder 1,4-Cyclohexadienyl, Phenyl, Cycloheptatrienyl, Cyclooctenyl, Indenyl, Fluorenyl, Napthyl, Anthracenyl oder Phenantrenyl, welcher ein- oder mehrfach durch Z, wie zuvor beschrieben, substituiert sein kann.

In den vorstehenden oder nachfolgenden Formeln bedeutet Cycloalkyl eine Cycloalkylgruppe mit 3 bis 8 C-Atomen, vorzugsweise Cyclopropyl, Cyclobutyl, Cyclopentyl, Cyclohexyl, Cycloheptyl oder Cyclooctyl.

In den nachfolgenden Formeln bedeutet Cycloalkylen eine Cycloalkylgruppe mit 5 bis 8 C-Atomen, die teilweise ungesättigt ist. Vorzugsweise Cyclopent-1-enyl, Cyclohex-1-enyl, Cylohex-1,3-dienyl, Cyclohex-1,4-dienyl, Cyclohept-1-enyl oder Cyclooct-1-enyl.

In den nachfolgenden Formeln bedeutet Heteroaryl einen ungesättigten mono- oder bicyclischen heterocyclischen Rest mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Heteroaryl ist vorzugsweise substituiertes oder unsubstituiertes 2- oder 3-Furyl, 2- oder 3-Thienyl, 1-, 2- oder 3-Pyrrölyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3- oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3-oder-5-yl, 1,3,4-Thiadiazol-2-oder-5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4- oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl.

Besonders bevorzugte Kationen CAT⁺, die auf dem Phenazingrundgerüst basieren, sind die folgenden Kationen: 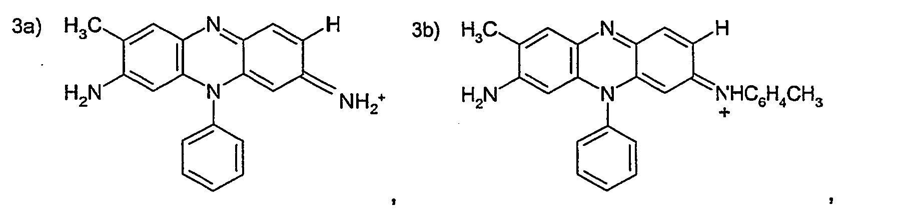 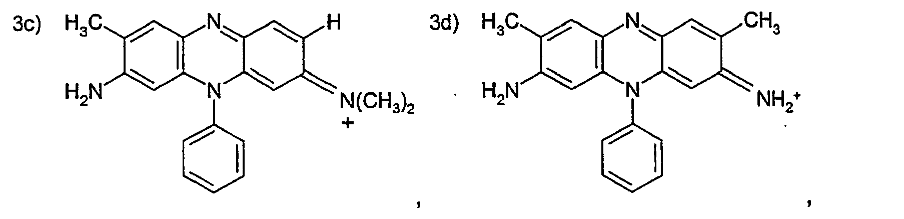 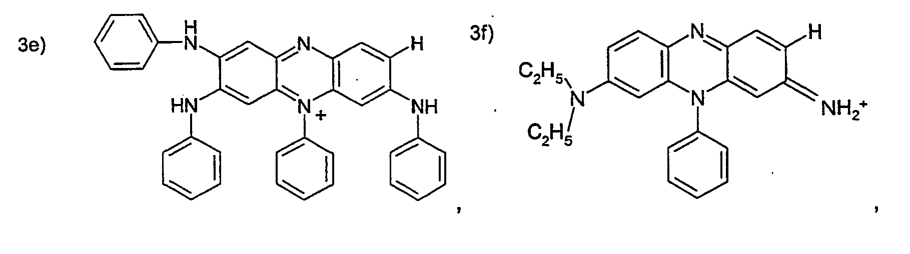 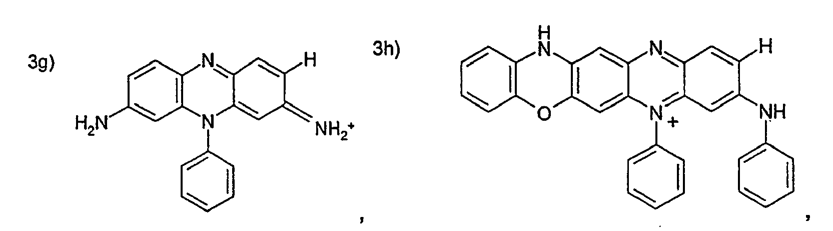 oder

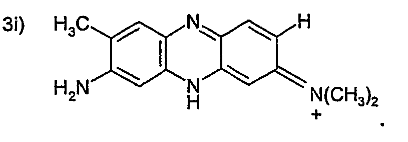

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Xanthenfarbstoffs ist.

Bevorzugte Kationen können durch die Formel IV 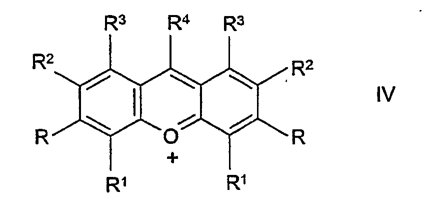 beschrieben werden, wobei
R jeweils unabhängig voneinander H, Alkyl, Alkenyl, Aryl, Heteroaryl, OH, OAlkyl, OC(O)Alkyl, NH₂, NH-Alkyl, NH-Aryl, NH-Heteroaryl, Cl oder Br,
R¹ jeweils unabhängig voneinander H, Alkyl, Aryl, Alkyl-Aryl, OH, OAlkyl, OC(O)Alkyl, Cl, Br oder I,
R² jeweils unabhängig voneinander H, Alkyl, Aryl, OH, OAlkyl, OC(O)Alkyl, OC(O)Aryl, CN, NO₂, Cl, Br oder I,
R³ jeweils unabhängig voneinander H, Alkyl, Alkenyl, Aryl, OH, OAlkyl, Cl, Br oder I,
R⁴ jeweils unabhängig voneinander H, Alkyl, Alkenyl, Aryl, Heteroaryl, Alkyl-Aryl, CH₂C(O)H, COOH, COOAlkyl, COOCycloalkyl, COOAryl, COOHeteroaryl, OAlkyl, Cl, Br oder I
bedeutet.
Nebenstehende R, R¹, R², R³ oder R⁴ können miteinander mittels Einfach- oder Doppelbindungen verbunden sein.

Besonders bevorzugte Verbindungen aus der Gruppe der Xanthene sind Verbindungen der Formel IVa 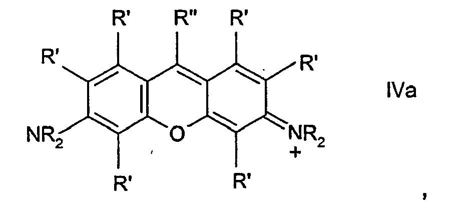 worin
R jeweils unabhängig voneinander H, Alkyl, Alkenyl, Aryl oder teilweise durch COOH substituiertes Alkyl,
R' jeweils unabhängig voneinander H, Alkyl, Alkenyl, Aryl, Aryl-COOR, NH₂, NH-Alkyl, NH-Aryl, NH-Heteroaryl oder N(Alkyl)₂,
R" jeweils unabhängig voneinander H, Alkyl, Alkenyl, Aryl, Heteroaryl, teilweise durch COOR substituiertes Alkyl oder Aryl-COOR,
bedeutet.
R ist jeweils unabhängig besonders bevorzugt H oder Alkyl. R' ist jeweils unabhängig besonders bevorzugt H oder Alkyl. R" ist besonders bevorzugt Aryl, das durch mindestens einen Substituenten COOR substituiert ist und gegebenenfalls weiter durch Z substituiert sein kann, wobei Z eine der zuvor bei Aryl angegebenen Bedeutungen hat.
Nebenstehende R, R' oder R" können miteinander mittels Einfach- oder Doppelbindungen verbunden sein.

Besonders bevorzugte Kationen CAT⁺, die auf dem Xanthengrundgerüst basieren, sind die folgenden Kationen:

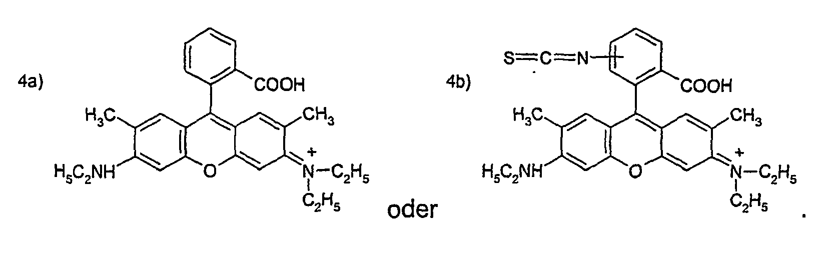

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Polymethinfarbstoffs ist.

Zur Gruppe der Polymethinfarbstoffe gehören die Cyanin-, Carbocyanin-, Azacarbocyanin-, Diazacarbocyanin-, Triazacarbocyanin-, Hemicyanin- und Diazahemicyanin-Farbstoffe. Die Hemicyanin-Farbstoffe sind eine ausgewählte Gruppe der Styrylfarbstoffe und können auch diesen zugeordnet werden. Die Diazahemicyanin-Farbstoffe sind eine ausgewählte Gruppe der Azofarbstoffe und können auch diesen zugeordnet werden.

Bevorzugte Kationen von Cyaninfarbstoffen können durch die Formel V-1 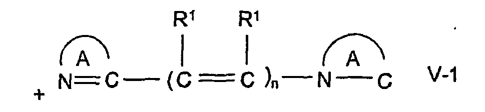 beschrieben werden, wobei
n 0, 1, 2, 3, 4 oder 5,
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet
und das Ringsystem, dargestellt durch 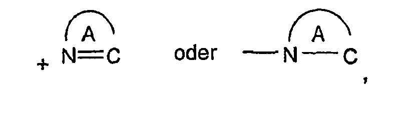 einen Stickstoff enthaltenden ungesättigten mono-, bi- oder tricyclischen Heterocyclus mit 5 bis 13 Ringgliedern, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann.
n ist besonders bevorzugt 1.

Ein besonders bevorzugtes Kation CAT⁺ aus der Gruppe der Cyaninfarbstoffe ist:

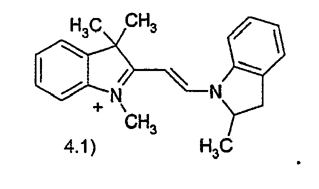

Bevorzugte Kationen von Carbocyaninfarbstoffen können durch die Formel V-2 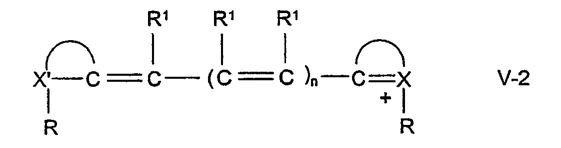 beschrieben werden, wobei
X N, O oder S,
X' N, O, S oder C,
n 0, 1, 2, 3, 4 oder 5,
R jeweils unabhängig voneinander Alkyl, Alkenyl, Cycloalkyl, Aryl oder Heteroaryl bedeutet
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.

Die jeweiligen Radikale R und/oder R¹ können jeweils miteinander oder mit einem Substituenten des Ringsystems mittels Einfach- oder Doppelbindungen verbunden sein. Für den Auszug der Formel 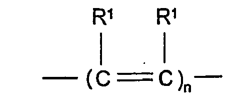 mit n=2 bedeutet das, dass sich ein Cyclohexen oder Cyclopenten in der Verbindung befinden kann, wie beispielsweise

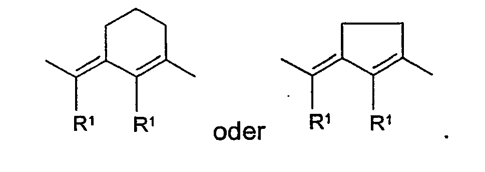

Das Ringsystem, dargestellt durch 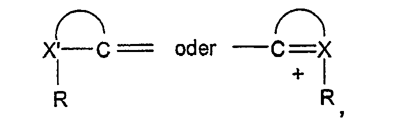 bedeutet einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Besonders bevorzugte Ringsysteme sind 3,3-Dimethyl-3H-indol, 1,1-Dimethyl-1H-benzo[e]indol, Benzo[cd]indol, Benzothiazol, Benzoxazol, Benzimidazol oder Benzopyridin, die gegebenenfalls weiter durch Z substituiert sein können. Z ist hierbei besonders bevorzugt Alkyl oder Cl.
n ist bevorzugt 1, 2 oder 3.
R¹ in Formel V-2 ist bevorzugt Alkyl, Cl, OAlkyl, OAryl, SAryl oder Aryl.
R ist jeweils unabhängig in Formel V-2 bevorzugt Methyl, Ethyl, Propyl oder Butyl, wobei das jeweilige Alkyl gegebenenfalls durch SO₃H oder COOH substituiert sein kann.
Besonders bevorzugte Kationen CAT⁺ aus der Gruppe der Carbocyaninfarbstoffe sind:

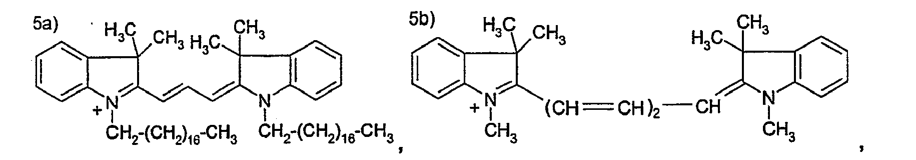

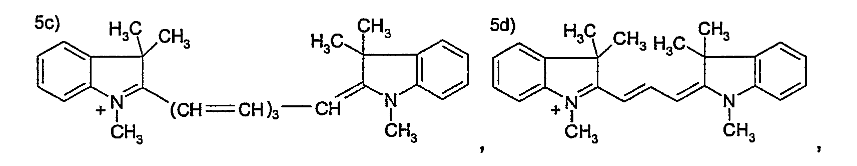

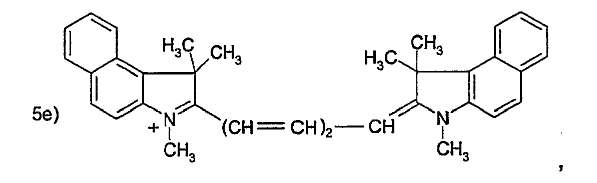

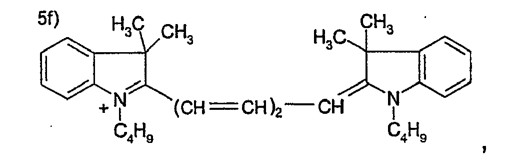

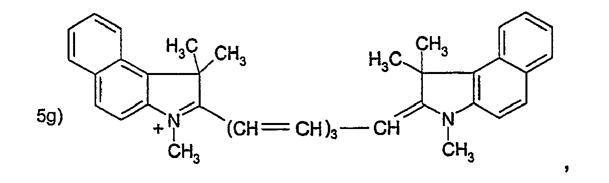

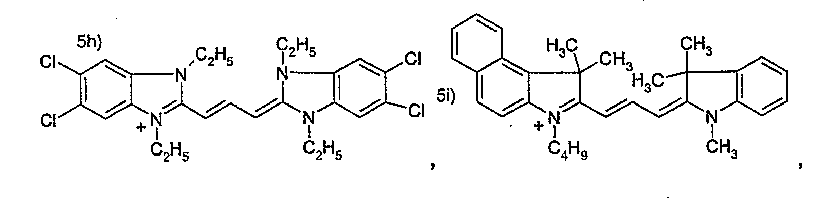

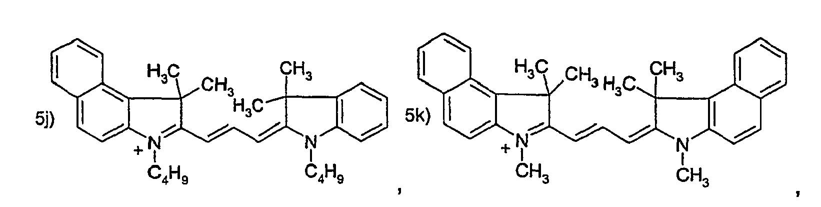

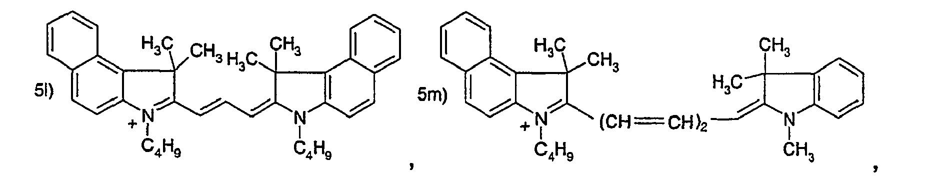

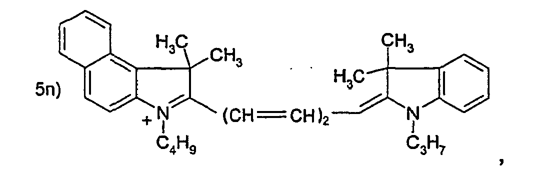

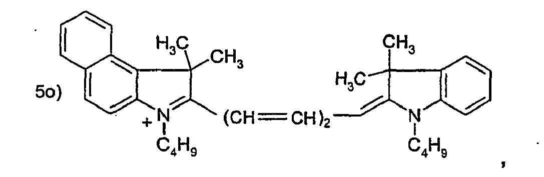

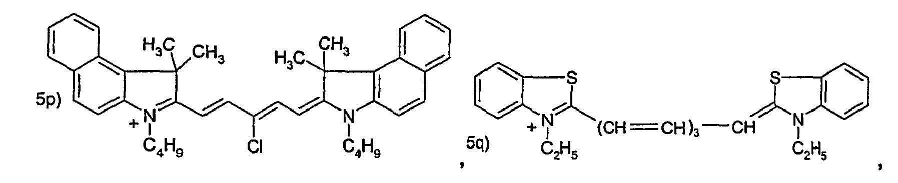

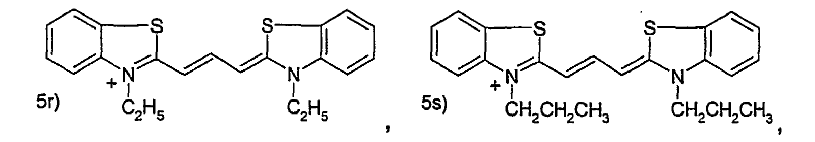

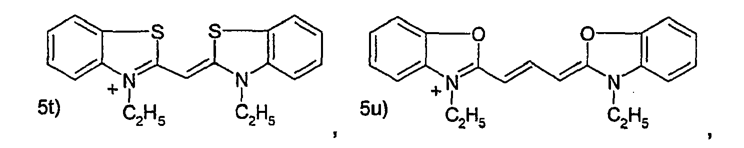

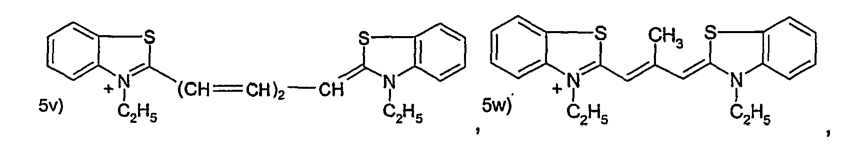

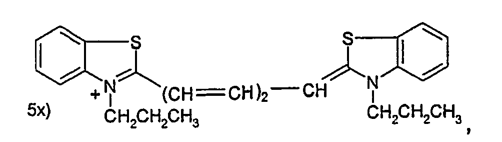

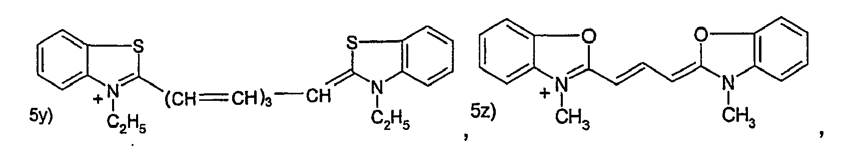

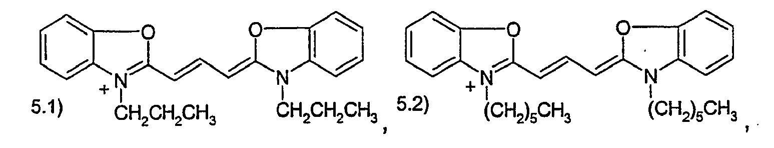

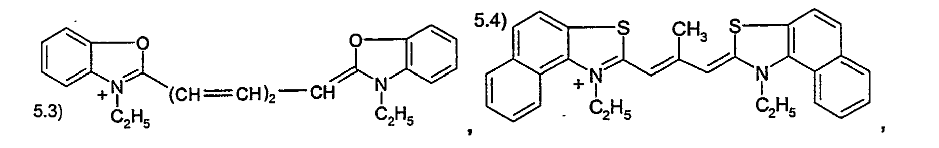

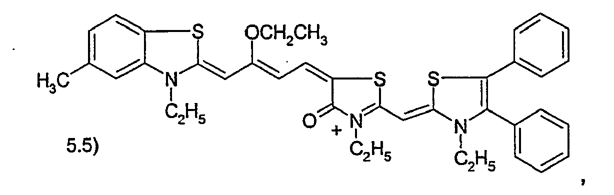

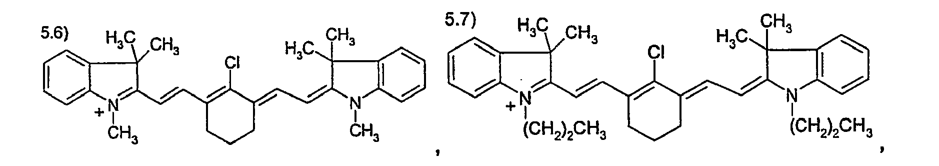

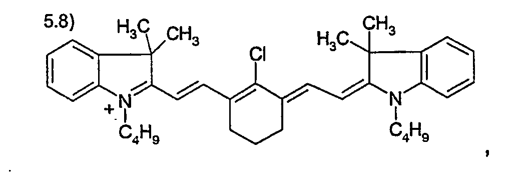

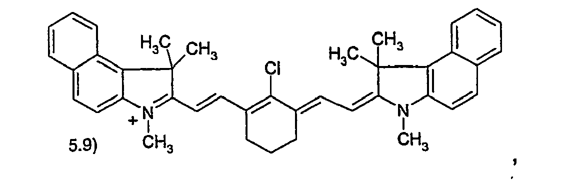

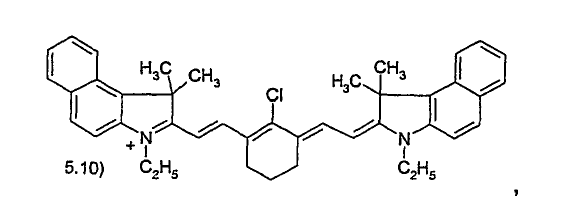

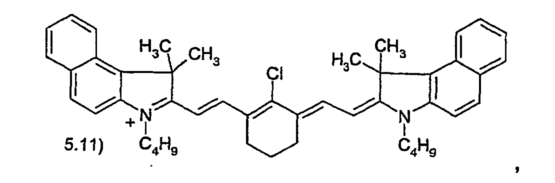

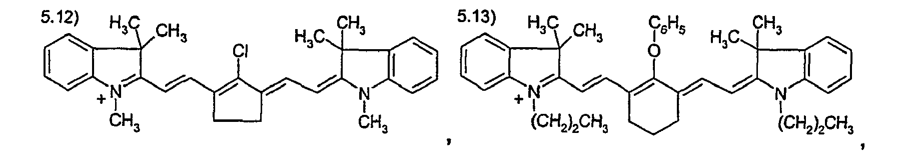

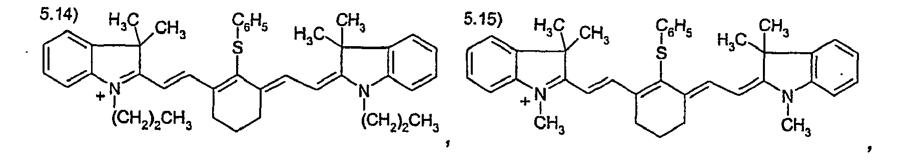

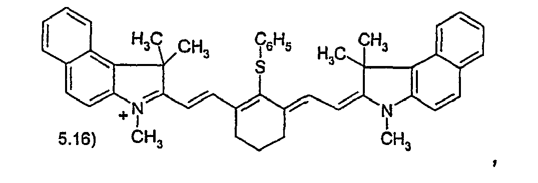

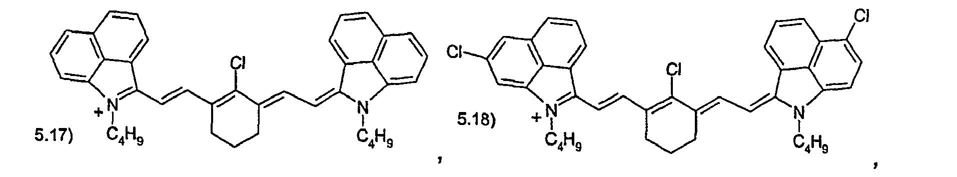

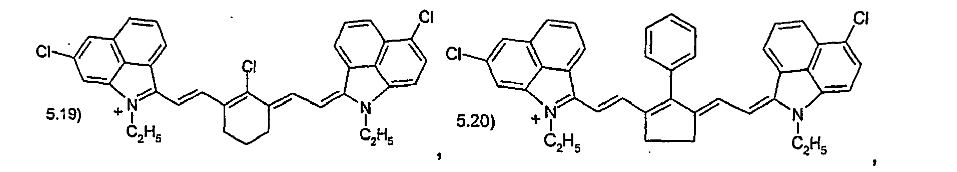

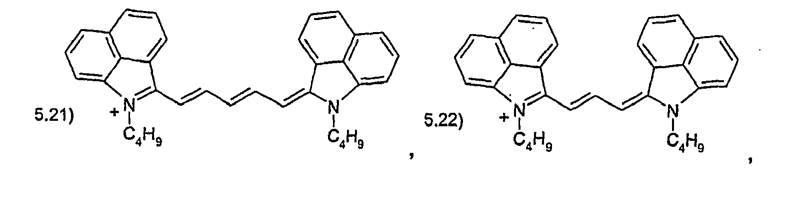

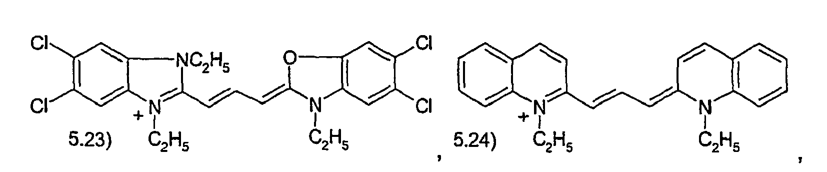

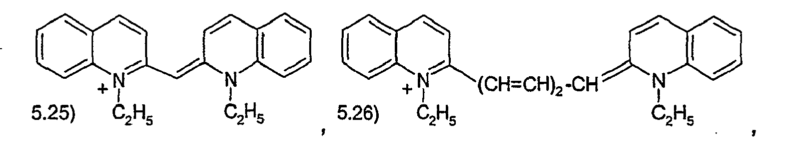

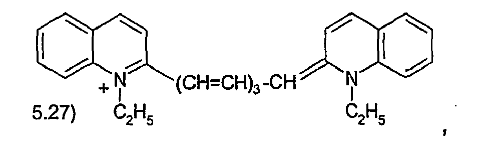

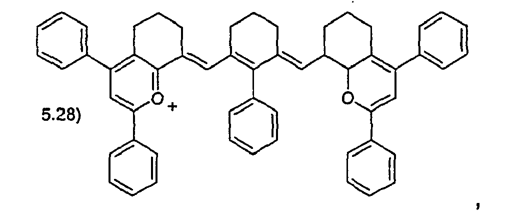

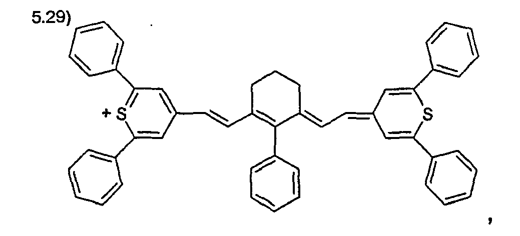

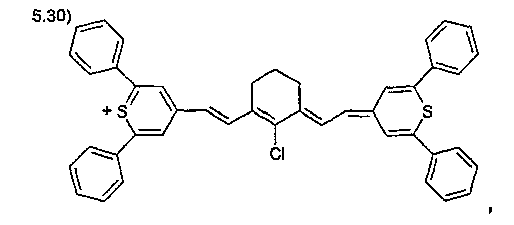

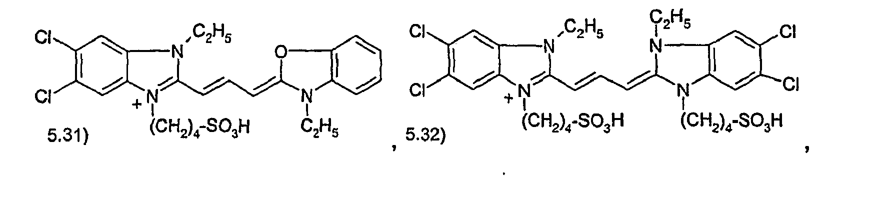

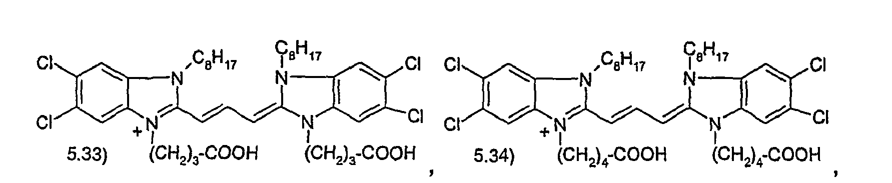

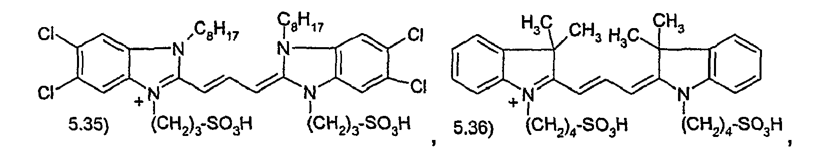

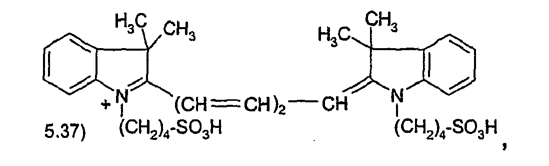

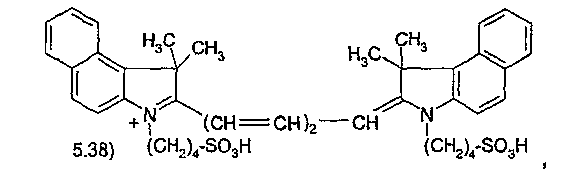

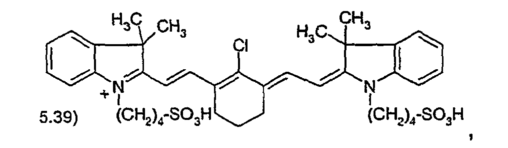

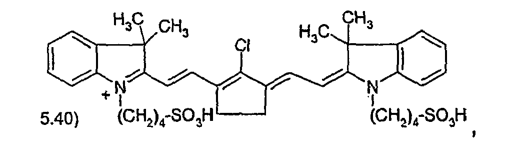

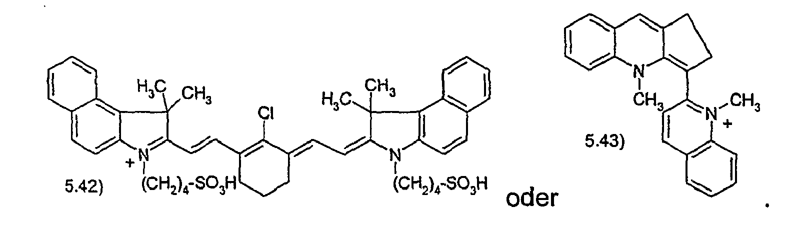

Bevorzugte Kationen von Azacarbocyaninfarbstoffen können durch die Formel V-3 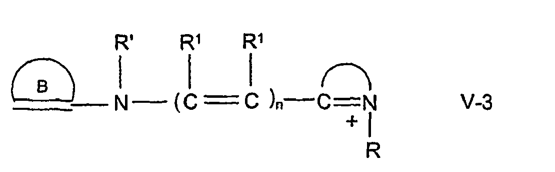 beschrieben werden, wobei
n 1 oder 2,
R' Wasserstoff oder Alkyl,
R Alkyl, Alkenyl, Cycloalkyl, Aryl oder Heteroaryl bedeutet
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.
Die jeweiligen Radikale R und/oder R¹ können jeweils miteinander oder mit einem Substituenten des Ringsystems mittels Einfach- oder Doppelbindungen verbunden sein.
Das Ringsystem, dargestellt durch 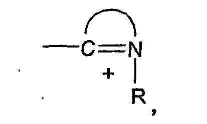 bedeutet einen Stickstoff enthaltenden ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Ein besonders bevorzugtes Ringsystem ist 3,3-Dimethyl-3H-indol. Das Ringsystem, dargestellt durch 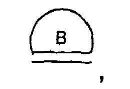 bedeutet einen ungesättigten mono- oder bicyclischen Carbocyclus mit 5 bis 14 Ringgliedern oder einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der carbo- oder heterocyclische Rest ein- oder mehrfach durch Z, wie zuvor beschrieben, substituiert sein kann.
Das Ringsystem bedeutet vorzugsweise Aryl.
n ist bevorzugt 1.
R¹ in Formel V-3 ist bevorzugt H oder Alkyl.
R ist in Formel V-3 bevorzugt Alkyl.

Besonders bevorzugte Kationen CAT⁺ aus der Gruppe der Azacarbocyaninfarbstoffe sind:

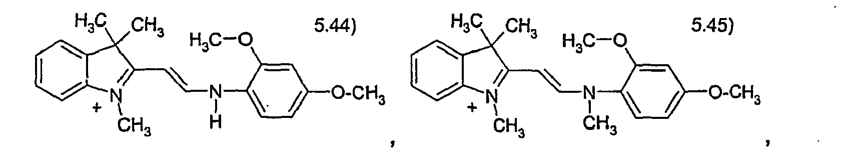

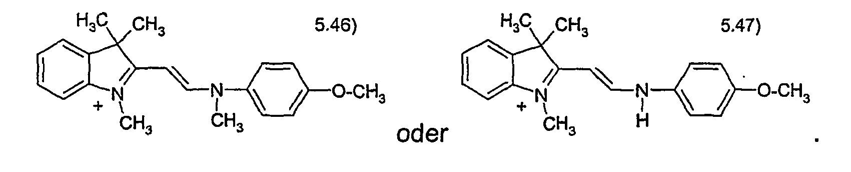

Bevorzugte Kationen von Diazacarbocyaninfarbstoffen können durch die Formel V-4 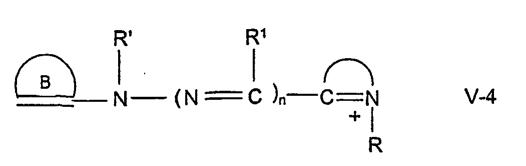 beschrieben werden, wobei
n 1,
R' Wasserstoff oder Alkyl,
R Alkyl, Alkenyl, Cycloalkyl, Aryl oder Heteroaryl bedeutet
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.
Die jeweiligen Radikale R und/oder R¹ können jeweils miteinander oder mit einem Substituenten des Ringsystems mittels Einfach- oder Doppelbindungen verbunden sein.
Das Ringsystem, dargestellt durch 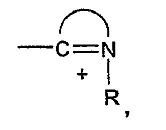 bedeutet einen Stickstoff enthaltenden ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Ein besonders bevorzugtes Ringsystem ist 3,3-Dimethyl-3H-indol. Das Ringsystem, dargestellt durch 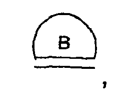 bedeutet einen ungesättigten mono- oder bicyclischen Carbocyclus mit 5 bis 14 Ringgliedern, der ein- oder mehrfach durch Z, wie zuvor beschrieben, substituiert sein kann, vorzugsweise Aryl.
R¹ in Formel V-4 ist bevorzugt H oder Alkyl.
R in Formel V-4 ist bevorzugt Alkyl.

Besonders bevorzugte Kationen CAT⁺ aus der Gruppe der Diazacarbocyaninfarbstoffe sind:

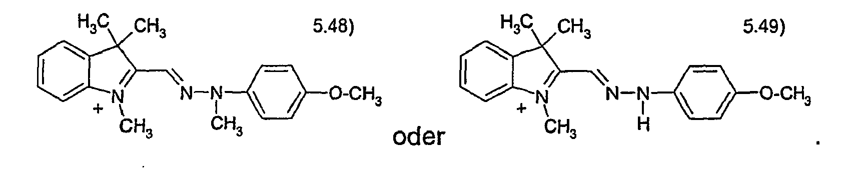

Bevorzugte Kationen von Triazacarbocyaninfarbstoffen können durch die Formel V-5 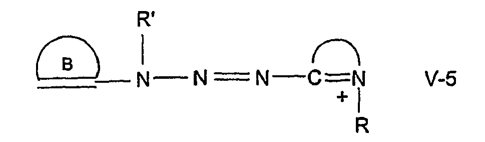 beschrieben werden, wobei
R' Wasserstoff oder Alkyl und
R Alkyl, Alkenyl, Cycloalkyl, Aryl oder Heteroaryl bedeutet.
Die jeweiligen Radikale R und/oder R' können jeweils mit einem Substituenten des Ringsystems mittels Einfach- oder Doppelbindungen verbunden sein.
Das Ringsystem, dargestellt durch 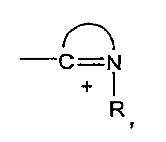 bedeutet einen Stickstoff enthaltenden ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, α-Pyran, γ-Thiopyran, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen. Ein besonders bevorzugtes Ringsystem ist Benzothiazol.
Das Ringsystem, dargestellt durch 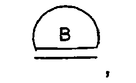 bedeutet einen ungesättigten mono- oder bicyclischen Carbocyclus mit 5 bis 14 Ringgliedern, der ein- oder mehrfach durch Z, wie zuvor beschrieben, substituiert sein kann, vorzugsweise Aryl.
R ist in Formel V-5 bevorzugt Alkyl.

Ein besonders bevorzugtes Kation CAT⁺ aus der Gruppe der Triazacarbocyaninfarbstoffe ist:

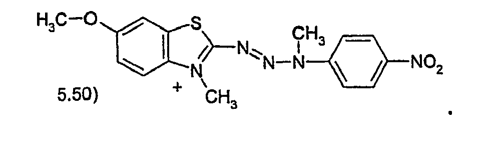

Bevorzugte Kationen von Hemicyaninfarbstoffen können durch die Formel V-6 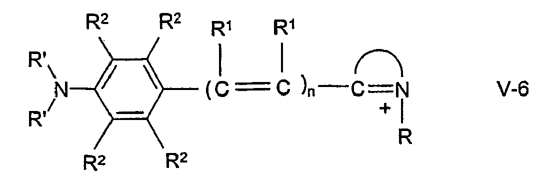 beschrieben werden, wobei
n 1, 2, 3, 4 oder 5,
R' jeweils unabhängig voneinander H oder Alkyl,
R Alkyl, Alkenyl, Cycloalkyl, Aryl oder Heteroaryl,
R² jeweils unabhängig voneinander H, Alkyl, NO₂, NH₂, NHAlkyl oder N(Alkyl)₂
und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet.
Die jeweiligen Radikale R, R¹ und/oder R² können jeweils miteinander oder mit einem Substituenten des Ringsystems mittels Einfach- oder Doppelbindungen verbunden sein. Für den Auszug der Formel 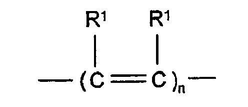 mit n=2 bedeutet das, dass sich ein Cyclohexen in der Verbindung befinden kann, wie beispielsweise 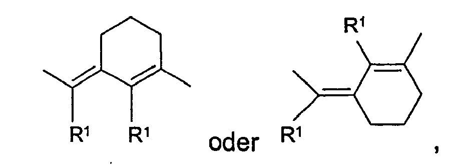 wobei das Cyclohexen gegebenenfalls weiter durch Z, wie zuvor beschrieben, substituiert sein kann.

Das Ringsystem, dargestellt durch 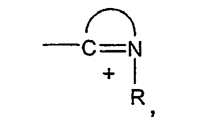 bedeutet einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen.
Besonders bevorzugte Ringsysteme sind 3,3-Dimethyl-3H-indol, Benzothiazol, Benzoxazol, Pyridin oder Chinolin, die gegebenenfalls weiter durch Z substituiert sein können. Z ist hierbei besonders bevorzugt Alkyl.
n ist bevorzugt 1, 2 oder 3.
R¹ in Formel V-6 ist bevorzugt Wasserstoff.
R² ist bevorzugt Wasserstoff oder Alkyl.
R in Formel V-6 ist bevorzugt Alkyl.

Besonders bevorzugte Kationen CAT⁺ aus der Gruppe der Hemicyaninfarbstoffe sind:

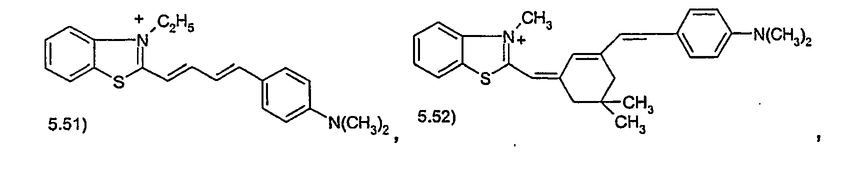

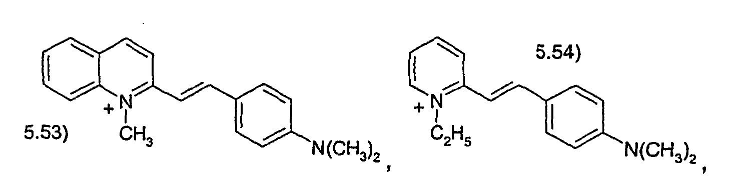

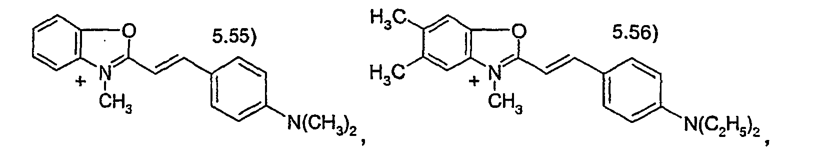

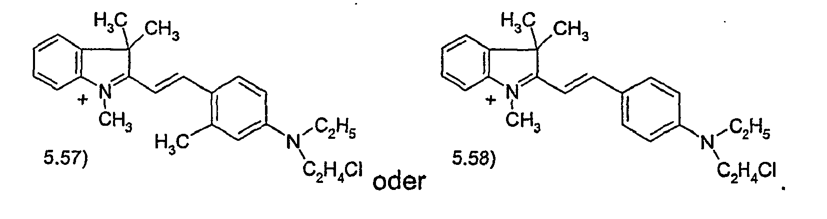

Bevorzugte Kationen von Diazahemicyaninfarbstoffen können durch die Formel V-7 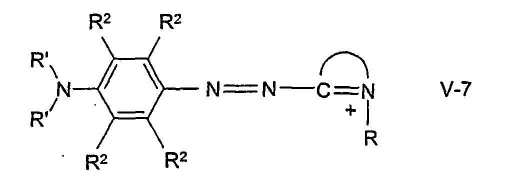 beschrieben werden, wobei
R' jeweils unabhängig voneinander H oder Alkyl,
R jeweils unabhängig voneinander Alkyl, Alkenyl, Cycloalkyl, Aryl oder Heteroaryl und
R² jeweils unabhängig voneinander H, Alkyl, NO₂, NH₂, NHAlkyl oder N(Alkyl)₂ bedeutet.
Die jeweiligen Radikale R, R' und/oder R² können jeweils miteinander oder mit einem Substituenten des Ringsystems mittels Einfach- oder Doppelbindungen verbunden sein.
Das Ringsystem, dargestellt durch 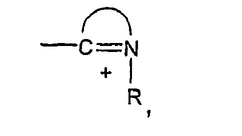 bedeutet einen ungesättigten mono-, bi- oder tricyclischen Heterocyclus mit 5 bis 13 Ringgliedern, wobei 1, 2 oder 3 N- und/oder 1 oder 2 S- oder O-Atome vorliegen können und der heterocyclische Rest ein- oder mehrfach durch Z, wie zuvor beschrieben, substituiert sein kann.

Das Ringsystem bedeutet vorzugsweise Pyridin, Chinolin, Thiazol, Pyrrol, Imidazol oder Oxazol, die weiterhin an ein Phenyl kondensiert sein können. Der Ringschluss kann nicht nur zwischen Stickstoff und dem nebenstehenden Kohlenstoff bestehen, sondern auch zwischen Stickstoff und den in der Kette folgenden Kohlenstoff-Atomen oder den R¹-Resten erfolgen, wenn diese Kohlenstoff enthalten, oder zwischen Kohlenstoff-Atomen mit Bildung von aromatischen Systemen.
Besonders bevorzugte Ringsysteme sind Thiazol, Benzothiazol, Imidazol, Pyridin, Indazol oder 1,2,4-Triazol, die gegebenenfalls weiter durch Z substituiert sein können. Z ist hierbei besonders bevorzugt Alkyl.
R² ist bevorzugt Wasserstoff.
R ist jeweils unabhängig in Formel V-7 bevorzugt Alkyl oder durch CONH₂ substituiertes Alkyl.

Besonders bevorzugte Kationen CAT⁺ aus der Gruppe der Diazahemicyaninfarbstoffe sind:

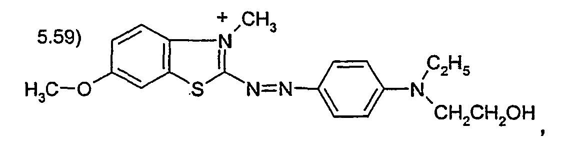

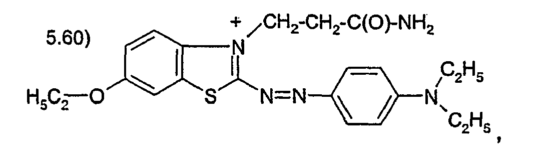

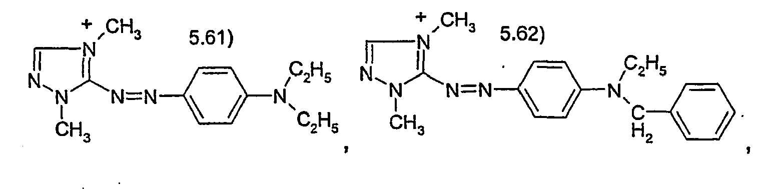

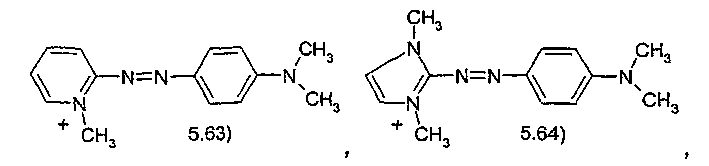

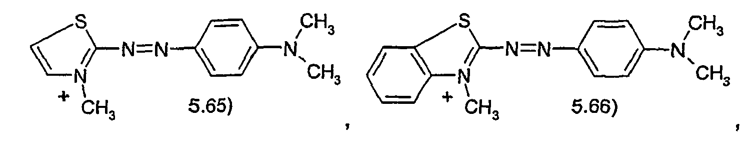

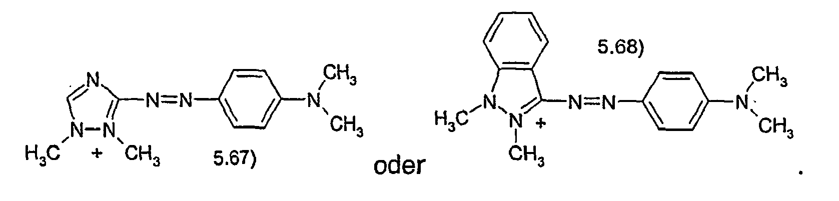

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Styrylfarbstoffs ist.

Bevorzugte Kationen können durch die Formel VI 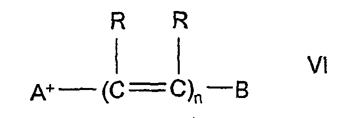 beschrieben werden, worin A⁺ ein positiv geladener heterocyclischer Rest, wie zuvor bei Heteroaryl definiert, ist, der teilweise gesättigt sein kann, und B ein carbo- oder heterocyclischer Rest bedeutet, wobei jeweils eine oder mehrere Doppelbindungen enthalten sind,
n 1, 2 oder 3 und
R jeweils unabhängig voneinander H, F, Cl, Br oder Alkyl bedeutet, wobei nebeneinanderstehende R gegebenenfalls einen ungesättigten mono- oder bicyclischen Rest bilden können.
Für den Auszug der Formel 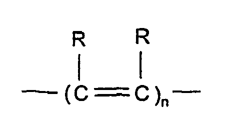 mit n=2 bedeutet das, dass sich ein Cyclopenten in der Verbindung befinden kann, wie beispielsweise 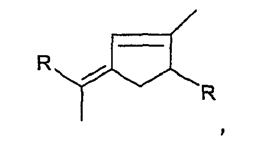 wobei das Cyclopenten gegebenenfalls weiter durch Z, wie zuvor beschrieben, substituiert sein kann.
Hemicyaninfarbstoffe, wie zuvor definiert, sind ausgeschlossen.
R bedeutet bevorzugt H.

Bevorzugte Kationen CAT⁺ aus der Gruppe der Styrylfarbstoffe sind: 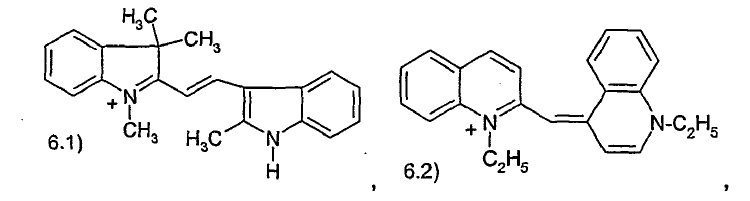 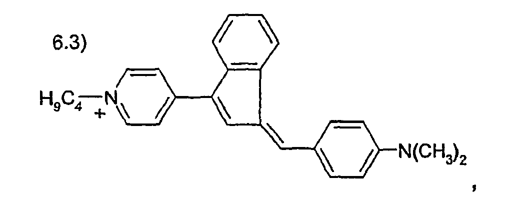 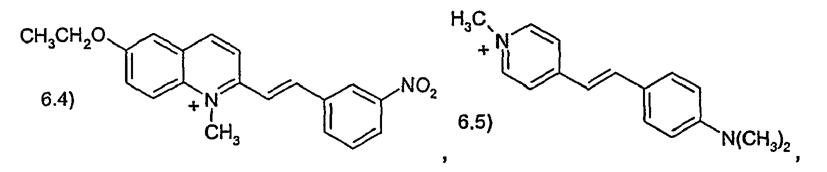 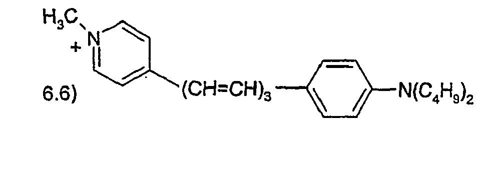 oder

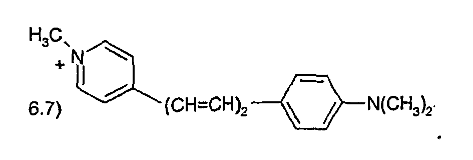

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines kationischen Azofarbstoffs ist.

Bevorzugte Kationen können durch die Formel VII

R'-N=N-R" VII

beschrieben werden,
worin R' und R" jeweils unabhängig voneinander Aryl oder Heteroaryl ist, wie zuvor definiert, und einer der beiden aromatischen Kerne positiv geladen ist.

Enthält das Farbstoffmolekül 2 Azogruppen, so entsteht ein Bisazofarbstoff, bei 3 Azogruppen ein Triazofarbstoff.
Diazahemicyaninfarbstoffe sind hierbei ausgeschlossen.
R' ist besonders bevorzugt durch N₂⁺-substituiertes Phenyl, wobei der Phenylring weiter durch Alkyl oder OAlkyl substituiert sein kann, Thiazolyl oder Phenazinyl.
R ist besonders bevorzugt Aryl oder Thienyl.

Besonders bevorzugte Kationen CAT⁺ aus der Gruppe der Azofarbstoffe sind: 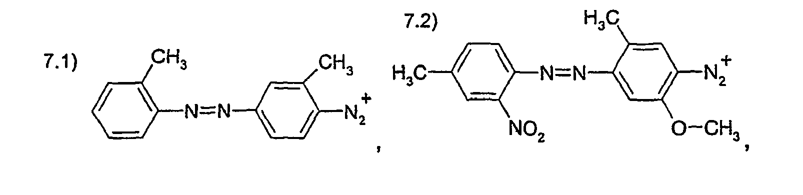 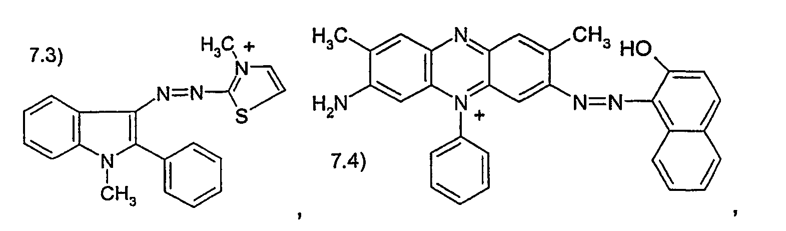 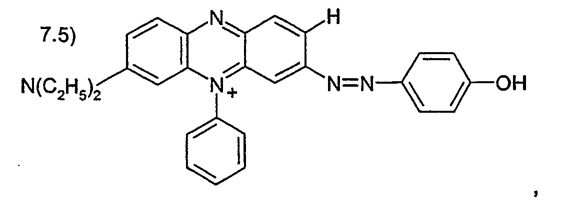 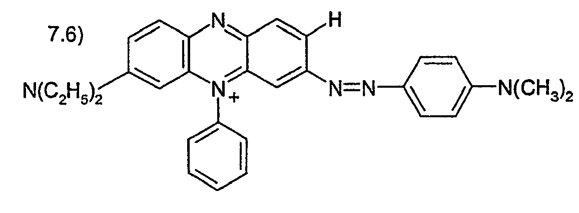 oder

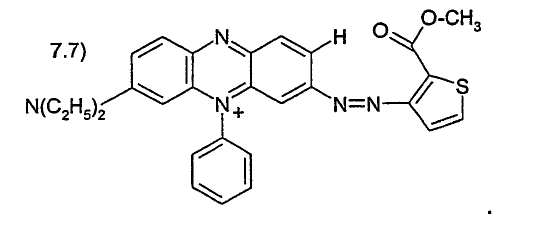

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Tetrazoliumfarbstoffs ist.

Bevorzugte Kationen können durch die Formel VIII 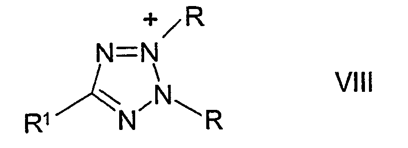 beschrieben werden,
R jeweils unabhängig voneinander Aryl oder Heteroaryl und
R¹ Wasserstoff, Alkyl, Cycloalkyl, Aryl, Heteroaryl, Alkyl-Aryl, Alkenyl, Cycloalkenyl, OH, SH, OAlkyl, SAlkyl, SO₂-Alkyl, SO₂-Aryl, COOH, COOAlkyl, COOAryl, C(O)-Aryl, C(O)-Alkyl, C(O)-Heteroaryl, C(O)NHAlkyl, C(O)NHAryl, C(O)N(Alkyl)(Aryl), C(O)N(Alkyl)₂, NH₂, NHAlkyl, N(Alkyl)₂, NHAryl, N=NOH, N=NOAlkyl, N=N-Aryl, NHCOAlkyl, NHCOAryl, NHSO₂Alkyl, NHSO₂Aryl, CN, F, Cl oder Br bedeutet.

Besonders bevorzugt ist R¹ Phenyl und R jeweils unabhängig voneinander Aryl oder Heteroaryl.
Nebenstehende Substituenten R oder R¹ können miteinander duch Einfach- oder Doppelbindungen verbunden sein.

Besonders bevorzugte Kationen CAT⁺ aus der Gruppe der Tetrazoliumfarbstoffe sind: 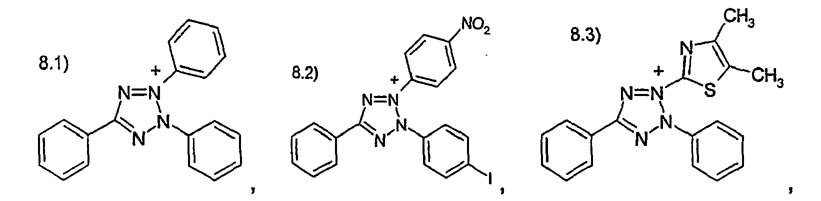 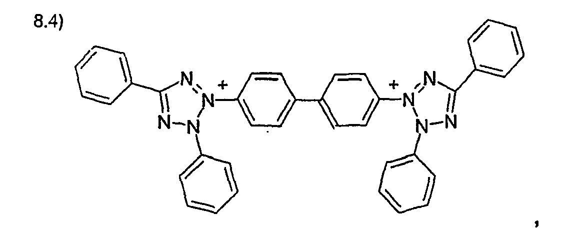 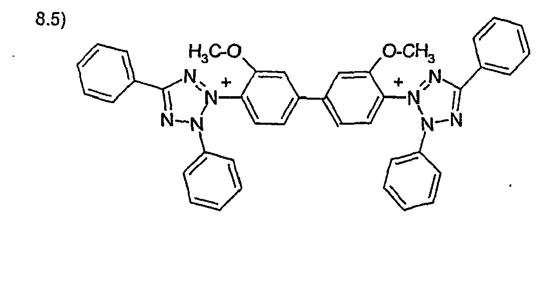 oder

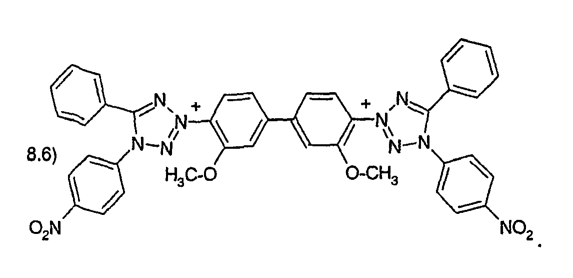

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Pyryliumfarbstoffs ist.

Bevorzugte Pyrylium-Kationen können durch die Formel IX 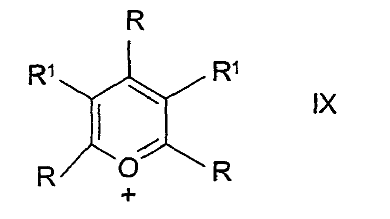 beschrieben werden, worin
R jeweils unabhängig voneinander H, Alkyl, Cycloalkyl, Aryl, Heteroaryl, OH, OAlkyl, NH₂, NHAlkyl, N(Alkyl)₂, COOH, COOAlkyl, Cl oder Br und
R¹ jeweils unabhängig voneinander H, Alkyl, Cycloalkyl, Aryl, Heteroaryl, Alkyl-Aryl, Alkenyl, OH, OAlkyl, COOAlkyl, COOAryl, OC(O)-Aryl, OC(O)-Alkyl, C(O)-H, CONH₂, C(O)NHAlkyl, C(O)NHAryl, C(O)Aryl, C(O)Alkyl, NHAlkyl, N(Alkyl)₂, NHCOAlkyl, NHCOCF₃, NHCOAryl, NHCOOAlkyl, NO₂, Cl oder Br bedeutet.
Besonders bevorzugt ist R Phenyl.
Nebenstehende Substituenten R oder R¹ können miteinander duch Einfach- oder Doppelbindungen verbunden sein.

Eine bevorzugte Gruppe von Kationen der Formel IX sind Kationen, wobei R und R¹ einen ankondensierten Phenylring bilden, sogenannte Benzopyryliumsalze der Formel X 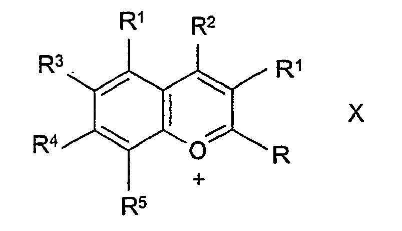 worin,
R Wasserstoff, Alkyl, Cycloalkyl, Aryl, Heteroaryl, OH, OAlkyl, NH₂, NHAlkyl, N(Alkyl)₂, COOH, COOAlkyl, Cl oder Br,
R¹ jeweils unabhängig voneinander H, Alkyl, Cycloalkyl, Aryl, Heteroaryl, OH, OAlkyl, NHAlkyl, N(Alkyl)₂, NHCOAryl, NHCOOAlkyl, Cl oder Br,
R² Wasserstoff, Alkyl, CH₂-Cl, Cycloalkyl, Aryl, Alkyl-Aryl, Heteroaryl, Alkenyl, Cycloalkenyl, Alkinyl, OH, OAlkyl, SAlkyl, COOAlkyl, COOAryl, C(O)H, C(O)Aryl, C(O)Alkyl, C(O)Alkenyl, NH₂, NHAlkyl, N(Alkyl)₂, NHAryl, Cl oder Br,
R³ Wasserstoff, Alkyl, Cycloalkyl, Aryl, Alkenyl, OH, OAlkyl, C(O)Alkyl, C(O)Alkenyl, CN, C(O)Aryl, OC(O)Alkyl, OC(O)Aryl, NHCOAlkyl, NHCOCF₃, NO₂, F, Cl, Br oder I,
R⁴ Wasserstoff, Alkyl, Cycloalkyl, Cycloalkenyl, Alkenyl, Aryl, OH, OAlkyl, NH₂, NHAlkyl, N(Alkyl)₂, NHAryl, OC(O)Alkyl, OC(O)Aryl, CN, NO₂, Cl, Br oder I und
R⁵ Wasserstoff, Alkyl, Cycloalkyl, Aryl, Alkyl-Aryl, NHCOAlkyl, NHCOCF₃, OH, OAlkyl, CN, NO₂, Cl oder Br
bedeuten.
In Formel X ist R besonders bevorzugt Aryl, R² besonders bevorzugt Alkyl und R¹, R³ bis R⁵ besonders bevorzugt H.
Nebenstehende Substituenten R, R¹, R², R³, R⁴ oder R⁵ können miteinander mittels Einfach- oder Doppelbindungen verbunden sein.

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Thiopyryliumfarbstoffs ist.

Bevorzugte Thiopyrylium-Kationen können durch die Formel XI 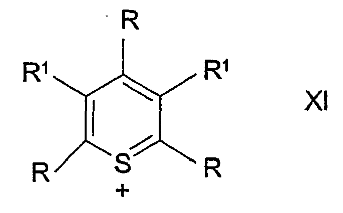 beschrieben werden, worin
R jeweils unabhängig voneinander H, Alkyl, Cycloalkyl, Aryl, Alkyl-Aryl, Alkenyl, Alkinyl, Heteroaryl, OH, OAlkyl, SAlkyl, SeAlkyl, NH₂, NHAlkyl, N(Alkyl)₂, NHAryl, N(Alkyl)(Aryl), N(Aryl)₂, C(O)Alkyl, C(O)Aryl, COOH, COOAlkyl, CONH₂, CONHAlkyl, CON(Alkyl)₂, CN, Cl oder Br und
R¹ jeweils unabhängig voneinander H, Alkyl, Cycloalkyl, Aryl, Heteroaryl, Alkyl-Aryl, Alkenyl, OH, OAlkyl, SAlkyl, COOH, COOAlkyl, COOAryl, OC(O)-Aryl, OC(O)-Alkyl, CONH₂, CONHAlkyl, CONHAryl, C(S)Alkyl, C(O)Aryl, C(O)Alkyl, NH₂, NHAlkyl, N(Alkyl)₂, NHAryl, CN, Cl, Br oder I bedeutet.
Besonders bevorzugt ist R jeweils unabhängig voneinander Phenyl oder Wasserstoff und R¹ Wasserstoff.
Nebenstehende Substituenten R oder R¹ können miteinander duch Einfach- oder Doppelbindungen verbunden sein.
Eine bevorzugte Gruppe von Kationen der Formel XI sind Kationen, wobei R und R¹ einen ankondensierten Phenylring bilden, sogenannte Benzothiopyryliumsalze der Formel XII 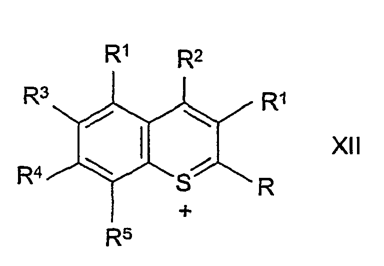 worin,
R Wasserstoff, Alkyl, Cycloalkyl, Aryl, Alkenyl, OAlkyl, SAlkyl, NH₂, NHAlkyl, NHHeteroaryl, N(Alkyl)₂, COOH, COOAlkyl, Cl, Br oder I,
R¹ jeweils unabhängig voneinander H, Alkyl, Cycloalkyl, Alkenyl, OH, OAlkyl, SAlkyl, NHAlkyl, N(Alkyl)₂, Cl oder Br,
R² Wasserstoff, Alkyl, CH₂-Cl, Cycloalkyl, Aryl, Alkyl-Aryl, Heteroaryl, Alkenyl, Cycloalkenyl, OH, OAlkyl, SAlkyl, COOH, COOAlkyl, COOAryl, OC(O)Alkyl, NH₂, NHAlkyl, N(Alkyl)₂, NHAryl, CN, F, Cl oder Br,
R³ Wasserstoff, Alkyl, Cycloalkyl, OH, OAlkyl, CN, NO₂, F, Cl, Br oder I,
R⁴ Wasserstoff, Alkyl, Cycloalkyl, OAlkyl, NH₂, NHAlkyl, N(Alkyl)₂, CN, F, Cl, Br oder I und
R⁵ Wasserstoff, Alkyl, Cycloalkyl, OH, OAlkyl, CN, F, Cl oder Br bedeuten.
Nebenstehende Substituenten R, R¹, R², R³, R⁴ oder R⁵ können miteinander mittels Einfach- oder Doppelbindungen verbunden sein.
In Formel XII ist R besonders bevorzugt Aryl.

Besonders bevorzugte Kationen CAT⁺ aus der Gruppe der Pyrylium-Benzopyrylium- und Thiopyryliumfarbstoffe sind:

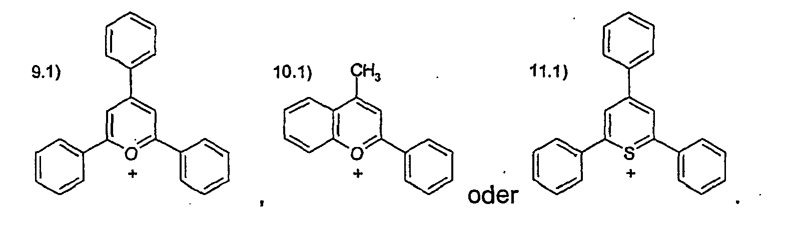

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Thiazinfarbstoffs ist.

Bevorzugte Kationen können durch die Formel XIII 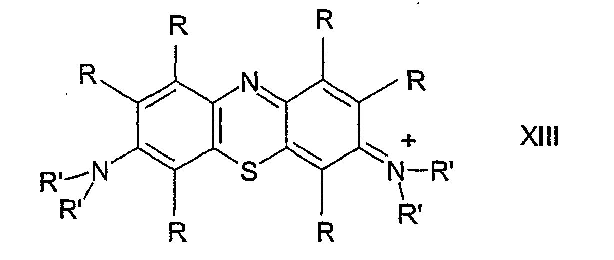 beschrieben werden, wobei
R jeweils unabhängig voneinander H, Alkyl, OAlkyl oder NO₂, und
R' jeweils unabhängig voneinander H, Alkyl, teilweise durch Hydroxy substituiertes Alkyl, teilweise durch Br oder COOH substituiertes Alkyl, C(O)Alkyl, COOH oder COOAlkyl
bedeutet.
R ist besonders bevorzugt H oder Alkyl. R' ist besonders bevorzugt H oder Alkyl.

Besonders bevorzugte Kationen CAT⁺ aus der Gruppe der Thiazinfarbstoffe sind: 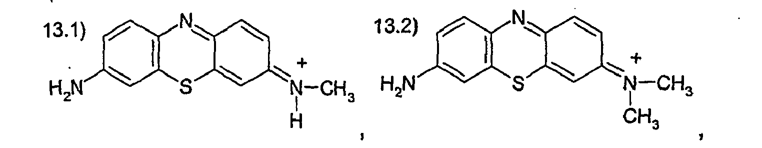 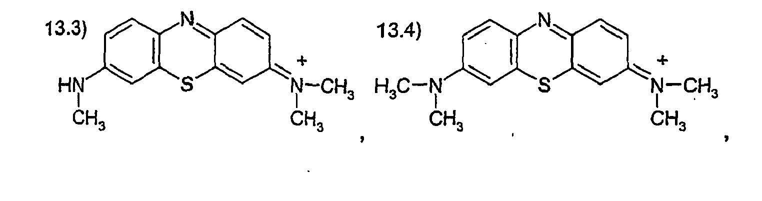 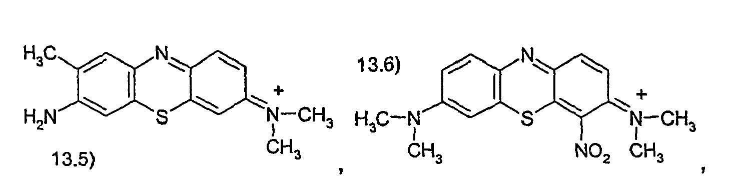 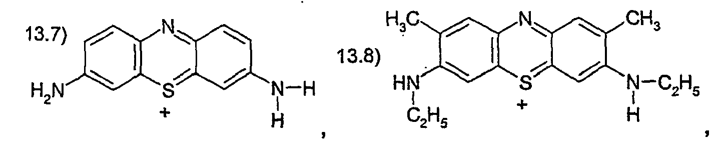 oder

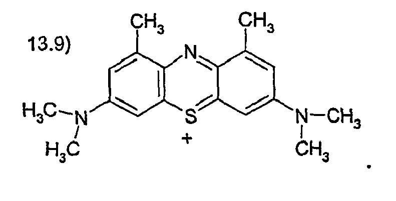

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Oxazinfarbstoffs ist.

Bevorzugte Kationen können durch die Formel XIV 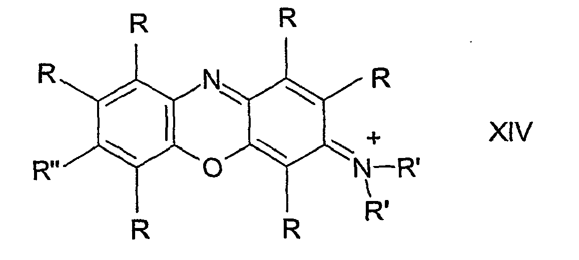 beschrieben werden, worin
R jeweils unabhängig voneinander H, Alkyl, Alkenyl, OH, OAlkyl, COOH, COOAlkyl, CONH₂, CONHAlkyl, CON(Alkyl)₂, NH₂, NHAlkyl oder N(Alkyl)₂, R' jeweils unabhängig voneinander H, Alkyl oder teilweise durch CONH₂, CONHAlkyl, C(O)N(Alkyl)₂, COOH oder COOHeteroaryl substituiertes Alkyl und
R" Wasserstoff, Alkyl, NH₂, NHAlkyl, N(Alkyl)₂, NHAryl, NHHeteroaryl, SAryl, SO₂-Aryl, S-C(O)-Alkyl, SC(N)NH₂, oder teilweise durch CONH₂, CONHAlkyl, CON(Alkyl)₂, COOH oder COOHeteroaryl substituiertes Alkyl bedeutet.
R ist besonders bevorzugt H, Alkyl, OH oder COOH, wobei nebeneinanderstehende Substituenten R auch gemeinsam einen ankondensierten Phenylring bilden können. R' ist besonders bevorzugt H oder Alkyl. R" ist bevorzugt H, NH₂, NHAlkyl, N(Alkyl)₂ oder OH.

Besonders bevorzugte Kationen CAT⁺ aus der Gruppe der Oxazinfarbstoffe sind: 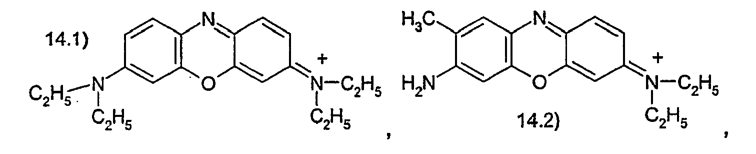 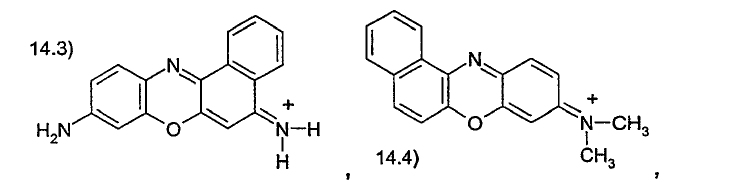 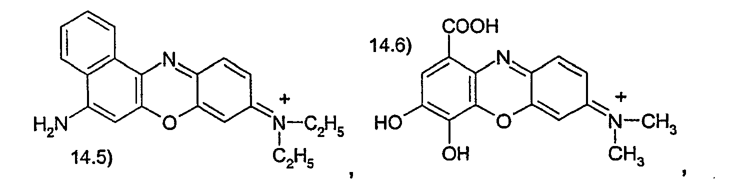 oder

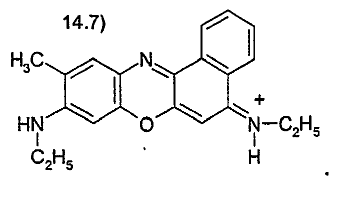

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Triarylmethanfarbstoffs ist.

Bevorzugte Kationen können durch die Formel XV 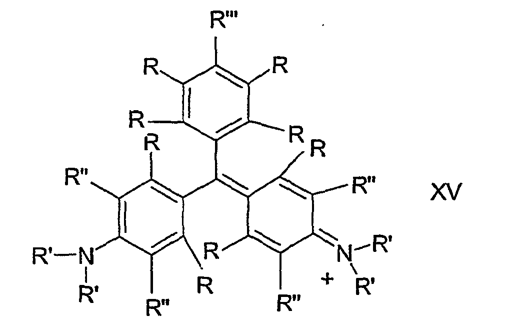 beschrieben werden, worin
R jeweils unabhängig voneinander H, Alkyl, COOH, Cl oder F,
R' jeweils unabhängig voneinander H, Alkyl, teilweise durch OH substituiertes Alkyl, Alkenyl, Alkinyl, Aryl oder C(O)Alkyl,
R" jeweils unabhängig voneinander H, Alkyl, Aryl, NH₂, NHAlkyl, N(Alkyl)₂, NHAryl, N(Alkyl)(Aryl), OH, OAlkyl, COOH, COOAlkyl, SO₂-Alkyl, CN, NO₂, F, Cl, Br oder I und
R'" Wasserstoff, Alkyl, Aryl, Heteroaryl, NH₂, NHAlkyl, N(Alkyl)₂, NHAryl, N(Alkyl)(Aryl), OH, OAlkyl, COOH, COOAlkyl, COO-Heteroaryl, CONHAlkyl, SO₂-Alkyl, SO₂H, SO₃H, SO₃Alkyl, CN, NO₂, F, Cl, Br, I, N₃ oder NCS
bedeutet.
R ist besonders bevorzugt H oder Alkyl, wobei nebeneinanderstehende Substituenten R und R" auch gemeinsam einen ankondensierten Phenylring bilden können. R' ist besonders bevorzugt H oder Alkyl.

Besonders bevorzugte Kationen CAT⁺ aus der Gruppe der Triarylmethanfarbstoffe sind:

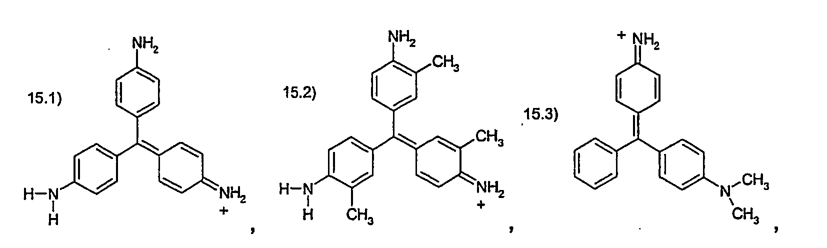

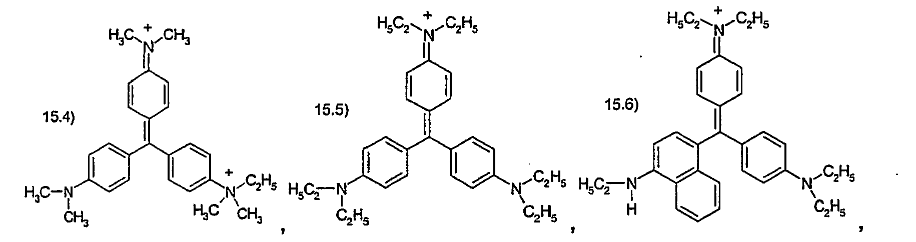

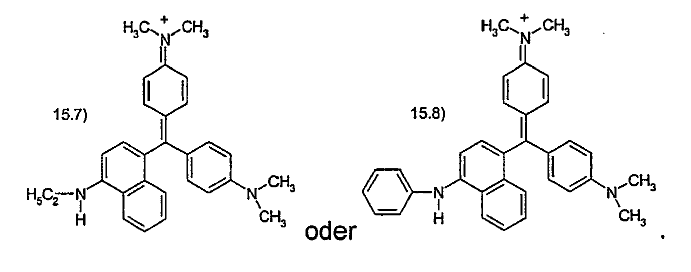

Weitere bevorzugte Kationen von Triarylmethanfarbstoffen sind 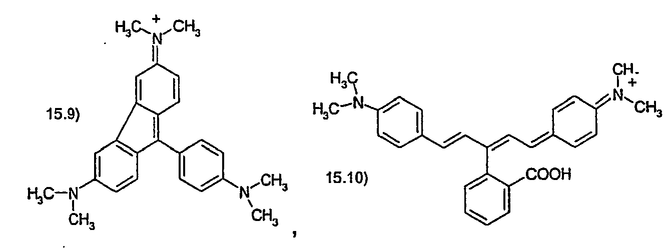 oder

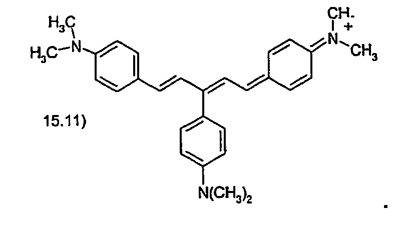

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Diarylmethanfarbstoffs ist.

Bevorzugte Kationen können durch die Formel XVI 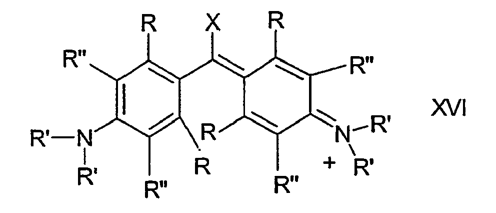 beschrieben werden, worin
R jeweils unabhängig voneinander H, Alkyl oder COOH,
R' jeweils unabhängig voneinander H, Alkyl, teilweise durch OH substituiertes Alkyl, Alkyl-Aryl oder Aryl,
R" jeweils unabhängig voneinander H, Alkyl, Aryl, NH₂, NHAlkyl, N(Alkyl)₂, NHAryl, N(Alkyl)(Aryl), OH, OAlkyl, COOH, CN, F, Cl oder Br und X Wasserstoff, Alkyl, Alkenyl, Heteroaryl, SAlkyl, OH, OAlkyl, CN, F, Cl oder Br
bedeutet.
R ist besonders bevorzugt H. R' ist besonders bevorzugt Alkyl. R" ist besonders bevorzugt H.
X ist besonders bevorzugt H oder Alkenyl, wobei die Alkenylkette das Bindeglied zu einem zweiten Diarylmethanfarbstoff darstellen kann.

Besonders bevorzugte Kationen CAT⁺ aus der Gruppe der Diarylmethanfarbstoffe sind:

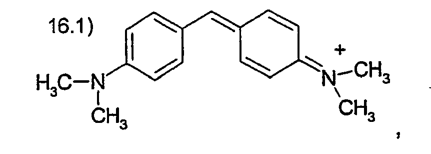

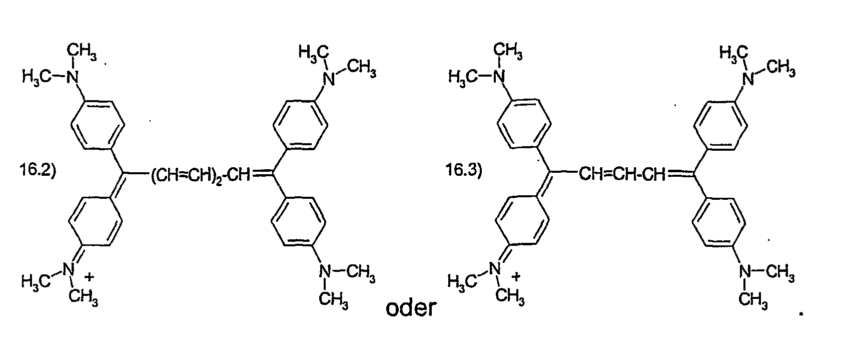

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Acridinfarbstoffs ist.

Bevorzugte Kationen können durch die Formel XVII 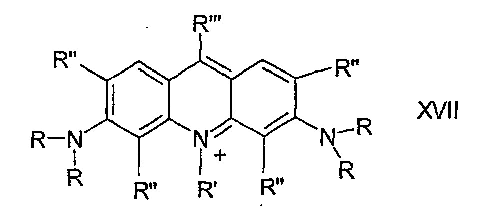 beschrieben werden, worin
R jeweils unabhängig voneinander H, Alkyl, Alkyl-Aryl, C(O)CH₂Cl oder C(O)Alkyl bedeutet,
NRR in Formel XVII auch N=N-Aryl bedeuten kann,
R' jeweils unabhängig voneinander H, Alkyl, Alkenyl, Alkinyl, Aryl, Heteroaryl, Alkyl-Aryl oder teilweise durch COOH oder CONHAryl substituiertes Alkyl,
R" jeweils unabhängig voneinander H, Alkyl, Aryl, Alkyl-Aryl, NHCOAlkyl oder NHCOAryl und
R'" Wasserstoff, Alkyl, Alkyl-Aryl, Aryl, Heteroaryl, SAlkyl, oder CN bedeutet.
R ist besonders bevorzugt H oder Alkyl. R' ist besonders bevorzugt H oder Alkyl. R" ist besonders bevorzugt H.
R"' ist besonders bevorzugt H.

Besonders bevorzugte Kationen CAT⁺ aus der Gruppe der Acridinfarbstoffe sind:

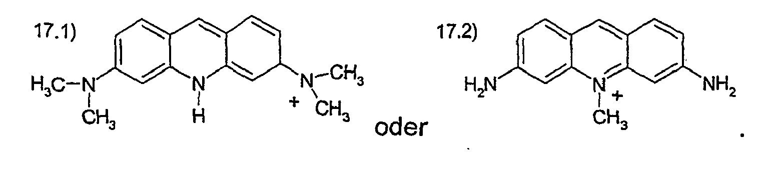

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Chinolinfarbstoffs ist.

Bevorzugte Kationen können durch die Formel XVIII 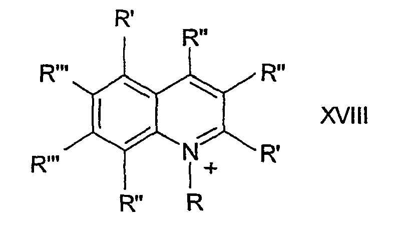 beschrieben werden, worin
R jeweils unabhängig voneinander Alkyl, Alkenyl, Aryl, Alkyl-Aryl, CH₂COOH oder CH₂COAlkyl,
R' jeweils unabhängig voneinander H, Alkyl, Alkenyl, teilweise durch Heteroaryl substituiertes Alkenyl, Alkinyl, Aryl, Heteroaryl oder Alkyl-Aryl, R" jeweils unabhängig voneinander H, Alkyl, Alkenyl, teilweise durch Heteroaryl substituiertes Alkenyl, Aryl, Alkyl-Aryl, OH, OAlkyl, SAlkyl, NH₂, NHAlkyl, NHAryl, COOH, COOAlkyl, F, Cl, Br oder I und
R'" Wasserstoff, Alkyl, OAlkyl, CN oder NO₂
bedeutet.
Nebenstehende Substituenten R, R', R" oder R'" können miteinander mittels Einfach- oder Doppelbindung verbunden sein.
Nebenstehende Substituenten R und R" in Position 3 und 4 des Chinolingerüsts bilden bevorzugt einen Phenylring, der gegebenenfalls durch R, R' oder R" substituiert sein kann.

Besonders bevorzugte Kationen CAT⁺ aus der Gruppe der Chinolinfarbstoffe sind: 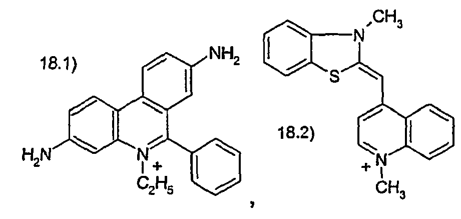 oder

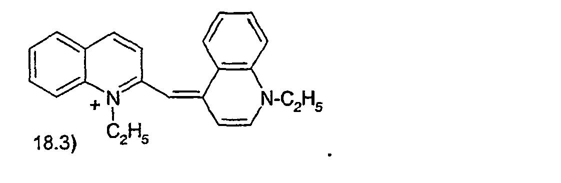

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines Iso-Chinolinfarbstoffs ist.

Bevorzugte Kationen können durch die Formel XIX 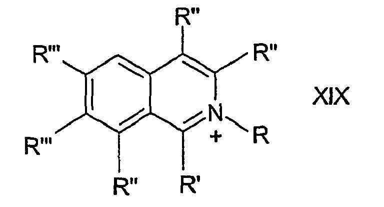 beschrieben werden, worin
R jeweils unabhängig voneinander Alkyl, Alkenyl oder CH₂COAlkyl,
R' jeweils unabhängig voneinander H, Alkyl, Alkenyl, Alkinyl, Aryl, Heteroaryl oder Alkyl-Aryl,
R" jeweils unabhängig voneinander H, Alkyl, Alkenyl, OAlkyl, NH₂ oder NHAlkyl und
R"' Wasserstoff, Alkyl, OAlkyl, NH₂, NHCO-Alkenyl, CN oder NO₂ bedeutet.
Nebenstehende Substituenten R und R" in Position 3 und 4 des lso-Chinolingerüsts bilden bevorzugt einen Phenylring, der gegebenenfalls durch R, R' oder R" substituiert sein kann.
R bedeutet bevorzugt Alkyl. R' bedeutet bevorzugt H oder Aryl. R" bedeutet bevorzugt H oder OAlkyl. R'" bedeutet bevorzugt NH₂, OAlkyl oder NHCO-Alkenyl.

Besonders bevorzugte Kationen CAT⁺ aus der Gruppe der Iso-Chinolinfarbstoffe sind:

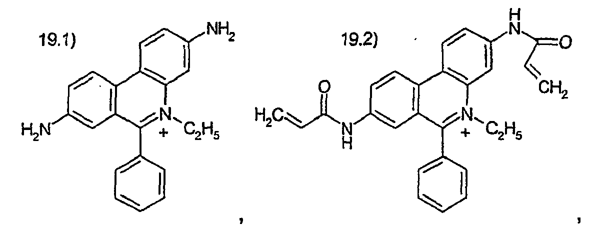

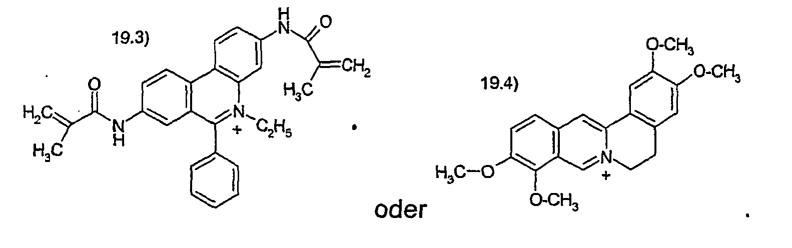

Erfindungsgemäß ist eine Gruppe von Verbindungen der Formel I bevorzugt, wobei Y⁻ jeweils eine der bei Formel I angegebenen oder bevorzugt beschriebenen Bedeutungen hat und worin CAT⁺ ein Kation eines quarternierten Azafluorenonfarbstoffs ist.

Bevorzugte Kationen können durch die Formel XX 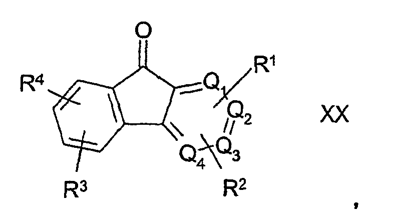 beschrieben werden, wobei
R¹, R², R³ und R⁴ jeweils unabhängig voneinander Wasserstoff, F, Cl, Br, Alkyl, OAlkyl, Hydroxyalkoxy mit 1-4 C-Atomen, OH, NO₂, NH₂, NHAlkyl, NAlkyl₂ oder COAlkyl bedeuten, wobei auch zwei Reste gemeinsam einen ankondensierten aromatischen Ring bilden können und
Q₁, Q₂, Q₃ und Q₄ in der Summe drei Kohlenstoffatome und ein quartäres Stickstoffatom, das den Rest R⁵ mit der Bedeutung von Alkyl, Hydroxyalkyl mit 1-4 C-Atomen, COOAlkyl, SAlkyl, Aryl, Aryl-Alkyl oder Heteroaryl trägt, welches auch ein N-Oxid ausbilden kann.
Bevorzugt sind R¹-R⁴ Wasserstoff. R⁵ ist bevorzugt Alkyl, Arylalkyl oder Alkyl-Aryl.

Besonders bevorzugte Kationen CAT⁺ aus der Gruppe der quarternären Azafluorenonfarbstoffe sind:

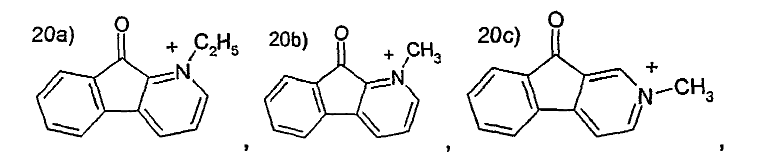

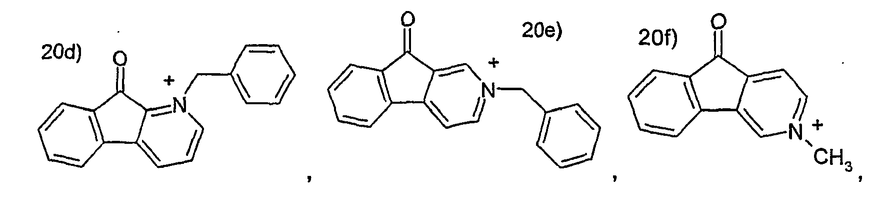

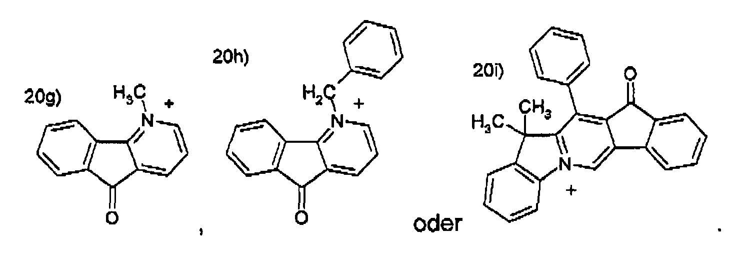

Erfindungsgemäß ist eine Gruppe von Verbindungen der Formel I bevorzugt, wobei CAT⁺ jeweils eine der bei Formel I oder den Formeln III bis XX angegebenen oder bevorzugt beschriebenen Bedeutungen hat und worin Y⁻ ein Fluoralkylphosphat der Formel 11-2 ist, wie zuvor beschrieben.

Überraschend wurde gefunden, dass die erfindungsgemäßen kationischen Farbstoffe besonders stabil sind. Ihre elektrochemische, thermische und Hydrolysestabilität ist deutlich höher, als die herkömmlicher kationischer Farbstoffe mit Cl⁻-, Tosylat- oder Hexafluorophosphat-Anionen.

Weiterhin zeigen die erfindungsgemäßen Farbstoffe eine verbesserte Löslichkeit in organischen Lösungsmitteln. Herkömmliche Farbstoffe wie Rhodamin B, Janusgrün oder Nilblau sind beispielsweise in Benzol unlöslich. Die erfindungsgemäßen kationischen Farbstoffe mit FAP-Anion wie Safranin-FAP oder Nilblau-FAP, sind dagegen in Benzol löslich.

Herkömmliches Nilblau mit Hydrogensulfat als Anion ist in Dimethylcarbonat unlöslich, das erfindungsgemäße, Nilblau-FAP, ist dagegen gut oder sehr gut löslich.

Die erfindungsgemäßen kationischen Farbstoffe sind daher in Systemen auf Lösungsmittelbasis anwendbar.

Aufgrund der verbesserten Stabilität der erfindungsgemäßen kationischen Farbstoffe eignen sich diese für eine Vielzahl von Anwendungen. Gegenstand der Erfindung ist damit auch die Verwendung der erfindungsgemäßen kationischen Farbstoffe , gegebenenfalls zusammen mit Hilfsstoffen, zum Färben von Kunststoffen, Kunststofffasern, Holz, Metallen, Textilien, Pelzen, keramischen Materialien, Gläsern, Folien, im Agrarbereich z.B. bei der Saatguteinfärbung, zur Herstellung von Flexodruckfarben, als Kugelschreiberpasten, als Stempelfarbe und zum Färben von Leder und Papier, in kosmetischen Formulierungen, in der Farbindustrie, in der Biochemie, der Biologie, der Medizin, der Analytik und der Elektronik, in der Mikroskopie und Histochemie z.B. zum Anfärben von Geweben und Bakterien, als Wamfarbe bei giftigen Stoffen z.B. in Treibstoffen oder Reinigungsmitteln, als Sensibilisatoren in der optischen und Elektrophotographie, in Tierpflegeprodukten, in Chromatographiematerialien, in Lacken und Beschichtungen, Farben, Druckfarben, im Sicherheitsdruck, kosmetischen Formulierungen, Kontaktlinsen, in Pharmazeutika sowie für die Herstellung von Farbpräparationen wie beispielsweise Pearlets, Pasten und Anteigungen sowie von Trockenpräparaten, wie z.B. Pellets, Granulaten, Chips usw., die vorzugsweise in Druckfarben und Lacken verwendet werden. Bei Einsatz der kationischen Farbstoffe in Lacken und Farben sind alle dem Fachmann bekannten Anwendungsbereiche möglich, wie z.B. Pulverlacke, Automobillacke, Druckfarben für den Tief-, Offset-, Sieb- oder Flexodruck sowie für Lacke in Innen- und Außenanwendungen. Spezielle Anwendungsfelder sind zudem in Datenerfassungssystemen, die Reprographie, in Mikrofarbfiltern, in der Photogalvanik, der Lasertechnik und der Photoindustrie (High technology applicatioin of organic colorants, P. Gregory, Plenum Press, N.Y. 1991). Für die erfindungsgemäßen kationischen Farbstoffe gibt es außerdem Anwendungsfelder wie CD-Recorder (CD-R), DVD-Recorder (DVD+R, DVD+RW), Bluray-Disc (BD-ROM, BD-R, BD-RE), Computer to Plate (CTP), Laser Filter, Laser Marking und Photopolymerisation.

Darüber hinaus können die erfindungsgemäßen kationischen Farbstoffe auch in vorteilhafter Weise mit allen bekannten Pigmenten und anorganischen Farbmitteln gemischt werden.

Die erfindungsgemäßen kationischen Farbstoffe können mit geeigneten, dem Fachmann bekannten Zusatzstoffen der jeweiligen Anwendung zugeführt werden. Zum Färben von Geweben, Gewirken und Gestricken werden Farbstoffe in Suspensionen mit Zusätzen wie Färbereihilfsmitteln (Farbstofflösungs-, -dispergier-, -fixier- und -reduktionsmittel, Netzmittel, Färbebeschleuniger usw.), Salzen, Alkalien oder Säuren verwendet.

Gegenstand der vorliegenden Erfindung ist zudem ein Verfahren zur Herstellung der erfindungsgemäßen kationischen Farbstoffe. Hierbei werden Verbindungen der allgemeinen Formel XXI

CAT⁺A⁻ (XXI)

wobei CAT⁺ die bei Formel I angegebene Bedeutung hat oder einer der Formeln III bis XX entspricht
und A⁻ Cl⁻, Br⁻, I⁻, BF₄⁻, PF₆⁻, CIO₄⁻, Sulfat, Tosylat, Hydrosulfat, Triflat, Trifluoracetat, Acetat oder Oxalat bedeutet,
mit einer Verbindung der allgemeinen Formel XXII

E⁺Y⁻ (XXII)

umgesetzt, wobei Y⁻ die bei Formel I, II-2 angegebene oder eine bevorzugte Bedeutung hat und
E⁺ ein Kation der Alkali-, Erdalkalimetalle oder eines Metalls der Gruppe 11 und 12 ist.
Die Umsetzung, die auch als Umsalzung bezeichnet werden kann, erfolgt in organischen Lösungsmitteln, vorzugsweise in wässrigen Lösungen bei Temperaturen von 0° bis 100°C. vorzugsweise bei 10° bis 40°C, besonders bevorzugt bei Raumtemperatur. E⁺ kann aber auch die Bedeutung Ammonium, Alkylammonium mit C₁-C₄-Alkyl, Phosphonium, Alkylphosphonium mit C₁-C₄-Alkyl, Imidazolium, Guanidinium, Uronium, Thiouronium, Pyridinium, Pyrrolidinium oder andere heterocyclische Kationen haben, wobei dann die Umsetzung in Wasser oder in organischen Lösungsmitteln erfolgt, die mit Wasser mischbar sind, beispielsweise Dimethoxyethan, Acetonitril, Aceton, Tetrahydrofuran, Dimethylformamid, Dimethylsulfoxid, Dioxan, Propionitril, Benzonitril, Methanol, Ethanol oder Isopropanol.
E⁺ ist bevorzugt ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium. Unter Alkylammonium mit C₁-C₄-Alkyl ist sowohl ein mit Alkylgruppen mit 1-4 C-Atomen monosubstitiertes, als auch di-, tri- oder tetrasubstituiertes Ammonium zu verstehen. Unter Alkylphosphonium mit C₁-C₄-Alkyl ist sowohl ein mit Alkylgruppen mit 1-4 C-Atomen monosubstitiertes, als auch di-, tri- oder tetrasubstituiertes Phosphonium zu verstehen. E⁺ ist ganz besonders bevorzugt ein Alkalimetallkation, beispielsweise Li⁺ oder K⁺.

Gegenstand der Erfindung ist auch ein Verfahren zur Herstellung von Carbocyaninfarbstoffen der Formel XXIII 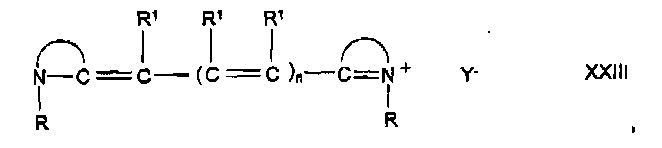 wobei,
n 0, 1, 2, 3, 4 oder 5,
R jeweils unabhängig voneinander Alkyl, Alkenyl, Cycloalkyl, Aryl oder Heteroaryl und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHCOAlkyl oder NHCOAryl bedeutet und
das Ringsystem, dargestellt durch 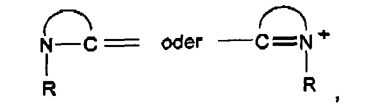 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann und
wobei Y⁻
ein FAP⁻-Anion der allgmeinen Formel (II-2)

[P(Cₚ₂F₂ₚ₂₊₁₋ₘ₂Hₘ₂)_{y2}F_{6-y2}]⁻ (II-2)

ist, mit
- p2:: 1 bis 20,
- m2:: 0, 1, 2 oder 3 und
- y2:: 1, 2, 3 oder 4,
dadurch gekennzeichnet, dass eine Verbindung der Formel XXIV 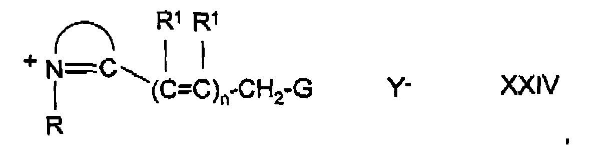 verwendet wird, wobei das Ringsystem und Y⁻ eine der bei Formel XXIII angegebenen Bedeutungen haben und
n 0, 1, 2, 3 oder 4,
R¹ Wasserstoff, Alkyl, Alkenyl, Aryl, Heteroaryl, SAryl, SAlkyl, OAlkyl, CON(Alkyl)₂, OAryl, N(Alkyl)₂, NH(Aryl), N(Alkyl)(Aryl), OC(O)Aryl, OH, CN, Cl, F, Alkyl-Aryl, C(O)Alkyl, CONH₂ oder COOAlkyl,
G Wasserstoff, Alkyl, Alkenyl, Aryl, Heteroaryl, N=C(R)₂, CONHAryl, C(O)Aryl oder CONHAlkyl und
R Alkyl, Alkenyl, Cycloalkyl, Aryl oder Heteroaryl bedeutet.

Die Synthese der Carbocyaninfarbstoffe der Formel XXIII mit Edukten der Formel XXIV, wie zuvor beschrieben, kann nach Methoden durchgeführt werden, die dem Fachmann bekannt sind, insbesondere nach den Vorschriften aus
T.V.S. Rao, J. B. Huff, C. Bieniarz, Tetrahedron 54 (1998), 10627-10634, L.G.S. Brooker, F.L. White, G.H. Keyes, C.P. Smyth and P.F. Oesper, J. Am. Chem. Soc, 63, (1941), 3192-3203 oder F.M. Hamer and R.J. Rathbone, J. Chem. Soc, (1945), 595-600.

Gegenstand der Erfindung sind auch Verbindungen der Formel XXIV. Insbesondere Verbindungen der Formel XXIV, bei denen G Wasserstoff bedeutet.
Bevorzugte Verbindungen der Formel XXIV sind die folgenden Verbindungen, wobei Y⁻ eine bei Formel I oder der Formel II-2 oder eine bevorzugte Bedeutung hat:

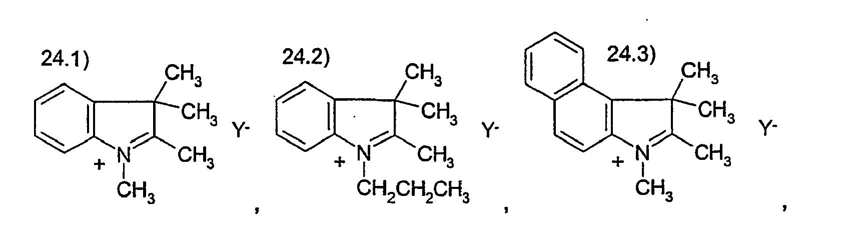

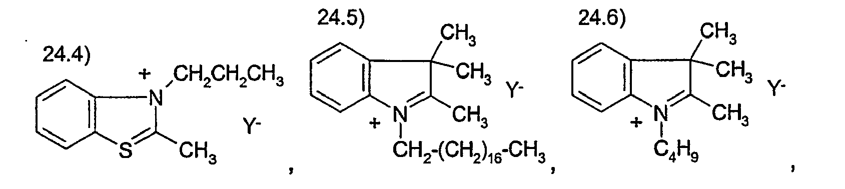

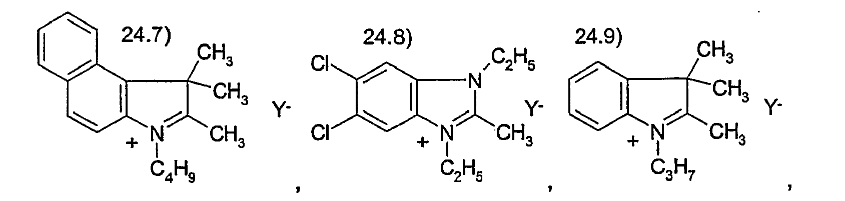

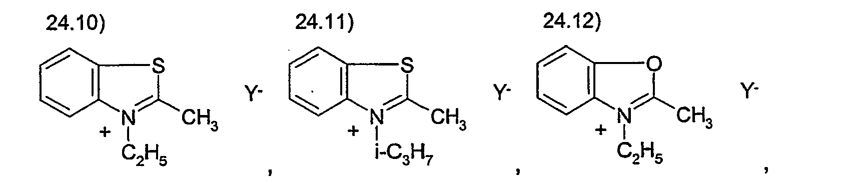

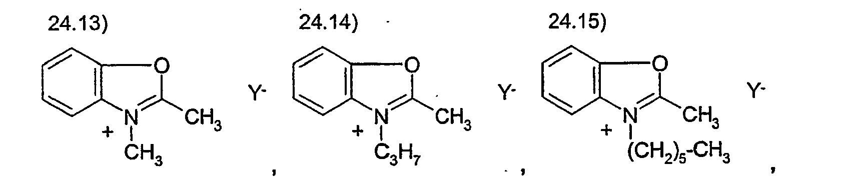

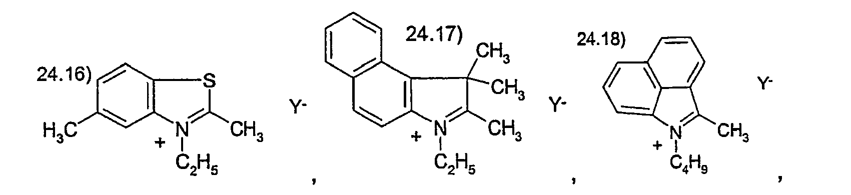

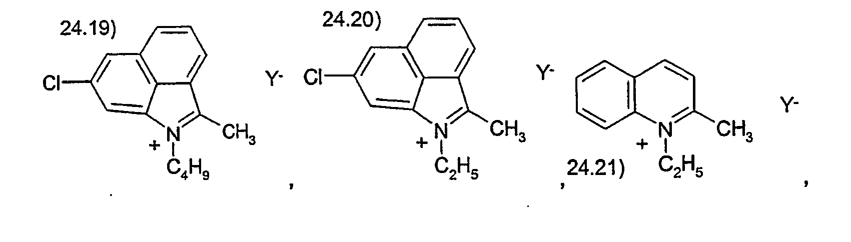

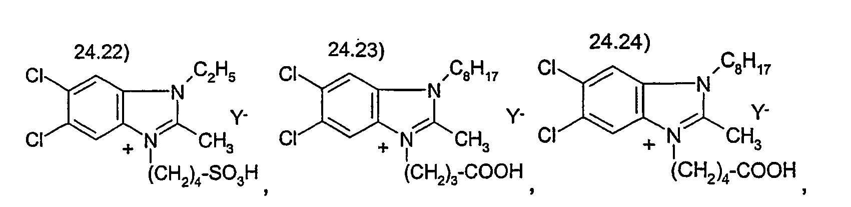

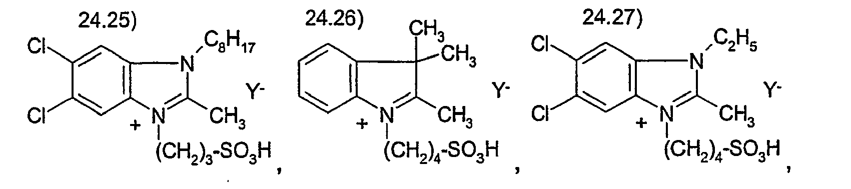

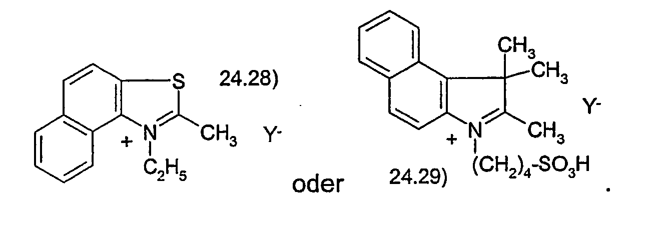

Gegenstand der Erfindung ist weiterhin ein Verfahren zur Herstellung der Verbindungen der Formel XXIV, wie zuvor definiert, dadurch gekennzeichnet, dass
eine Verbindung der Formel XXV 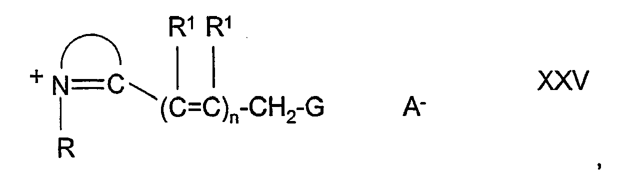 worin
A⁻ Cl⁻, Br⁻, I⁻, BF₄⁻, PF₆⁻, ClO₄⁻, Sulfat, Tosylat, Hydrosulfat, Triflat, Trifluoracetat, Acetat oder Oxalat bedeutet,
das Ringsystem, dargestellt durch 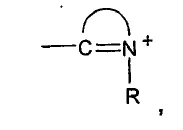 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann,
n 0, 1, 2, 3 oder 4,
R¹ Wasserstoff, Alkyl, Alkenyl, Aryl, Heteroaryl, SAryl, SAlkyl, OAlkyl, CON(Alkyl)₂, OAryl, N(Alkyl)₂, NH(Aryl), N(Alkyl)(Aryl), OC(O)Aryl, OH, CN, Cl, F, Alkyl-Aryl, C(O)Alkyl, CONH₂ oder COOAlkyl,
R Alkyl, Alkenyl, Cycloalkyl, Aryl oder Heteroaryl und
G Wasserstoff, Alkyl, Alkenyl, Aryl, Heteroaryl, N=C(R)₂, CONHAryl, C(O)Aryl oder CONHAlkyl bedeutet,
mit einer Verbindung der Formel XXVI

E⁺ Y⁻ XXVI,

umgesetzt wird, worin
Y⁻ die bei Formel I oder der Formel II-2 angegebene oder eine bevorzugte Bedeutung hat und
E⁺ ein Kation der Alkali-, Erdalkalimetalle oder eines Metalls der Gruppe 11 oder 12 ist.

Die Umsetzung, die auch als Umsalzung bezeichnet werden kann, erfolgt vorzugsweise in wässerigen Lösungen bei Temperaturen von 0° bis 100°C. vorzugsweise bei 10° bis 40°C. besonders bevorzugt bei Raumtemperatur. E⁺ kann aber auch die Bedeutung Ammonium, Alkylammonium mit C₁-C₄-Alkyl, Phosphonium, Alkylphosphonium mit C₁-C₄-Alkyl, Imidazolium, Guanidinium, Uronium, Thiouronium, Pyridinium, Pyrrolidinium oder andere heterocyclische Kationen haben, wobei dann die Umsetzung vorzugsweise in organischen Lösungsmitteln erfolgt, beispielsweise in Alkoholen.
E⁺ ist bevorzugt ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium. E⁺ ist ganz besonders bevorzugt ein Alkalimetallkation, beispielsweise Li⁺ oder K⁺.

Gegenstand der Erfindung ist weiterhin ein alternatives Verfahren zur Herstellung der Verbindungen der Formel XXIV, mit der Einschränkung, dass n in Formel XXIV 0 bedeutet, dadurch gekennzeichnet, dass eine Verbindung der Formel XXVII 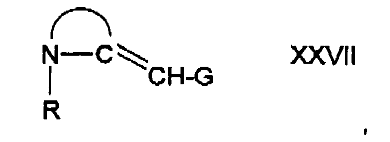 worin
G Wasserstoff, Alkyl, Alkenyl, Aryl, Heteroaryl, N=C(R)₂, CONHAryl, C(O)Aryl oder CONHAlkyl und
R Alkyl, Alkenyl, Cycloalkyl, Aryl oder Heteroaryl bedeutet
und das Ringsystem, dargestellt durch 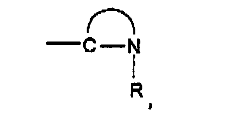 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z, wie zuvor beschrieben, substituiert sein kann,
mit HY umgesetzt wird, wobei
Y⁻ die bei der Formel II-2 angegebene oder eine bevorzugte Bedeutung hat.

Die Herstellung von HFAP ist bispielsweise in WO 03/02579 beschrieben. Die Herstellung von HFAB ist beispielsweise in R.D. Chambers et al, J. Am. Chem. Soc. 82, (1960), 5298 beschrieben.
Die Umsetzung mit HY, mit Y wie bei der Formel II-2 definiert, erfolgt vorzugsweise in einem organischen Lösungsmittel bei Temperaturen von -30° bis 40°C, vorzugsweise bei -0° bis 25°C, besonders bevorzugt bei Raumtemperatur. Ein bevorzugtes Lösungsmittel ist Ethanol.

Gegenstand der Erfindung ist auch ein Verfahren zur Herstellung von Azofarbstoffen mit der Formel XXVIII

(R'-N=N-R")⁺ Y⁻ XXVIII,

wobei
R' und R" Aryl oder Heteroaryl bedeuten und einer der beiden aromatischen Kerne positiv geladen ist und Y⁻ eine der bei Formel I oder der Formel II-2 angegebenen Bedeutungen hat,
**dadurch gekennzeichnet, dass** eine Verbindung der Formel XXIX

R¹-N₂⁺ Y⁻ XXIX

wobei R' und Y⁻ eine der bei Formel XXVIII angegebene Bedeutung hat, mit der aromatischen cyclischen oder heterocyclischen Verbindung R" umgesetzt wird.

Die Umsetzung erfolgt bei Reaktionsbedingungen, die typisch sind für Azokupplungen und die dem Fachmann hinlänglich bekannt sind, beispielsweise aus Beyer Walter, Lehrbuch der Organischen Chemie, 21. Auflage, S. Hirzel Verlag Stuttgart 1988.

Gegenstand der Erfindung sind auch Verbindungen der Formel XXIX. Bevorzugte Verbindungen der Formel XXIX sind die folgenden Verbindungen, wobei Y⁻ eine bei Formel I, der Formel II-2 angegebene oder eine bevorzugte Bedeutung hat:

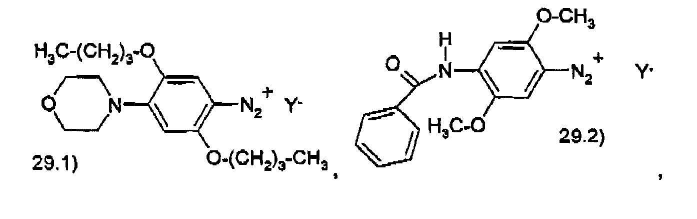

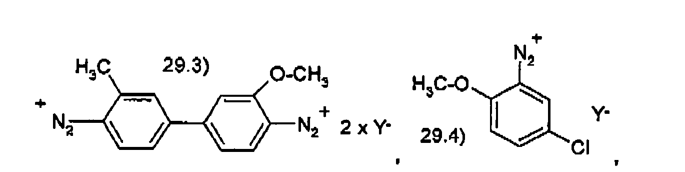

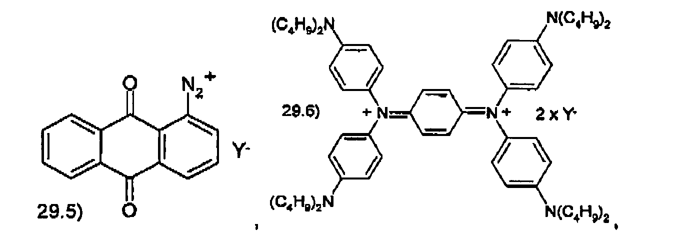

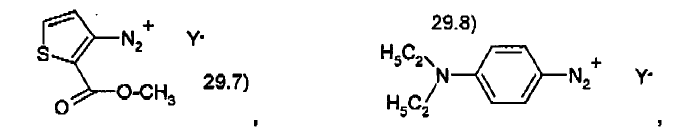

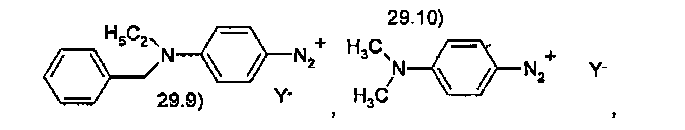

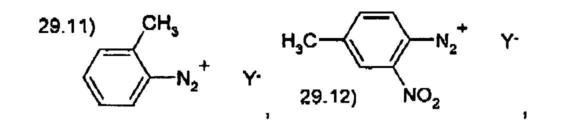

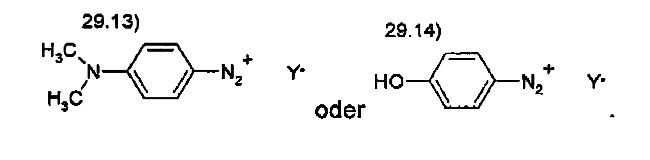

Die Synthese der Verbindungen der Formel XXIX erfolgt analog zu bekannten Methoden der Diazotierung mit nachfolgender Umsalzung, wie zuvor beschrieben.

Die nachfolgenden Beispiele sollen die Erfindung näher erläutert, ohne sie jedoch zu beschränken.

### Beispiel 1:

### Herstellung eines Azinfarbstoffs als Tris(pentafluorethyl)trifluorphosphat aus Safranin O

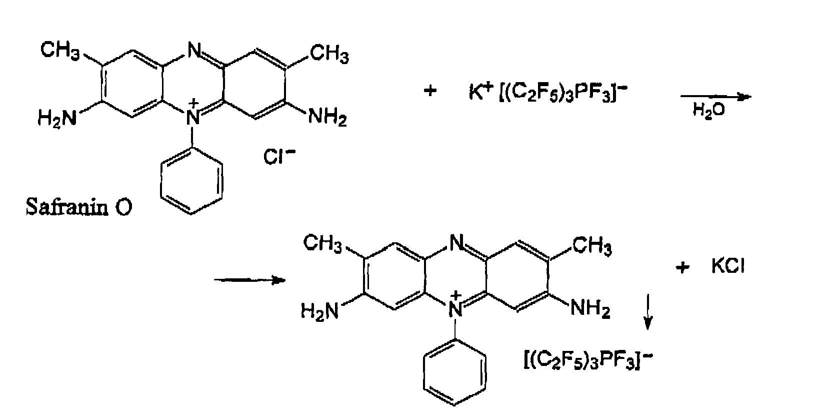

0,513 g (1,46 mmol) des Farbstoffes Safranin O werden in 100 cm³ Wasser gelöst. Bei Raumtemperatur werden zu der Lösung 0,780 g (1,61 mmol) Kaliumtris(pentafluorethyl)trifluorphosphat, K[(C₂F₅)₃PF₃] in 5 cm³ Wasser unter Rühren zugetropft. Der Niederschlag wird abfiltriert und 3 x mit 20 cm³ Wasser gewaschen. Der Rückstand wird im Vakuum getrocknet. 1,019 g Safranin O als als Tris(pentafluarethyf)trifluorphosphat werden erhalten. Die Ausbeute beträgt 91,8 %.
¹⁹F NMR (Referenz: CCl₃F; Solvent: CD₃CN) : -43.55 d,m (PF), -79.67 m (CF₃), -81,35 m (2CF₃), -87.03 d,m (PF₂), -115.07 dm (CF₂) -115,68 dm (2CF₂); ¹J_{P,F} = 890 Hz, ¹J_{P,F} = 902 Hz, ²J_{P,F} = 85 Hz, ²J_{P,F} = 98 Hz.
¹H NMR (Referenz: TMS ; Solvent: CD₃CN) : 2.30 br.s (2CH₃), 6.00-6.08 br.s (2NH₂), 7.48-7.55 m (2H), 7.75-7.78 m (2H), 7.83-7.91 m (5H).
³¹P NMR (Referenz: 85% H₃PO₄; Solvent: CD₃CN): -148.6 q,m.

### Beispiel 2:

### Herstellung eines Xanthen-Farbstoffs als Tris(pentafluorethyl)trifluorphosphat aus Rhodamin B

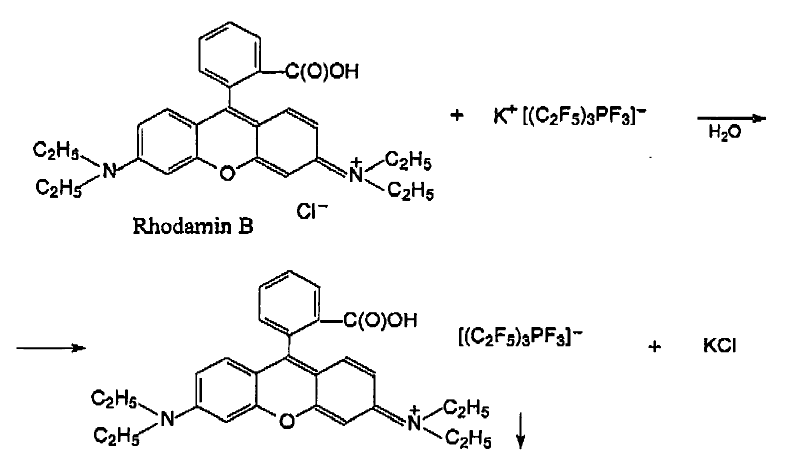

0,462 g (0,964 mmol) des Farbstoffes Rhodamin B werden in 100 cm³ Wasser gelöst Bei Raumtemperatur werden zu der Lösung 0,502 g (1,037 mmol) Kaliumtris(pentafluorethyl)trifluorphosphat, K[(C₂F₅)₃PF₃] in 3 cm³ Wasser unter Rühren zugetropft. Der Niederschlag wird abfiltriert und 3 x mit 20 cm³ Wasser gewaschen. Der Rückstand wird im Vakuum getrocknet. 0,600 g Rhodamin B als Tris(pentafluorethyl)trifluorphosphat werden erhalten. Die Ausbeute beträgt 70 %.
¹⁹F NMR (Referenz: CCl₃F; Solvent: CD₃CN) : -43.58 d,m (PF), -79.64 m (CF₃), -81.34 m (2CF₃), -86.98 d,m (PF₂), -115.03 dm (CF₂) -115.64 dm (2CF₂); ¹J_{P,F} = 890 Hz, ¹J_{P,F} = 902 Hz, ²J_{P,F} = 85 Hz, ²J_{P,F} = 98 Hz.
¹H NMR (Referenz: TMS ; Solvent: CD₃CN) : 1.28 t (4CH₃), 3.64 q (4CH₂), 6.85 s (1H), 6.86 s (1H), 6.93 d, 6.96 d (2H; A,B), 7.07 s, 7.11 (2H; A,B), 7.39 d,d (1H), 7.77-7.90 m (2H), 8.32 d,d (1H); ³J_{H,H} = 7.1 Hz , J_{H,H} = 2.5 Hz , J_{H,H} = 1.5 Hz, J_{H,H} = 7.4 Hz, J_{H,H} = 9.2 Hz.
³¹P NMR (Referenz: 85% H₃PO₄; Solvent: CD₃CN) : -148.4 q,m.

### Beispiel 3:

### Herstellung eines Xanthen-Farbstoffs als Tris(pentafluorethyl)trifluorphosphat aus Pyronin G

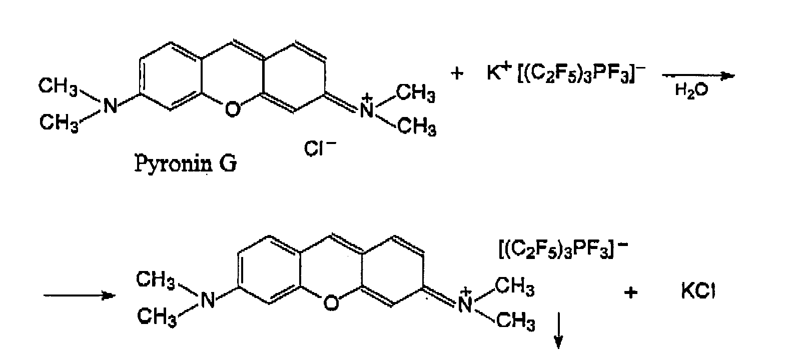

0,356 g (1,176 mmol) des Farbstoffes Pyronin G werden in 100 cm³ Wasser gelöst. Bei Raumtemperatur werden zu der Lösung 0,602 g (1,243 mmol) Kaliumtris(pentafluorethyl)trifluorphosphat, K[(C₂F₅)₃PF₃] in 5 cm³ Wasser unter Rühren zugetropft. Der Niederschlag wird abfiltriert und 3 x mit 20 cm³ Wasser gewaschen. Der Rückstand wird im Vakuum getrocknet. 0,655 g Pyronin G als Tris(pentafluorethyl)trifluorphosphat werden erhalten. Die Ausbeute beträgt 78,2 %.
¹⁹F NMR (Referenz: CCl₃F; Solvent: CD₃CN): -43.56 d,m (PF), -79.62 m (CF₃), -81.31 m (2CF₃), -86.96 d,m (PF₂), -115.02 dm (CF₂) -115.63 dm (2CF₂); ¹J_{P,F} = 891 Hz, ¹J_{P,F} = 904 Hz, ²J_{P,F} = 85 Hz, ²J_{P,F} = 98 Hz.
¹H NMR (Referenz: TMS ; Solvent: CD₃CN) : 3.25 s (4CH₃), 6.69 s (1H), 6.70 s (1H), 7,03 d, 7.06 d (2H; A,B), 7.67 s, 7.70 (2H; A,B), 8.38 br.s (1H); J_{H,H} = 2.4 Hz , J_{H,H} = 9.3 Hz.
³¹P NMR (Referenz: 85% H₃PO₄; Solvent: CD₃CN) : -148.6 q,m.

### Beispiel 4:

### Herstellung eines Oxazin-Farbstoffs als Tris(pentafluorethyl)trifluorphosphat aus Nilblau

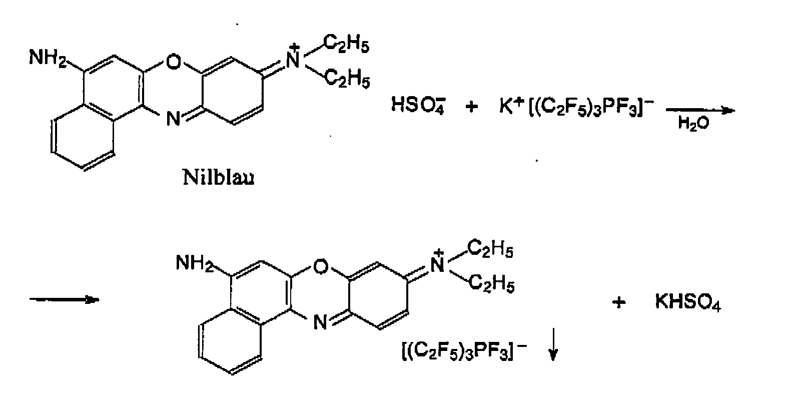

0,511 g (1,23 mmol) des Farbstoffes Nilblau Hydrogensulfat werden in 100 cm³ Wasser gelöst. Bei Raumtemperatur werden zu der Lösung 0,725 g (1,50 mmol) Kaliumtris(pentafluorethyl)trifluorphosphat, K[(C₂F₅)₃PF₃] in 5 cm³ Wasser unter Rühren zugetropft. Der Niederschlag wird abfiltriert und 3 x mit 20 cm³ Wasser gewaschen. Der Rückstand wird im Vakuum getrocknet. 0,832 g Nilblau als Tris(pentafluorethyl)trifluorphosphat werden erhalten. Die Ausbeute beträgt 89,1 %.
¹⁹F NMR (Referenz: CCl₃F; Solvent: CD₃CN) : -43.57 d,m (PF), -79.65 m (CF₃), -81.33 m (2CF₃), -87.00 d,m (PF₂), -115.05 dm (CF₂) -115.66 dm (2CF₂); ¹J_{P,F}= 890 Hz, ¹J_{P,F}= 903 Hz, ²J_{P,F}= 85 Hz, ²J_{P,F}= 98 Hz.
¹H NMR (Referenz: TMS ; Solvent: CD₃CN) : 1.30 t (2CH₃), 3.62 q (2CH₂), 6.54 s (1H), 6.62 d (1H), 7.10 d,d (1H), 7.50-7.98 m (6H), 8.59 d,d (1H); ³J_{H,H} = 7.2 Hz , J_{H,H} = 2.7 Hz , J_{H,H} = 8.2 Hz, J_{H,H} = 9.5 Hz.
³¹P NMR (Referenz: 85% H₃PO₄ ; Solvent: CD₃CN) : -148.5 q,m.

### Beispiel 5:

### Herstellung eines Triphenylmethan-Farbstoffs als Tris(pentafluorethyl)trifluorphosphat aus Kristallviolett

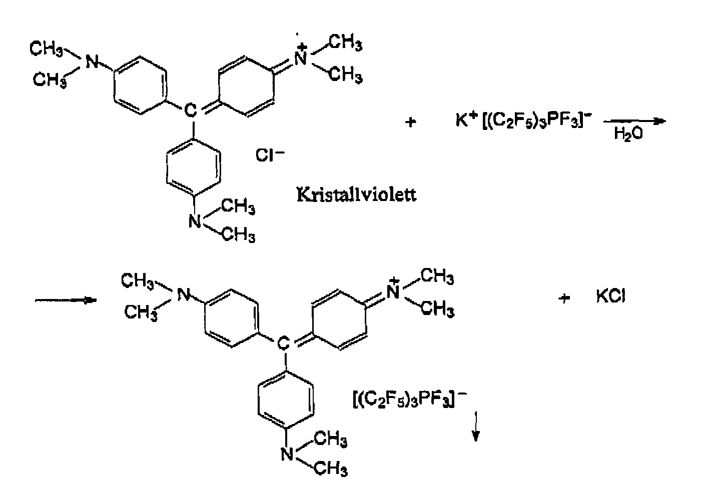

0,359 g (0,88 mmol) des Farbstoffes Kristallviolett werden in 100 cm³ Wasser gelöst. Bei Raumtemperatur werden zu der Lösung 0,508 g (1,049 mmol) Kaliumtris(pentafluorethyl)trifluorphosphat, K[(C₂F₅)₃PF₃] in 5 cm³ Wasser unter Rühren zugetropft. Der Niederschlag wird abfiltriert und 3 x mit 20 cm³ Wasser gewaschen. Der Rückstand wird im Vakuum getrocknet. 0,559 g Kristallviolett als Tris(pentafluorethyl)trifluorphosphat werden erhalten. Die Ausbeute beträgt 77,7 %.
¹⁹F NMR (Referenz: CCl₃F; Solvent: CD₃CN) : -43.55 d,m (PF), -79.58 m (CF₃), -81.28 m (2CF₃), -86.92 d,m (PF₂), -115.06 dm (CF₂) -115.57 dm (2CF₂); ¹J_{P,F} = 889 Hz, ¹J_{P,F} = 902 Hz, ²J_{P,F} = 83 Hz, ²J_{P,F} = 98 Hz.
¹H NMR (Referenz: TMS ; Solvent: CD₃CN) : 3.20 s (6CH₃), 6.90 d,m ; 7.30 d,m (12H; A,B), J_{H,H} = 9.3 Hz.
³¹P NMR (Referenz: 85% M₃PO₄; Solvent: CD₃CN) : -148.6 q,m.

### Beispiel 6:

### Herstellung eines Chinolin-Farbstoffs als Tris(pentafluorethyl)trifluorphosphat aus Ethidiumbromid

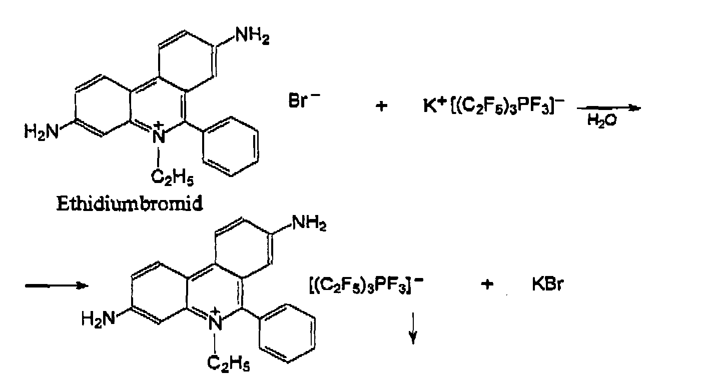

0,114 g (0,289 mmol) des Farbstoffes Ethidiumbromid werden in 50 cm³ Wasser gelöst. Bei Raumtemperatur werden zu der Lösung 0,140 g (0,289 mmol) Kaliumtris(pentafluorethyl)trifluorphosphat, K[(C₂F₅)₃PF₃] in 2 cm³ Wasser unter Rühren zugetropft. Die Reaktionsmischung wird mit 50 cm³ Diethylether extrahiert und das Extrakt 2 x mit 40 cm³ Wasser gewaschen und mit wasserfreiem MgSO₄ getrocknet. Das Lösungsmittel wird abfiltriert und der Rückstand im Vakuum getrocknet. 0,207 g Ethidium als Tris(pentafluorethyl)trifluorphosphat werden erhalten. Die Ausbeute beträgt 94,5 %.
¹⁹F NMR (Referenz: CCl₃F; Solvent: CD₃CN) : -43.55 d,m (PF), -79.63 m (CF₃), -81.31 m (2CF₃), -87.00 d,m (PF₂), -115.02 dm (CF₂) -115,62 dm (2CF₂); ¹J_{P,F} = 890 Hz, ¹J_{P,F} = 902 Hz, ²J_{P,F} = 84 Hz, ²J_{P,F} = 98 Hz.
¹H NMR (Referenz: TMS ; Solvent: CD₃CN) : 1.46 t (CH₃). 4.55 q (CH₂), 4.4 br. s (2NH₂), 6.45 d (1H), 7.30-7.83 m (8H), 8.42 d (1H), 8.50 d (1H); ³J_{H,H} = 7.2 Hz , J_{H,H} = 2.4 Hz , J_{H,H} = 9.3 Hz.
³¹P NMR (Referenz: 85% H₃PO₄ ; Solvent: CD₃CN) : -148.6 q,m.

### Beispiel 7:

### Herstellung eines Thiazin-Farbstoffs als Tris(pentafluorethyl)trifluorphosphat aus Methylenblau

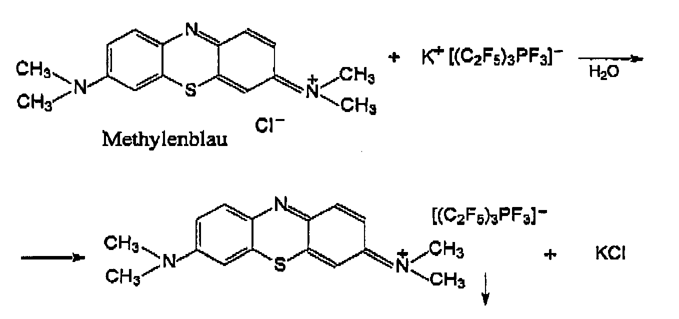

0,210 g (0,657 mmol) des Farbstoffes Methylenblau werden in 50 cm³ Wasser gelöst. Bei Raumtemperatur werden zu der Lösung 0,325 g (0,671 mmol) Kaliumtris(pentafluorethyl)trifluorphosphat, K[(C₂F₅)₃PF₃] in 3 cm³ Wasser unter Rühren zugetropft. Der Niederschlag wird abfiltriert und 3 x mit 20 cm³ Wasser gewaschen. Der Rückstand wird im Vakuum getrocknet. 0,432 g Methylenblau als Tris(pentafluorethyl)trifluorphosphat werden erhalten. Die Ausbeute beträgt 90,2 %.
¹⁹F NMR (Referenz: CCl₃F; Solvent: CD₃CN) : -43.56 d,m (PF), -79.64 m (CF₃), -81.33 m (2CF₃), -86.98 d,m (PF₂), -115.03 dm (CF₂) -115.65 dm (2CF₂); ¹J_{P,F} = 889 Hz, ¹J_{P,F} = 902 Hz, ²J_{P,F} = 83 Hz, ²J_{P,F} = 98 Hz.
¹H NMR (Referenz: TMS ; Solvent: CD₃CN) : 3.29 s (4CH₃), 7.10 s (1H), 7.11 s (1H), 7.28 d,d (2H; A,B), 7.80 d (2H; A,B), J_{H,H} = 2.3 Hz, J_{H,H} = 9.5 Hz.
³¹P NMR (Referenz: 85% H₃PO₄ ; Solvent: CD₃CN) : -148.5 q,m.

### Beispiel 8:

### Herstellung eines Azin-Farbstoffs als Tris(pentafluorethyl)trifluorphosphat aus Safranin O

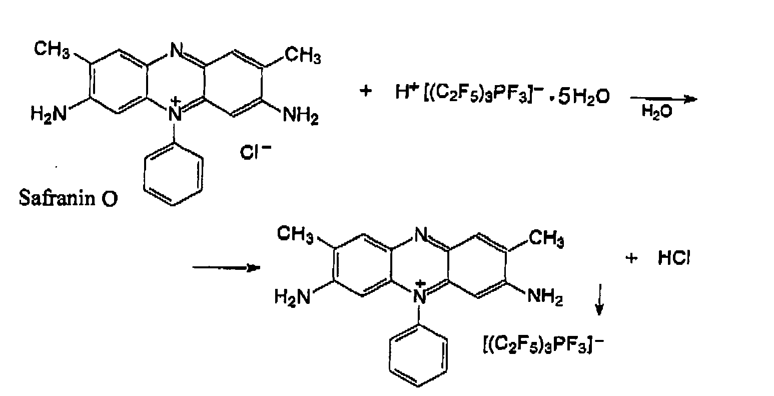

0,250 g (0,712 mmol) des Farbstoffes Safranin O werden in 50 cm³ Wasser gelöst. Bei Raumtemperatur werden zu der Lösung 0,390g (0,727 mmol) Tris(pentafluorethyl)trifluorphosphorsäure Pentahydrat, H[(C₂F₅)₃PF₃] 5 H₂O, in 3 cm³ Wasser unter Rühren zugetropft. Der Niederschlag wird abfiltriert und 3 x mit 20 cm³ Wasser gewaschen. Der Rückstand wird im Vakuum getrocknet. 0,490 g Safranin als
Tris(pentafluorethyl)trifluorphosphat werden erhalten. Die Ausbeute beträgt 90,6 %.
Das Material wird mittels ¹H- und ¹⁹F-NMR und ³¹P Spektren analysiert und entspricht den in Beispiel 12 angegebenen Daten.

### Beispiel 9:

### Herstellung eines Carbocyanin-Farbstoffs als Tris(pentafluorethyf)trifluorphosphat

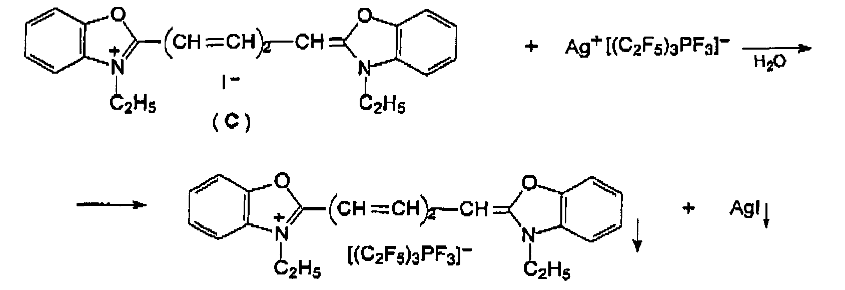

0,070 g (0,130 mmol) Tris(pentafluorethyl)trifluorphosphorsäure Pentahydrat, H[(C₂F₅)₃PF₃] 5 H₂O, werden in 5 cm³ Wasser mit 0,020 g (0,086 mmol) Silberoxid neutralisiert. Die resultierende Lösung wird zu einer Lösung aus 0,050 g (0,103 mmol) des Cyaninfarbstoffes (C) in 200 cm³ Wasser unter Rühren zugetropft. Der Niederschlag wird abfiltriert und 12 x mit 10 cm³ Methanol gewaschen. Das Lösungsmittel wird abdestilliert und der Rückstand im Vakuum bei 60°C getrocknet. 0,035 g Carbocyaninfarbstoff als Tris(pentafluorethyl)trifluorphosphat werden erhalten. Die Ausbeute beträgt 42,2 %.
¹⁹F NMR (Referenz: CCl₃F; Solvent: CD₃CN) : -43.55 d,m (PF), -79.61 m (CF₃), -81.30 m (2CF₃), -86.98 d,m (PF₂), -115.01 dm (CF₂) -115.61 dm (2CF₂); ¹J_{P,F} = 890 Hz, ¹J_{P,F} = 902 Hz, ²J_{P,F} = 85 Hz, ²J_{P,F} = 98 Hz.
¹H NMR (Referenz: TMS ; Solvent: CD₃CN) : 1.40 t (2CH₃), 4.11 q (2CH₂), 5.78 d (2H), 6.34 t (1H), 7.29-7.55 m (8H), 7.80 t (1H); ³J_{H,H} = 7.2 Hz , J_{H,H} = 13.0 Hz.
³¹P NMR (Referenz: 85% H₃PO₄ ; Solvent: CD₃CN) : -148.6 q,m.

### Beispiel 10

### Herstellung von 1,2,3,3-Tetramethyl-3H-indolium Tris(pentafluorethyl)trifluorphosphat

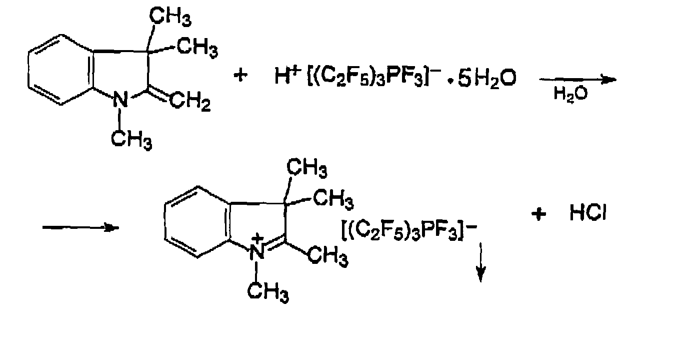

4,00 g (7,46 mmol) Tris(pentafluorethyl)trifluorphosphorsäure Pentahydrat, H[(C₂F₅)₃PF₃] 5 H₂O, werden in 15 cm³ Wasser gelöst. Zu der Lösung werden 1,175 g (6,78 mmol) 2-Methylen-9,3,3-trimethyl-indolin (Fischer-Base) unter Rühren zugetropft. Der Niederschlag wird abfiltriert und 3 x mit 10 cm³ Wasser gewaschen. Der Rückstand wird 8 Stunden im Vakuum bei 1,3 Pa und Raumtemperatur getrocknet. 4,16 g 1,2,3,3-Tetramethyl-3H-indolium Tris(pentafluorethyl)trifluorphosphat werden erhalten, Die Ausbeute beträgt 99 %. Der Schmelzpunkt nach Kristallisation aus Ethanol beträgt 81 °C.
¹⁹F NMR (Referenz: CCl₃F; Solvent; CD₃CN) : -43.51 d,m (PF), -79.54 m (CF₃), -81.23 m (2CF₃), -86.90 d,m (PF₂), -114.88 dm (CF₂) -115.49 dm (2CF₂); ¹J_{P,F} = 889 Hz, ¹J_{P,F} = 901 Hz, ²J_{P,F} = 87 Hz, ²J_{P,F} = 98 Hz.
¹H NMR (Referenz: TMS ; Solvent: CD₃CN) : 1.55 s (2CH₃), 2.69 q (CH₃), 2.69 q (CH₃), 7.61-7-76 m (4H); J_{H,H} = 0.7 Hz.
³¹P NMR (Referenz: 85% H₃PO₄ ; Solvent: CD₃CN) : -148.3 q,m.

### Beispiel 11:

### Herstellung von 3-Ethyl-2-methyl-benzthiazolium Tris(pentsfluorethyl)trifluorphosphat

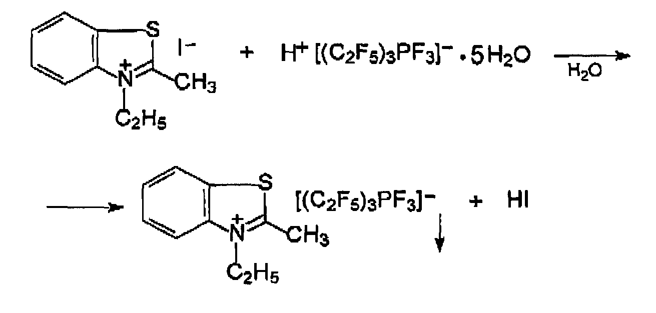

4,39 g (8,19 mmol) Tris(pentafluorethyl)trifluorphosphorsäure Pentahydrat, H[(C₂F₅)₃PF₃] 5 H₂O, werden in 30 cm³ Wasser gelöst. Zu der Lösung werden 2,5 g (8,19 mmol) 3-Ethyl-2-methyl-benzthiazolium iodid unter Rühren zugetropft. Der Niederschlag wird abfiltriert und 3 x mit 10 cm³ Wasser gewaschen. Der Rückstand wird 8 Stunden im Vakuum bei 1,3 Pa und 60°C getrocknet. 5,03 g 3-Ethyl-2-methyl-benzthiazolium Tris(pentafluorethyl)trifluorphosphat werden erhalten. Die Ausbeute beträgt 98,4 %. Der Schmelzpunkt nach Kristallisation aus Ethanol beträgt 62-63°C_{.}
¹⁹F NMR (Referenz: CCl₃F; Solvent: CD₃CN) : -43.56 d,m (PF), -79.68 m (CF₃), -81.37 m (2CF₃), -86.94 d,m (PF₂), -114.99 dm (CF₂) -115.63 dm (2CF₂); ¹J_{P,F} = 888 Hz, ¹J_{P,F} = 903 Hz, ²J_{P,F} = 83 Hz, ²J_{P,F} = 98 Hz.
¹H NMR (Referenz: TMS ; Solvent: CD₃CN) : 1.54 t (CH₃), 3.09 s (CH₃), 4.67 q (CH₂), 7.79 t (1H), 7.89 t (1H), 8.10 d (1H), 8.22 d (1H); ³J_{H,H} = 8.0 Hz, ³J_{H,H} = 7.3 Hz.
³¹P NMR (Referenz: 85% H₃PO₄ ; Solvent: CD₃CN) : -148.0 q,m.

### Beispiel 12:

### Herstellung von 3-Ethyl-2-methyl-benzoxazolium Tris(pentafluorethyl)trifluorphosphat

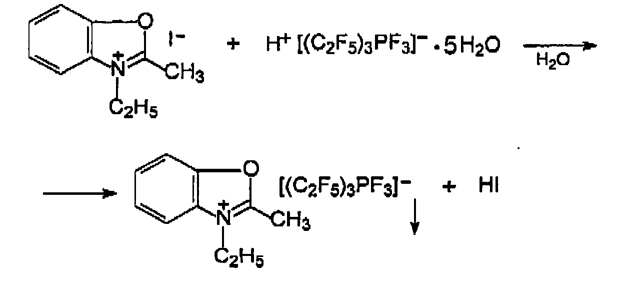

4,63 g (8,64 mmol) Tris(pentafluorethyl)trifluorphosphorsäure Pentahydrat, H[(C₂F₅)₃PF₃] 5 H₂O, werden in 30 cm³ Wasser gelöst. Zu der Lösung werden 2,5 g (8,64 mmol) 3-Ethyl-2-methyl-benzoxazolium iodid unter Rühren zugetropft. Der Niederschlag wird abfiltriert und 3 x mit 10 cm³ Wasser gewaschen. Der Rückstand wird 8 Stunden im Vakuum bei 1,3 Pa und 60°C getrocknet. 4,49 g 3-Ethyl-2-methyl-benzoxazolium Tris(pentafluorethyl)trifluorphosphat werden erhalten. Die Ausbeute beträgt 85,6 %. Der Schmelzpunkt nach Kristallisation aus Ethanol beträgt 71-72°C.
¹⁹F NMR (Referenz: CCl₃F; Solvent: CD₃CN) : -43.56 d,m (PF), -79.68 m (CF₃), -81.40 m (2CF₃), -86.94 d,m (PF₂), -114.99 dm (CF₂) -115.64 dm (2CF₂); ¹J_{P,F} = 891 Hz, ¹J_{P,F} = 903 Hz, ²J_{P,F} = 83 Hz, ²J_{P,F} = 98 Hz.
¹H NMR (Referenz: TMS ; Solvent: CD₃CN) : 1.54 t (CH₃), 3.00 s (CH₃), 4.50 q (CH₂), 7.73-7.81 m (2H), 7.88-7.96 m (2H); ³J_{H,H} = 7.4 Hz.
³¹P NMR (Referenz: 85% H₃PO₄; Solvent: CD₃CN) : -148.0 q,m.

### Beispiel 13:

### Herstellung von 2,3-dimethyl-benzoxazolium Tris(pentafluorethyl)trifluorphosphat

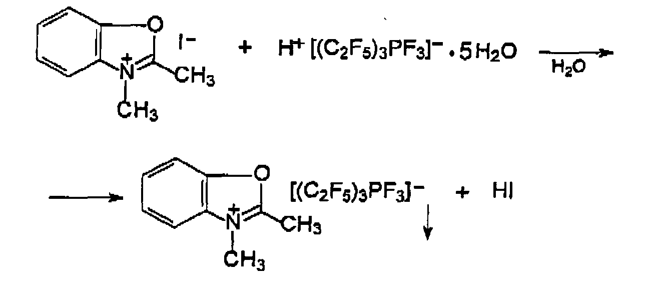

9,37 g (17,48 mmol) Tris(pentafluorethyl)trifluorphosphorsäure Pentahydrat, H[(C₂F₅)₃PF₃] 5 H₂O, werden in 15 cm³ Wasser gelöst. Zu der Lösung werden 4,81 g (17,48 mmol) 2,3-Dimethyl-benzoxazolium iodid in 50 cm³ Wasser unter Rühren zugetropft. Der Niederschlag wird abfiltriert und 3 x mit 10 cm³ Wasser gewaschen. Der Rückstand wird 8 Stunden im Vakuum bei 1,3 Pa und 70°C getrocknet. 10,12 g 2,2-Dimethyl-benzoxazolium Tris(pentafluorethyl)trifluorphosphat werden erhalten. Die Ausbeute beträgt 85,6 %. Der Schmelzpunkt nach Kristallisation aus Ethanol beträgt 94-95°C.
¹⁹F NMR (Referenz: CCl₃F; Solvent: CD₃CN) : -43.59 d,m (PF), -79.69 m (CF₃), -81.38 m (2CF₃), -86.96 d,m (PF₂), -115.01 dm (CF₂) -115.65 dm (2CF₂); ¹J_{P,F} = 890 Hz, ¹J_{P,F} = 909 Hz, ²J_{P,F} = 81 Hz, ²J_{P,F} = 99 Hz.
¹H NMR (Referenz: TMS ; Solvent: CD₃CN) : 2.99 s (CH₃), 4.01 s (CH₃), 7.74-7.81 m (2H), 7.84-7.94 m (2H).
³¹P NMR (Referenz: 85% H₃PO₄; Solvent: CD₃CN) : -148.1 q,m.

### Beispiel 14:

### Herstellung von 2-[3-(1,3-Dihydro-1,3,3-trimethyl-2H-indol-2-ylidene)propenyl]-1,3,3-trimethyl-3H-indolium Tris(pentafluorethyl)trifluorphosphat

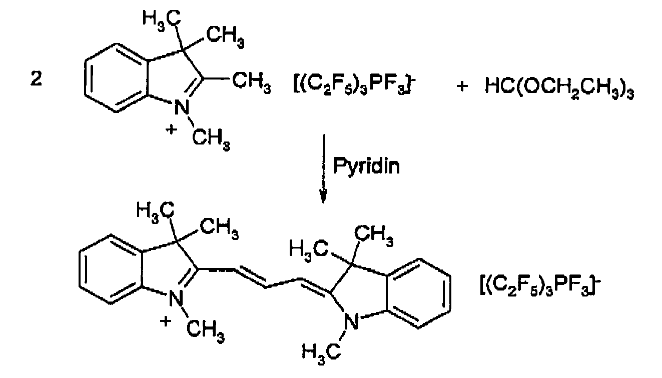

Zu einer Lösung von 0,194 g (1,31 mmol) Triethylorthoformiat in 15 cm³ Pyridin werden 1,642 g (2,65 mmol) 1,2,3,3-Tetramethyl-3H-indolium tris(pentafluorethyl)trifluorphosphat zugegeben. Die Reaktionsmischung wird für 13 h erhitzt und anschließend das Lösungsmittel abdestilliert. Der Rückstand wird in 15 cm³ Ethanol aufgenommen und mit 0,11 g NaOH in 50 cm³ Ethanol versetzt. Nach Abdestillieren des Ethanols wird der Rückstand mit Dichlormethan extrahiert und die organische Phase 3 x mit 100 cm³ Wasser gewaschen und getrocknet. Dichlormethan wird abdestilliert und der Rückstand wird im Vakuum bei 60°C getrocknet. 0,79 g 2-[3-(1,3-Dihydro-1,3,3-trimethyl-2H-indol-2-ylidene)propenyl]-1,3,3-trimethyl-3H-indolium Tris(pentafluorethyl)trifluorphosphat wird erhalten. Die Ausbeute beträgt 74,3 %.
¹⁹F NMR (Referenz: CCI₃F; Solvent: CD₃CN) : -43.50 d,m (PF), -79.68 m (CF₃), -81.37 m (2CF₃), -86.95 d,m (PF₂), -115.05 dm (CF₂) -115.68 dm (2CF₂); ¹J_{P,F} = 888 Hz, ¹J_{P,F} = 906 Hz, ²J_{P,F} = 85 Hz, ²J_{P,F} = 98 Hz.
¹H NMR (Referenz: TMS ; Solvent: CD₃CN) : 1.71 s (4CH₃), 3.57 s (2CH₃), 6.27 d (2H), 7.28 d,d,d (4H), 7.43 t,d (2H), 7.50 d (2H), 8.46 t (1H); ³J_{H,H} = 13.5 Hz, ³J_{H,H} = 7.6 Hz, ⁵J_{H,H} = 1.0 Hz.
³¹P NMR (Referenz: 85% H₃PO₄; Solvent: CD₃CN) : -148.0 q,m.

### Beispiel 15:

### Herstellung von 3-Ethyl-2-[3-(3-ethyl-3H-benzothiazol-2-yliden)-propenyl]-benzothiazolium Tris(pentafluorethyl)-trifluorphosphat

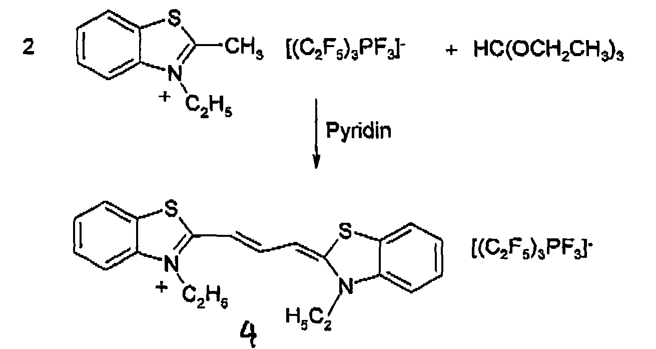

Analog zu Beispiel 4 werden 0.28 g (1.89 mmol) Triethylorthoformiat mit 2.35 g (3.77 mmol) 1-Ethyl-2-methyl-benzthiazolium-tris(pentafluorethyl)-trifluorphosphat in Pyridin umgesetzt. Es werden 1,00 g 3-Ethyl-2-[3-(3-ethyl-3H-benzothiazol-2-yliden)-propenyl]-benzothiazolium Tris(pentailuorethyl)-trifluorphosphat in einer Ausbeute von 65,4 % erhalten.
¹⁹F NMR (Referenz: CCI₃F; Solvent: CD₃CN) : -43.56 d,m (PF), -79.67 m (CF₃), -81.37 m (2CF₃), -86.95 d,m (PF₂), -114.99 dm (CF₂) -115.66 dm (2CF₂); ¹J_{P,F} = 888 Hz, ¹J_{P,F}= 903 Hz, ²J_{P,F} = 80 Hz, ²J_{P,F} = 97 Hz.
¹H NMR (Referenz: TMS ; Solvent: CD₃CN) : 1.40 t (2CH₃), 4.25 q (2CH₂), 6.34 d (2H), 7.37 m (2H), 7.52 m (4H), 7.79 d (2H), 7.82 t (1H); ³J_{H,H} = 12.7 Hz, ³J_{H,H} = 7.1 Hz.
³¹P NMR (Referenz: 85% N₃PO₄; Solvent: CD₃CN) : -148.1 q,m.

### Beispiel 16:

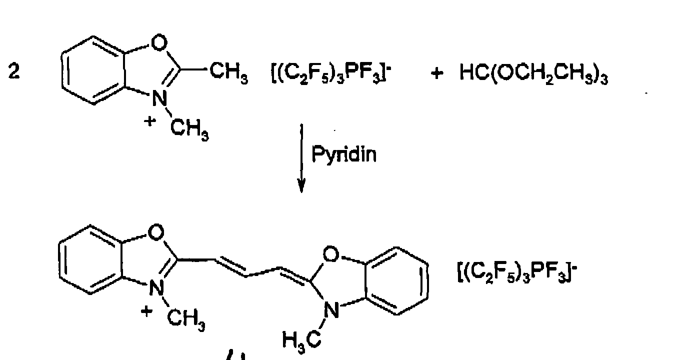

Analog zu Beispiel 4 werden 0.38 g (2.56 mmol) Triethylorthoformiat mit 3.03 g (5.11 mmol) 1,2-Dimethyl-benoxazolium Tris(pentafluorethyl)-trifluorphosphat in Pyridin umgesetzt. Es wird 3-Methyl-2-[3-(3-methyl-3H-benzoxazol-2-yliden)-propenyl]-benzoxazolium Tris(pentafluorethyl)trifluorphosphat nach Umkristallisation aus Toluol:Dichlormethan (1:1) in einer Ausbeute von 31,3 % erhalten.
¹⁹F NMR (Referenz: CCI₃F; Solvent: CD₃CN) : -43.55 d,m (PF), -79.67 m (CF₃), -81.37 m (2CF₃), -86.94 d,m (PF₂), -115.01 dm (CF₂) -115.65 dm (2(CF₂); ¹J_{P,F} = 888 Hz, ¹J_{P,F} = 904 Hz, ²J_{P,F} = 84 Hz, ²J_{P,F} = 97 Hz.
¹H NMR (Referenz: TMS ; Solvent: CD₃CN) : 3.65 s (2CH₃), 5.84 d (2H), 7.36-7.52 m (6H), 7.59 d,d,d (2H), 8.44 t (1H); ³J_{H,H} = 13.4 Hz, ³J_{H,H} = 7.6 Hz, ⁵J_{H,H} = 1.0 Hz.
³¹P NMR (Referenz: 85% H₃PO₄; Solvent: CD₃CN): -148.1 q,m.

### Beispiel 17:

### Herstellung von Methyl 3-diazothiophen-2-carboxylat Tris(pentafluorethyl)trifluorphosphat

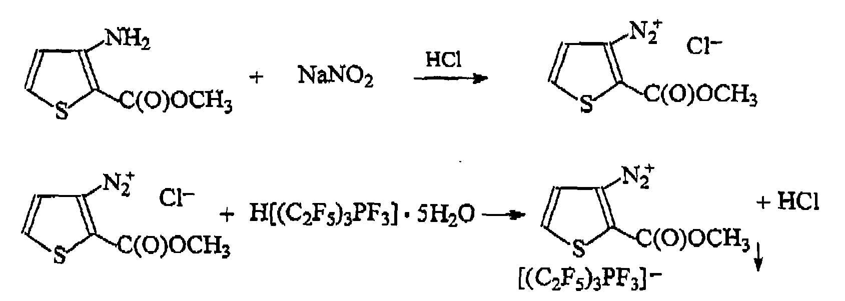

Zu 25 cm³ einer 6M Salzsäurelösung werden unter Rühren 10,3 g (65.52 mmol) Methyl-3-aminothiophen-2 carboxalat gegeben. Die Reaktionsmischung wird weitere 30 min. bei Raumtemperatur gerührt und anschließend auf -10° bis -15°C gekühlt. Eine Lösung von 4,52 g (65,51 mmol) Natriumnitrit in 10 cm³ Wasser wird zugegeben und es bildet sich das Diazonium-Chlorid. Bei dieser Temperatur werden nun 35.12 g (65.55 mmot) H[(C₂H₅)₃PF₃] x 5 H₂O zugegeben. Der erhaltene Niederschlag wird abfiltriert und mit einer kalten Lösung von 10 cm³ H[(C₂H₅)₅PF₃] x 5 H₂O in 20 cm³ Wasser und zweimal mit 10 cm³ kaltem Methanol gewaschen und anschließend im Vakuum bei Raumtemperatur getrocknet. Man erhält 38,90 g Methyl-3-diazothiophen-2-carboxylat Tris(pentafluorethyl)triflorphosphat. Das entspricht einer Ausbeute von 96,7%.
¹H NMR (Referenz: TMS ; Solvent: CD₃CN), ppm: 4.07 s (CH₃), 8.12 A,B (2H), ³J_{A,B} = 5.5 Hz.
¹⁹F NMR (Referenz: CCl₃F; Solvent: CD₃CN), ppm: -43.57 d,m (PF), -79.68 m (CF₃), -81.37 m (2CF₃), -86.97 d,m (PF₂), -115.02 dm (CF₂) -115.62 dm (2CF₂); ¹J_{P,F} = 891 Hz, ¹J_{P,F} = 905 Hz, ²J_{P,F} = 84 Hz, ²J_{P,F} = 99 Hz.
³¹P NMR (Referenz: 85% H₃PO₄ ; Solvent CD₃CN), ppm: -148.8 d,t,m.

### Beispiel 18:

### Löslichkeitsuntersuchungen von Nilblau-FAP

Der in Beispiel 4 hergestellte Farbstoff (Nilblau-FAP) aus Nilblau, wobei FAP Tris(Pentafluorethyl)trifluorposphat bedeutet, wird verschiedenen Lösungsmitteln ausgesetzt. Als Referenz wird der herkömmliche Farbstoff Nilblau mit Hydrogensulfat als Anion unter gleichen Bedingungen untersucht.

**Tabelle 5: Löslichkeit von Nilblau mit HSO₄⁻ -Anion oder (C₂F₅)₃PF₃⁻ -Anion**

| Lösungsmittel | Hydrogensulfatanion | [(C₂F₅)₃PF₃]⁻ |
|---|---|---|
| Ethanol | +++ | +++ |
| Aceton | ++ | +++ |
| Wasser | +++ | - |
| Methylenchlorid | + | +++ |
| Chloroform | + | ++ |
| Methanol | +++ | +++ |
| Benzol | - | + |
| Hexan | - | - |
| Diethylether | ++ | +++ |
| Acetonitril | ++ | +++ |
| Tetrahydrofuran | + | +++ |
| Dimethylcarbonat | - | +++ |

| | | |
|---|---|---|
| Erklärung: - unlöslich, + schwach löslich, ++ gut löslich, +++ sehr gut löslich | | |

### Beispiel 19:

### Löslichkeitsuntersuchungen von Safranin-FAP

Der in Beispiel 1 hergestellte Farbstoff aus Safranin O wird verschiedenen Lösungsmitteln ausgesetzt. Referenz ist Safranin O mit Chlorid als Anion.

**Tabelle 6: Löslichkeit von Safranin O mit Cl⁻ -Anion oder (C₂F₅)₃PF₃⁻ -Anion**

| Lösungsmittel | Cl⁻ | [(C₂F₅)₃PF₃]⁻ |
|---|---|---|
| Ethanol | +++ | +++ |
| Aceton | ++ | +++ |
| Wasser | +++ | - |
| Methylenchlorid | ++ | +++ |
| Chloroform | ++ | +++ |
| Methanol | +++ | +++ |
| Benzol | - | ++ |
| Hexan | - | - |
| Diethylether | - | +++ |
| Acetonitril | ++ | +++ |
| Tetrahydrofuran | + | +++ |
| Dimethylcarbonat | - | +++ |

| | | |
|---|---|---|
| Erklärung: - unlöslich, + schwach löslich, ++ gut löslich, +++ sehr gut löslich | | |

## Patentansprüche

1. Kationische Farbstoffe der allgemeinen Formel I
CAT⁺ Y⁻ (I),
wobei Y⁻ ein Fluoralkylphosphat der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4,
und
CAT⁺ ein Kation ist, ausgewählt aus der Gruppe der Azin-, Xanthen-, Polymethin-, Styryl-, Azo-, Tetrazolium-, Pyrylium-, Benzopyrylium-, Thiopyrylium-, Benzothiopyrylium-, Thiazin-, Oxazin-, Triarylmethan-, Diarylmethan-, Acridin-, Chinolin-, Iso-Chinolin- oder quarternierten Azafluorenon-Farbstoffe.

2. Farbstoffe gemäß Anspruch 1, **dadurch gekennzeichnet, dass** CAT⁺ ein Kation eines Azinfarbstoffs ist.

3. Farbstoffe gemäß Anspruch 1, **dadurch gekennzeichnet, dass** CAT⁺ ein Kation eines Xanthenfarbstoffs ist.

4. Farbstoffe gemäß Anspruch 1, **dadurch gekennzeichnet, dass** CAT⁺ ein Kation eines Polymethinfarbstoffs ist.

5. Farbstoffe gemäß Anspruch 1, **dadurch gekennzeichnet, dass** CAT⁺ ein Kation eines Styrylfarbstoffs ist.

6. Farbstoffe gemäß Anspruch 1, **dadurch gekennzeichnet, dass** CAT⁺ ein Kation eines Azofarbstoffs ist.

7. Farbstoffe gemäß Anspruch 1, **dadurch gekennzeichnet, dass** CAT⁺ ein Kation eines Tetrazoliumfarbstoffs ist.

8. Farbstoffe gemäß Anspruch 1, **dadurch gekennzeichnet, dass** CAT⁺ ein Kation eines Pyryliumfarbstoffs ist.

9. Farbstoffe gemäß Anspruch 1, **dadurch gekennzeichnet, dass** CAT⁺ ein Kation eines Benzopyryliumfarbstoffs ist.

10. Farbstoffe gemäß Anspruch 1, **dadurch gekennzeichnet, dass** CAT⁺ ein Kation eines Thiopyryliumfarbstoffs ist.

11. Farbstoffe gemäß Anspruch 1, **dadurch gekennzeichnet, dass** CAT⁺ ein Kation eines Benzothiopyryliumfarbstoffs ist.

12. Farbstoffe gemäß Anspruch 1, **dadurch gekennzeichnet, dass** CAT⁺ ein Kation eines Thiazinfarbstoffs ist.

13. Farbstoffe gemäß Anspruch 1, **dadurch gekennzeichnet, dass** CAT⁺ ein Kation eines Oxazinfarbstoffs ist.

14. Farbstoffe gemäß Anspruch 1, **dadurch gekennzeichnet, dass** CAT⁺ ein Kation eines Triarylmethanfarbstoffs ist.

15. Farbstoffe gemäß Anspruch 1, **dadurch gekennzeichnet, dass** CAT⁺ ein Kation eines Diarylmethanfarbstoffs ist.

16. Farbstoffe gemäß Anspruch 1, **dadurch gekennzeichnet, dass** CAT⁺ ein Kation eines Acridinfarbstoffs ist.

17. Farbstoffe gemäß Anspruch 1, **dadurch gekennzeichnet, dass** CAT⁺ ein Kation eines Chinolinfarbstoffs ist.

18. Farbstoffe gemäß Anspruch 1, **dadurch gekennzeichnet, dass** CAT⁺ ein Kation eines Iso-Chinolinfarbstoffs ist.

19. Farbstoffe gemäß Anspruch 1, **dadurch gekennzeichnet, dass** CAT⁺ ein Kation eines quarternären Azafluorenonfarbstoffs ist.

20. Farbstoffe gemäß Anspruch 4, **dadurch gekennzeichnet, dass** CAT⁺ ein Kation eines Cyaninfarbstoffs ist.

21. Farbstoffe gemäß Anspruch 4, **dadurch gekennzeichnet, dass** CAT⁺ ein Kation eines Carbocyaninfarbstoffs ist.

22. Farbstoffe gemäß Anspruch 4, **dadurch gekennzeichnet, dass** CAT⁺ ein Kation eines Azacarbocyaninfarbstoffs ist.

23. Farbstoffe gemäß Anspruch 4, **dadurch gekennzeichnet, dass** CAT⁺ ein Kation eines Diazacarbocyaninfarbstoffs ist.

24. Farbstoffe gemäß Anspruch 4, **dadurch gekennzeichnet, dass** CAT⁺ ein Kation eines Triazacarbocyaninfarbstoffs ist.

25. Farbstoffe gemäß Anspruch 4, **dadurch gekennzeichnet, dass** CAT⁺ ein Kation eines Hemicyaninfarbstoffs ist.

26. Farbstoffe gemäß Anspruch 4, **dadurch gekennzeichnet, dass** CAT⁺ ein Kation eines Diazahemicyaninfarbstoffs ist.

27. Verfahren zur Herstellung kationischer Farbstoffe nach einem der Ansprüche 1 bis 26, **dadurch gekennzeichnet, dass** eine Verbindung der allgemeinen Formel XXI
CAT⁺A⁻ (XXI),
wobei CAT⁺ ein Kation ist, ausgewählt aus der Gruppe der Azin-, Xanthen-, Polymethin-, Styryl-, Azo-, Tetrazolium-, Pyrylium-, Benzopyrylium-, Thiopyrylium-, Benzothiopyrylium-, Thiazin-, Oxazin-, Triarylmethan-, Diarylmethan-, Acridin-, Chinolin-, Iso-Chinolin- oder quarternierten Azafluorenon-Farbstoffe
und A⁻ Cl⁻, Br⁻, I⁻, BF₄⁻, PF₆⁻, ClO₄⁻, Sulfat, Tosylat, Hydrosulfat, Triflat, Trifluoracetat, Acetat oder Oxalat bedeutet,
mit einer Verbindung der allgemeinen Formel XXII
E⁺ Y⁻ (XXII)
umgesetzt wird,
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4,
und E⁺ ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium ist.

28. Verfahren zur Herstellung von Carbocyaninfarbstoffen gemäß Anspruch 21, wobei der Carbocyaninfarbstoff der Formel XXIII entspricht, 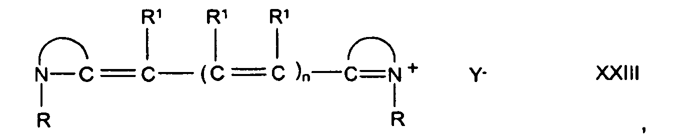 worin
n 0, 1, 2, 3, 4 oder 5,
R jeweils unabhängig voneinander Alkyl, Alkenyl, Cycloalkyl, Aryl oder Heteroaryl und
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHC(O)Alkyl oder NHC(O)Aryl bedeutet und
das Ringsystem, dargestellt durch 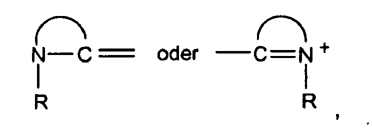 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN, SCF₃, COOAlkyl, CH₂-COOAlkyl, NH₂, NHAlkyl oder N(Alkyl)₂ bedeutet
und
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4,
**dadurch gekennzeichnet, dass** eine Verbindung der Formel XXIV 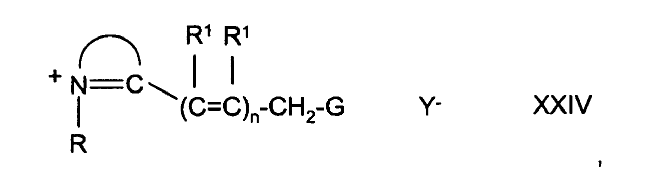 verwendet wird, wobei das Ringsystem, R, R¹ und Y' eine der bei Formel XXIII angegebenen Bedeutungen haben und
n 0, 1, 2, 3 oder 4 und
G Wasserstoff, Alkyl, Alkenyl, Aryl, Heteroaryl, N=C(R)₂, CONHAryl, C(O)Aryl oder CONHAlkyl bedeutet.

29. Verbindungen der Formel XXIV 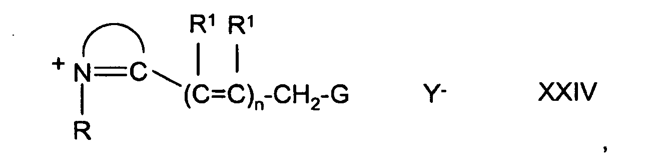 wobei
n 0, 1, 2, 3 oder 4,
G Wasserstoff, Alkyl, Alkenyl, Aryl, Heteroaryl, N=C(R)₂, CONHAryl, C(O)Aryl oder CONHAlkyl,
R Alkyl, Alkenyl, Cycloalkyl, Aryl oder Heteroaryl,
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHC(O)Alkyl oder NHC(O)Aryl bedeutet und
das Ringsystem, , dargestellt durch 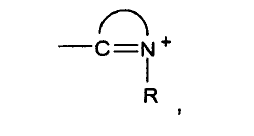 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN, SCF₃, COOAlkyl, CH₂-COOAlkyl, NH₂, NHAlkyl oder N(Alkyl)₂ bedeutet
und
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4.

30. Verfahren zur Herstellung der Verbindungen der Formel XXIV gemäß Anspruch 29,
**dadurch gekennzeichnet, dass**
eine Verbindung der Formel XXV 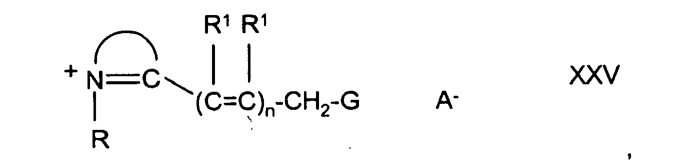 worin
A⁻ Cl⁻, Br⁻, I⁻, BF₄⁻, PF₆⁻, ClO₄⁻, Sulfat, Tosylat, Hydrosulfat, Triflat, Trifluoracetat, Acetat oder Oxalat bedeutet,
das Ringsystem, dargestellt durch 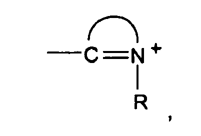 einen Stickstoff enthaltenden ungesättigten mono-, bi- oder tricyclischen Heterocyclus mit 5 bis 13 Ringgliedern bedeutet, wobei weiterhin 1.2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN, SCF₃, COOAlkyl, CH₂-COOAlkyl, NH₂, NHAlkyl oder N(Alkyl)₂,
n 0, 1, 2, 3 oder 4,
R Alkyl, Alkenyl, Cycloalkyl, Aryl oder Heteroaryl,
R¹ jeweils unabhängig voneinander H, Cl, Br, I, Alkyl, teilweise oder vollständig chloriertes Alkyl, Alkenyl, Cycloalkyl, Aryl, Heteroaryl, OAlkyl, OAryl, SAlkyl, SAryl, NHAlkyl, N(Alkyl)₂, C(O)H, C(O)Alkyl, C(O)Aryl, CN, N=N-Aryl, P(Aryl)₂, NHC(O)Alkyl oder NHC(O)Aryl und
G Wasserstoff, Alkyl, Alkenyl, Aryl, Heteroaryl, N=C(R)₂, CONHAryl, C(O)Aryl oder CONHAlkyl bedeutet,
mit einer Verbindung der Formel XXVI
E⁺ Y⁻ XXVI,
umgesetzt wird, worin
E⁺ ein Kation der Alkali-, Erdalkalimetalle oder eines Metalls der Gruppe 11 und 12, Ammonium, Alkylammonium mit C₁-C₄-Alkyl, Phosphonium, Alkylphosphonium mit C₁-C₄-Alkyl oder Guanidinium ist und
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}] (II-2)
ist, mit
p2: 1 bis 20,
m2: 0, 1, 2 oder 3 und
y2: 1, 2, 3 oder 4.

31. Verfahren zur Herstellung von Verbindungen der Formel XXIV gemäß Anspruch 29, mit der Einschränkung, dass n in Formel XXIV 0 bedeutet, **dadurch gekennzeichnet, dass**
eine Verbindung der Formel XXVII 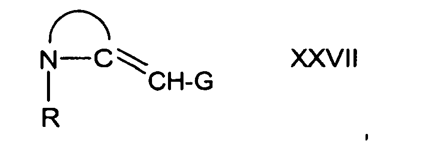 worin
G Wasserstoff, Alkyl, Alkenyl, Aryl, Heteroaryl, N=C(R)₂, CONHAryl, C(O)Aryl oder CONHAlkyl und
R Alkyl, Alkenyl, Cycloalkyl, Aryl oder Heteroaryl bedeutet
und
das Ringsystem, dargestellt durch 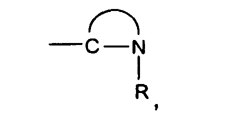 einen Stickstoff enthaltenden ungesättigten mono-, bi- oder tricyclischen Heterocyclus mit 5 bis 13 Ringgliedern bedeutet, wobei weiterhin 1, 2 oder 3 N- und/oder 1 oder 2 S- oder O-Atome vorliegen können und der heterocyclische Rest ein- oder mehrfach durch Z substituiert sein kann,
Z Wasserstoff, Alkyl, NO₂, F, Cl, Br, I, OH, COOH, OAlkyl, SCN, SCF₃, COOAlkyl, CH₂-COOAlkyl, NH₂, NHAlkyl oder N(Alkyl)₂ bedeutet,
mit HY umgesetzt wird,
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4.

32. Verfahren zur Herstellung von Azofarbstoffen gemäß Anspruch 6, wobei der Azofarbstoff der Formel XXVIII entspricht
( R'-N=N- R")⁺ Y⁻ XXVIII,
wobei
R' und R" Aryl oder Heteroaryl bedeuten und einer der beiden aromatischen Kerne positiv geladen ist und
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4,
**dadurch gekennzeichnet, dass** eine Verbindung der Formel XXIX
R'-N₂⁺ Y⁻ XXIX
wobei R' und Y⁻ eine der bei Formel XXVIII angegebene Bedeutung hat, mit der aromatischen cyclischen oder heterocyclischen Verbindung R" umgesetzt wird.

33. Verbindungen der Formel XXIX
R'-N₂⁺ Y⁻ XXIX,
worin
R' Aryl oder Heteroaryl bedeutet und
wobei Y⁻ ein FAP⁻-Anion der allgmeinen Formel (II-2)
[P(Cₚ₂F₂ₚ₂₊₁₋ₘ₂Hₘ₂)_{y2}F_{6-y2}]⁻ (II-2)
ist, mit
p2: 1 bis 20,
m2: 0, 1, 2 oder 3 und
y2: 1, 2, 3 oder 4.

34. Verwendung der Farbstoffe gemäß einem der Ansprüche 1 bis 26 zum Färben von Kunststoffen und Kunststofffasern, zur Herstellung von Flexodruckfarben, als Kugelschreiberpasten, als Stempelfarbe, zum Färben von Leder und Papier, in kosmetischen Formulierungen in der Farbindustrie, in der Biochemie, der Biologie, der Medizin, der Analytik oder der Elektronik.

35. Verwendung der Farbstoffe gemäß einem der Ansprüche 1 bis 26 in Datenerfassungssystemen, der Reprographie, in Mikrofarbfiltern, in der Photogalvanik, der Lasertechnik oder der Photoindustrie.

36. Verwendung der Farbstoffe gemäß einem der Ansprüche 1 bis 26 für CD-Recorder, DVD-Recorder (DVD+R, DVD+RW), Bluray-Disc (BD-ROM, BD-R, BD-RE), Computer to Plate, Laser Filter, Laser Marking oder Photopolymerisation.

## Claims

1. Cationic dyes of the general formula I
CAT⁺ Y⁻ (I),
where Y⁻ is a fluoroalkyl phosphate of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4,
and
CAT⁺ is a cation selected from the group of the azine, xanthene, polymethine, styryl, azo, tetrazolium, pyrylium, benzopyrylium, thiopyrylium, benzothiopyrylium, thiazine, oxazine, triarylmethane, diarylmethane, acridine, quinoline, isoquinoline or quaternised azafluorenone dyes.

2. Dyes according to Claim 1, **characterised in that** CAT⁺ is a cation of an azine dye.

3. Dyes according to Claim 1, **characterised in that** CAT⁺ is a cation of a xanthene dye.

4. Dyes according to Claim 1, **characterised in that** CAT⁺ is a cation of a polymethine dye.

5. Dyes according to Claim 1, **characterised in that** CAT⁺ is a cation of a styryl dye.

6. Dyes according to Claim 1, **characterised in that** CAT⁺ is a cation of an azo dye.

7. Dyes according to Claim 1, **characterised in that** CAT⁺ is a cation of a tetrazolium dye.

8. Dyes according to Claim 1, **characterised in that** CAT⁺ is a cation of a pyrylium dye.

9. Dyes according to Claim 1, **characterised in that** CAT⁺ is a cation of a benzopyrylium dye.

10. Dyes according to Claim 1, **characterised in that** CAT⁺ is a cation of a thiopyrylium dye.

11. Dyes according to Claim 1, **characterised in that** CAT⁺ is a cation of a benzothiopyrylium dye.

12. Dyes according to Claim 1, **characterised in that** CAT⁺ is a cation of a thiazine dye.

13. Dyes according to Claim 1, **characterised in that** CAT⁺ is a cation of an oxazine dye.

14. Dyes according to Claim 1, **characterised in that** CAT⁺ is a cation of a triarylmethane dye.

15. Dyes according to Claim 1, **characterised in that** CAT⁺ is a cation of a diarylmethane dye.

16. Dyes according to Claim 1, **characterised in that** CAT⁺ is a cation of an acridine dye.

17. Dyes according to Claim 1, **characterised in that** CAT⁺ is a cation of a quinoline dye.

18. Dyes according to Claim 1, **characterised in that** CAT⁺ is a cation of an isoquinoline dye.

19. Dyes according to Claim 1, **characterised in that** CAT⁺ is a cation of a quaternary azafluorenone dye.

20. Dyes according to Claim 4, **characterised in that** CAT⁺ is a cation of a cyanine dye.

21. Dyes according to Claim 4, **characterised in that** CAT⁺ is a cation of a carbocyanine dye.

22. Dyes according to Claim 4, **characterised in that** CAT⁺ is a cation of an azacarbocyanine dye.

23. Dyes according to Claim 4, **characterised in that** CAT⁺ is a cation of a diazacarbocyanine dye.

24. Dyes according to Claim 4, **characterised in that** CAT⁺ is a cation of a triazacarbocyanine dye.

25. Dyes according to Claim 4, **characterised in that** CAT⁺ is a cation of a hemicyanine dye.

26. Dyes according to Claim 4, **characterised in that** CAT⁺ is a cation of a diazahemicyanine dye.

27. Process for the preparation of cationic dyes according to one of Claims 1 to 26, **characterised in that**
a compound of the general formula XXI
CAT⁺A⁻ (XXI),
where CAT⁺ is a cation selected from the group of the azine, xanthene, polymethine, styryl, azo, tetrazolium, pyrylium, benzopyrylium, thiopyrylium, benzothiopyrylium, thiazine, oxazine, triarylmethane, diarylmethane, acridine, quinoline, isoquinoline or quaternised azafluorenone dyes
and A⁻ denotes Cl⁻, Br⁻, I⁻, BF₄⁻, PF₆⁻, ClO₄⁻, sulfate, tosylate, hydrosulfate, triflate, trifluoroacetate, acetate or oxalate,
is reacted with a compound of the general formula XXII
E⁺ Y⁻ (XXII)
where Y⁻ is an FAP⁻ anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4,
and E⁺ is a cation of the alkali metals, alkaline earth metals or of a metal from group 11 and 12, ammonium, alkylammonium containing C₁-C₄-alkyl, phosphonium, alkylphosphonium containing C₁-C₄-alkyl or guanidinium.

28. Process for the preparation of carbocyanine dyes according to Claim 21, where the carbocyanine dye conforms to the formula XXIII 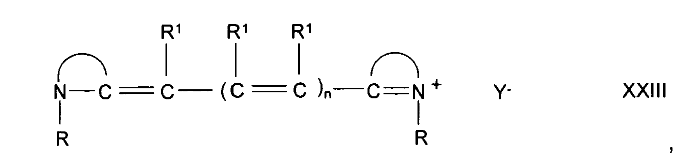 in which
n denotes 0, 1, 2, 3, 4 or 5,
R in each case, independently of one another, denotes alkyl, alkenyl, cycloalkyl, aryl or heteroaryl and
R¹ in each case, independently of one another, denotes H, Cl, Br, I, alkyl, partially or fully chlorinated alkyl, alkenyl, cycloalkyl, aryl, heteroaryl, Oalkyl, Oaryl, Salkyl, Saryl, NHalkyl, N(alkyl)₂, C(O)H, C(O)alkyl, C(O)aryl, CN, N=N-aryl, P(aryl)₂, NHC(O)alkyl or NHC(O)aryl and
the ring system, represented by 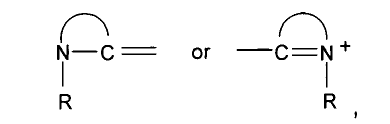 denotes a nitrogen-containing unsaturated mono-, bi- or tricyclic heterocycle having 5 to 13 ring members, which may furthermore contain 1, 2 or 3 N and/or 1 or 2 S or O atoms and in which the heterocyclic radical may be mono- or polysubstituted by Z,
Z denotes hydrogen, alkyl, NO₂, F, Cl, Br, I, OH, COOH, Oalkyl, SCN, SCF₃, COOalkyl, CH₂-COOalkyl, NH₂, NHalkyl or N(alkyl)₂
and
where Y⁻ is an FAP⁻ anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4,
**characterised in that** use is made of a compound of the formula XXIV 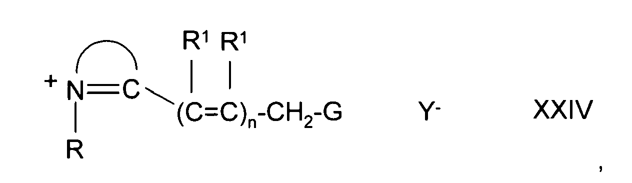 where the ring system, R, R¹ and Y⁻ have one of the meanings indicated in the case of formula XXIII and
n denotes 0, 1, 2, 3 or 4 and
G denotes hydrogen, alkyl, alkenyl, aryl, heteroaryl, N=C(R)₂, CONHaryl, C(O)aryl or CONHalkyl.

29. Compounds of the formula XXIV 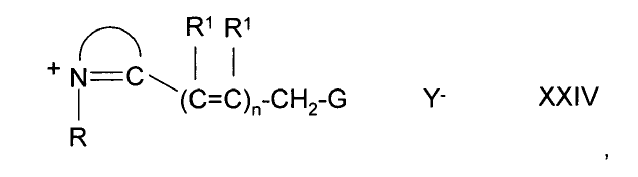 where
n denotes 0, 1, 2, 3 or 4,
G denotes hydrogen, alkyl, alkenyl, aryl, heteroaryl, N=C(R)₂, CONHaryl, C(O)aryl or CONHalkyl,
R denotes alkyl, alkenyl, cycloalkyl, aryl or heteroaryl,
R¹ in each case, independently of one another, denotes H, Cl, Br, I, alkyl, partially or fully chlorinated alkyl, alkenyl, cycloalkyl, aryl, heteroaryl, Oalkyl, Oaryl, Salkyl, Saryl, NHalkyl, N(alkyl)₂, C(O)H, C(O)alkyl, C(O)aryl, CN, N=N-aryl, P(aryl)₂, NHC(O)alkyl or NHC(O)aryl and
the ring system, represented by 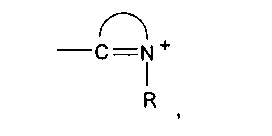 denotes a nitrogen-containing unsaturated mono-, bi- or tricyclic heterocycle having 5 to 13 ring members, which may furthermore contain 1, 2 or 3 N and/or 1 or 2 S or O atoms and in which the heterocyclic radical may be mono- or polysubstituted by Z,
Z denotes hydrogen, alkyl, NO₂, F, Cl, Br, I, OH, COOH, Oalkyl, SCN, SCF₃, COOalkyl, CH₂-COOalkyl, NH₂, NHalkyl or N(alkyl)₂
and
where Y⁻ is an FAP⁻ anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4.

30. Process for the preparation of the compounds of the formula XXIV according to Claim 29,
**characterised in that**
a compound of the formula XXV 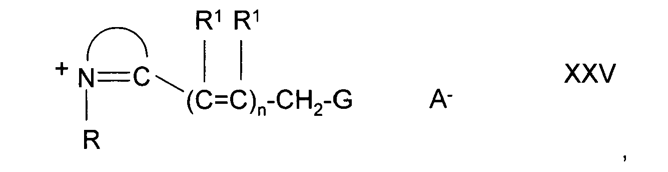 in which
A⁻ denotes Cl⁻, Br⁻, I⁻, BF₄⁻, PF₆⁻, ClO₄⁻, sulfate, tosylate, hydrosulfate, triflate, trifluoroacetate, acetate or oxalate,
the ring system, represented by 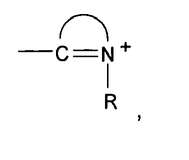 denotes a nitrogen-containing unsaturated mono-, bi- or tricyclic heterocycle having 5 to 13 ring members, which may furthermore contain 1, 2 or 3 N and/or 1 or 2 S or O atoms and in which the heterocyclic radical may be mono- or polysubstituted by Z,
Z denotes hydrogen, alkyl, NO₂, F, Cl, Br, I, OH, COOH, Oalkyl, SCN, SCF₃, COOalkyl, CH₂-COOalkyl, NH₂, NHalkyl or N(alkyl)₂,
n denotes 0, 1, 2, 3 or 4,
R denotes alkyl, alkenyl, cycloalkyl, aryl or heteroaryl,
R¹ in each case, independently of one another, denotes H, Cl, Br, I, alkyl, partially or fully chlorinated alkyl, alkenyl, cycloalkyl, aryl, heteroaryl, Oalkyl, Oaryl, Salkyl, Saryl, NHalkyl, N(alkyl)₂, C(O)H, C(O)alkyl, C(O)aryl, CN, N=N-aryl, P(aryl)₂, NHC(O)alkyl or NHC(O)aryl and
G denotes hydrogen, alkyl, alkenyl, aryl, heteroaryl, N=C(R)₂, CONHaryl, C(O)aryl or CONHalkyl,
is reacted with a compound of the formula XXVI
E⁺ Y⁻ XXVI,
in which
E⁺ is a cation of the alkali metals, alkaline earth metals or of a metal from group 11 and 12, ammonium, alkylammonium containing C₁-C₄-alkyl, phosphonium, alkylphosphonium containing C₁-C₄-alkyl or guanidinium
and
where Y⁻ is an FAP⁻ anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4.

31. Process for the preparation of compounds of the formula XXIV according to Claim 29, with the restriction that n in formula XXIV denotes 0, **characterised in that**
a compound of the formula XXVII 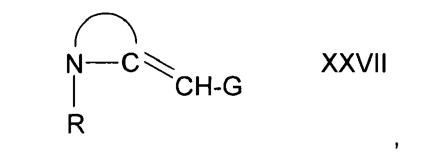 in which
G denotes hydrogen, alkyl, alkenyl, aryl, heteroaryl, N=C(R)₂, CONHaryl, C(O)aryl or CONHalkyl and
R denotes alkyl, alkenyl, cycloalkyl, aryl or heteroaryl
and
the ring system, represented by 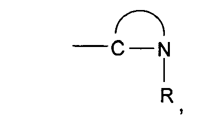 denotes a nitrogen-containing unsaturated mono-, bi- or tricyclic heterocycle having 5 to 13 ring members, which may furthermore contain 1, 2 or 3 N and/or 1 or 2 S or O atoms and in which the heterocyclic radical may be mono- or polysubstituted by Z,
Z denotes hydrogen, alkyl, NO₂, F, Cl, Br, I, OH, COOH, Oalkyl, SCN, SCF₃, COOalkyl, CH₂-COOalkyl, NH₂, NHalkyl or N(alkyl)₂,
is reacted with HY,
where Y⁻ is an FAP⁻ anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4.

32. Process for the preparation of azo dyes according to Claim 6, where the azo dye conforms to the formula XXVIII
(R'-N=N-R")⁺ Y⁻ XXVII,
where
R' and R" denote aryl or heteroaryl and one of the two aromatic nuclei is positively charged and
where Y⁻ is an FAP- anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4,
**characterised in that** a compound of the formula XXIX
R'-N₂⁺ Y⁻ XXIX,
where R' and Y⁻ have one of the meanings indicated in the case of formula XXVIII,
is reacted with the aromatic cyclic or heterocyclic compound R".

33. Compounds of the formula XXIX
R'-N₂⁺ Y⁻ XXIX,
in which
R' denotes aryl or heteroaryl and
where Y⁻ is an FAP- anion of the general formula (II-2)
[P(Cₚ₂F₂ₚ₂₊₁₋ₘ₂Hₘ₂)_{y2}F_{6-y2}]⁻ (II-2)
with
p2: 1 to 20,
m2: 0, 1, 2 or 3 and
y2: 1, 2, 3 or 4.

34. Use of the dyes according to one of Claims 1 to 26 for colouring plastics and plastic fibres, for the preparation of flexographic printing inks, as ball-point pen pastes, as stamp ink, for colouring leather and paper, in cosmetic formulations in the paints industry, in biochemistry, biology, medicine, analytics or electronics.

35. Use of the dyes according to one of Claims 1 to 26 in data acquisition systems, reprography, in ink microfilters, in photogalvanics, laser technology or the photo industry.

36. Use of the dyes according to one of Claims 1 to 26 for CD recorders, DVD recorders (DVD+R, DVD+RW), Blu-ray discs (BD-ROM, BD-R, BD-RE), computer to plate, laser filters, laser marking or photopolymerisation.

## Revendications

1. Colorants cationiques de la formule générale I
CAT⁺ Y⁻ (I),
où Y⁻ est un phosphate de fluoroalkyle de la formule générale (II-2)
[P(Cₚ₂F₂ₚ₂₊₁₋ₘ₂Hₘ₂)_{y2}F_{6-y2}]⁻ (II-2)
avec
p2 : 1 à 20,
m2: 0, 1, 2 ou 3 et
y2 : 1, 2, 3 ou 4,
et
CAT⁺ est un cation choisi parmi le groupe des colorants azine, xanthène, polyméthine, styryle, azo, tétrazolium, pyrylium, benzopyrylium, thiopyrylium, benzothiopyrylium, thiazine, oxazine, triarylméthane, diarylméthane, acridine, quinoline, isoquinoline ou azafluorénone quaternisé.

2. Colorants selon la revendication 1, **caractérisés en ce que** CAT⁺ est un cation d'un colorant azine.

3. Colorants selon la revendication 1, **caractérisés en ce que** CAT⁺ est un cation d'un colorant xanthène.

4. Colorants selon la revendication 1, **caractérisés en ce que** CAT⁺ est un cation d'un colorant polyméthine.

5. Colorants selon la revendication 1, **caractérisés en ce que** CAT⁺ est un cation d'un colorant styryle.

6. Colorants selon la revendication 1, **caractérisés en ce que** CAT⁺ est un cation d'un colorant azo.

7. Colorants selon la revendication 1, **caractérisés en ce que** CAT⁺ est un cation d'un colorant tétrazolium.

8. Colorants selon la revendication 1, **caractérisés en ce que** CAT⁺ est un cation d'un colorant pyrylium.

9. Colorants selon la revendication 1, **caractérisés en ce que** CAT⁺ est un cation d'un colorant benzopyrylium.

10. Colorants selon la revendication 1, **caractérisés en ce que** CAT⁺ est un cation d'un colorant thiopyrylium.

11. Colorants selon la revendication 1, **caractérisés en ce que** CAT⁺ est un cation d'un colorant benzothiopyrylium.

12. Colorants selon la revendication 1, **caractérisés en ce que** CAT⁺ est un cation d'un colorant thiazine.

13. Colorants selon la revendication 1, **caractérisés en ce que** CAT⁺ est un cation d'un colorant oxazine.

14. Colorants selon la revendication 1, **caractérisés en ce que** CAT⁺ est un cation d'un colorant triarylméthane.

15. Colorants selon la revendication 1, **caractérisés en ce que** CAT⁺ est un cation d'un colorant diarylméthane.

16. Colorants selon la revendication 1, **caractérisés en ce que** CAT⁺ est un cation d'un colorant acridine.

17. Colorants selon la revendication 1, **caractérisés en ce que** CAT⁺ est un cation d'un colorant quinoline.

18. Colorants selon la revendication 1, **caractérisés en ce que** CAT⁺ est un cation d'un colorant isoquinoline.

19. Colorants selon la revendication 1, **caractérisés en ce que** CAT⁺ est un cation d'un colorant azafluorénone quaternaire.

20. Colorants selon la revendication 4, **caractérisés en ce que** CAT⁺ est un cation d'un colorant cyanine.

21. Colorants selon la revendication 4, **caractérisés en ce que** CAT⁺ est un cation d'un colorant carbocyanine.

22. Colorants selon la revendication 4, **caractérisés en ce que** CAT⁺ est un cation d'un colorant azacarbocyanine.

23. Colorants selon la revendication 4, **caractérisés en ce que** CAT⁺ est un cation d'un colorant diazacarbocyanine.

24. Colorants selon la revendication 4, **caractérisés en ce que** CAT⁺ est un cation d'un colorant triazacarbocyanine.

25. Colorants selon la revendication 4, **caractérisés en ce que** CAT⁺ est un cation d'un colorant hémicyanine.

26. Colorants selon la revendication 4, **caractérisés en ce que** CAT⁺ est un cation d'un colorant diazahémicyanine.

27. Procédé pour la préparation de colorants cationiques selon l'une des revendications 1 à 26, **caractérisé en ce que**
un composé de la formule générale XXI
CAT⁺A⁻ (XXI),
où CAT⁺ est un cation choisi parmi le groupe des colorants azine, xanthène, polyméthine, styryle, azo, tétrazolium, pyrylium, benzopyrylium, thiopyrylium, benzothiopyrylium, thiazine, oxazine, triarylméthane, diarylméthane, acridine, quinoline, isoquinoline ou azafluorénone quaternisé
et A⁻ représente Cl⁻, Br⁻, I⁻, BF₄⁻, PF₆⁻, ClO₄⁻, sulfate, tosylate, hydrosulfate, triflate, trifluoroacétate, acétate ou oxalate,
est amené à réagir avec un composé de la formule générale XXII
E⁺ Y⁻ (XXII)
où Y⁻ est un anion FAP- de la formule générale (II-2)
[P(Cₚ₂F₂ₚ₂₊₁₋ₘ₂Hₘ₂)_{y2}F_{6-y2}]⁻ (II-2)
avec
p2 : 1 à 20,
m2: 0, 1, 2 ou 3 et
y2: 1, 2, 3 ou 4,
et E⁺ est un cation des métaux alcalins, des métaux alcalino-terreux ou d'un métal parmi le groupe 11 et 12, ammonium, alkylammonium contenant C₁-C₄-alkyle, phosphonium, alkylphosphonium contenant C₁-C₄-alkyle ou guanidinium.

28. Procédé pour la préparation de colorants carbocyanine selon la revendication 21, où le colorant carbocyanine est conforme à la formule XXIII 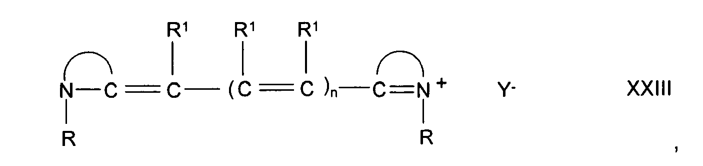 dans laquelle
n représente 0, 1, 2, 3, 4 ou 5,
R dans chaque cas, indépendamment les uns des autres, représente alkyle, alkényle, cycloalkyle, aryle ou hétéroaryle et
R¹ dans chaque cas, indépendamment les uns des autres, représente H, Cl, Br, I, alkyle, alkyle partiellement ou complètement chloré, alkényle, cycloalkyle, aryle, hétéroaryle, Oalkyle, Oaryle, Salkyle, Saryle, NHalkyle, N(alkyle)₂, C(O)H, C(O)alkyle, C(O)aryle, CN, N=N-aryle, P(aryle)₂, NHC(O)alkyle ou NHC(O)aryle et
le système de cycles, représenté par 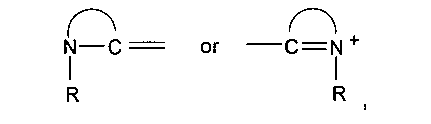 représente un hétérocycle mono-, bi- ou tricyclique non saturé contenant azote comportant de 5 à 13 éléments de cycle, lequel peut en outre contenir 1, 2 ou 3 atomes de N et/ou 1 ou 2 atomes de S ou O et dans lequel le radical hétérocyclique peut être mono- ou polysubstitué par Z,
Z représente hydrogène, alkyle, NO₂, F, Cl, Br, I, OH, COOH, Oalkyle, SCN, SCF₃, COOalkyle, CH₂-COOalkyle, NH₂, NHalkyle ou N(alkyle)₂
et
où Y⁻ est un anion FAP- de la formule générale (II-2)
[P(Cₚ₂F₂ₚ₂₊₁₋ₘ₂Hₘ₂)_{y2}F_{6-y2}]⁻ (II-2)
avec
p2 : 1 à 20,
m2 : 0, 1, 2 ou 3 et
y2 : 1, 2, 3 ou 4,
**caractérisé en ce que** l'on utilise un composé de la formule XXIV 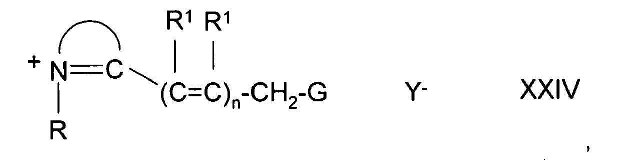 où le système de cycle, R, R¹ et Y⁻ présentent l'une des significations indiquées dans le cas de la formule XXIII et
n représente 0, 1, 2, 3 ou 4 et
G représente hydrogène, alkyle, alkényle, aryle, hétéroaryle, N=C(R)₂, CONHaryle, C(O)aryle ou CONHalkyle.

29. Composés de la formule XXIV 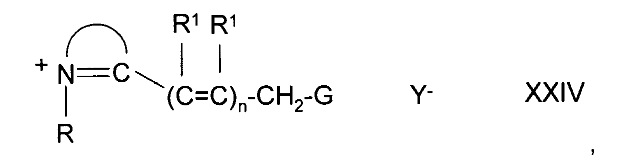 où
n représente 0, 1, 2, 3 ou 4,
G représente hydrogène, alkyle, alkényle, aryle, hétéroaryle, N=C(R)₂, CONHaryle, C(O)aryle ou CONHalkyle,
R représente alkyle, alkényle, cycloalkyle, aryle ou hétéroaryle,
R¹ dans chaque cas, indépendamment les uns des autres, représente H, Cl, Br, I, alkyle, alkyle partiellement ou complètement chloré, alkényle, cycloalkyle, aryle, hétéroaryle, Oalkyle, Oaryle, Salkyle, Saryle, NHalkyle, N(alkyle)₂, C(O)H, C(O)alkyle, C(O)aryle, CN, N=N-aryle, P(aryle)₂, NHC(O)alkyle ou NHC(O)aryle et
le système de cycle, représenté par 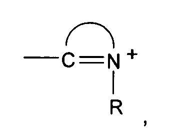 représente un hétérocycle mono-, bi- ou tricyclique non saturé contenant azote comportant de 5 à 13 éléments de cycle, lequel peut en outre contenir 1, 2 ou 3 atomes de N et/ou 1 ou 2 atomes de S ou O et dans lequel le radical hétérocyclique peut être mono- ou polysubstitué par Z,
Z représente hydrogène, alkyle, NO₂, F, Cl, Br, I, OH, COOH, Oalkyle, SCN, SCF₃, COOalkyle, CH₂-COOalkyle, NH₂, NHalkyle ou N(alkyle)₂
et
où Y⁻ est un anion FAP⁻ de la formule générale (II-2)
[P(C_{p2F2p2+1-m2}Hₘ₂)_{y2}F_{6-y2}]⁻ (II-2)
avec
p2 : 1 à 20,
m2: 0, 1, 2 ou 3 et
y2: 1, 2, 3 ou 4.

30. Procédé pour la préparation des composés de la formule XXIV selon la revendication 29,
**caractérisé en ce qu'**un composé de la formule XXV 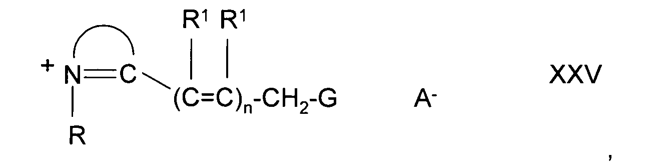 dans laquelle
A⁻ représente Cl⁻, Br⁻, I⁻, BF₄⁻, PF₆⁻, ClO₄⁻, sulfate, tosylate, hydrosulfate, triflate, trifluoroacétate, acétate ou oxalate,
le système de cycle, représenté par 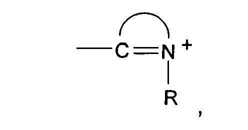 représente un hétérocycle mono-, bi- ou tricyclique non saturé contenant azote comportant de 5 à 13 éléments de cycle, lequel peut en outre contenir 1, 2 ou 3 atomes de N et/ou 1 ou 2 atomes de S ou O et dans lequel le radical hétérocyclique peut être mono- ou polysubstitué par Z,
Z représente hydrogène, alkyle, NO₂, F, Cl, Br, I, OH, COOH, Oalkyle, SCN, SCF₃, COOalkyle, CH₂-COOalkyle, NH₂, NHalkyle ou N(alkyle)₂,
n représente 0, 1, 2, 3 ou 4,
R représente alkyle, alkényle, cycloalkyle, aryle ou hétéroaryle,
R¹ dans chaque cas, indépendamment les uns des autres, représente H, Cl, Br, I, alkyle, alkyle partiellement ou complètement chloré, alkényle, cycloalkyle, aryle, hétéroaryle, Oalkyle, Oaryle, Salkyle, Saryle, NHalkyle, N(alkyle)₂, C(O)H, C(O)alkyle, C(O)aryle, CN, N=N-aryle, P(aryle)₂, NHC(O)alkyle ou NHC(O)aryle et
G représente hydrogène, alkyle, alkényle, aryle, hétéroaryle, N=C(R)₂, CONHaryle, C(O)aryle ou CONHalkyle,
est amené à réagir avec un composé de la formule générale
E⁺ Y⁻ XXVI,
dans laquelle
E⁺ est un cation des métaux alcalins, des métaux alcalino-terreux ou d'un métal parmi le groupe 11 et 12, ammonium, alkylammonium contenant C₁-C₄-alkyle, phosphonium, alkylphosphonium contenant C₁-C₄-alkyle ou guanidinium et
où Y⁻ est un anion FAP⁻ de la formule générale (II-2)
[P(Cₚ₂F₂ₚ₂₊₁₋ₘ₂Hₘ₂)_{y2}F_{6-y2}]⁻ (II-2)
avec
p2 : 1 à 20,
m2 : 0, 1, 2 ou 3 et
y2 : 1, 2, 3 ou 4.

31. Procédé pour la préparation de composés de la formule XXIV selon la revendication 29, moyennant la restriction que n dans la formule XXIV représente 0, **caractérisé en ce que**
un composé de la formule XXVII 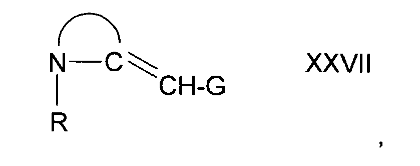 dans laquelle
G représente hydrogène, alkyle, alkényle, aryle, hétéroaryle, N=C(R)₂, CONHaryle, C(O)aryle ou CONHalkyle et
R représente alkyle, alkényle, cycloalkyle, aryle ou hétéroaryle et
le système de cycle, représenté par 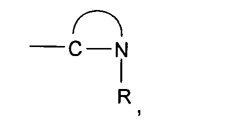 représente un hétérocycle mono-, bi- ou tricyclique non saturé contenant azote comportant de 5 à 13 éléments de cycle, lequel peut en outre contenir 1, 2 ou 3 atomes de N et/ou 1 ou 2 atomes de S ou O et dans lequel le radical hétérocyclique peut être mono- ou polysubstitué par Z,
Z représente hydrogène, alkyle, NO₂, F, Cl, Br, I, OH, COOH, Oalkyle, SCN, SCF₃, COOalkyle, CH₂-COOalkyle, NH₂, NHalkyle ou N(alkyle)₂
est amené à réagir avec HY,
où Y⁻ est un anion FAP⁻ de la formule générale (II-2)
[P(Cₚ₂F₂ₚ₂₊₁₋ₘ₂Hₘ₂)_{y2}F₆₋y₂]⁻ (II-2)
avec
p2 : 1 à 20,
m2: 0, 1, 2 ou 3 et
y2: 1,2, 3 ou 4.

32. Procédé pour la préparation de colorants azo selon la revendication 6, où le colorant azo est conforme à la formule XXVIII
( R'-N=N- R" ) ⁺ Y⁻ XXVII,
où
R' et R" représentent aryle ou hétéroaryle et l'un des deux noyaux aromatiques est chargé positivement et
où Y⁻ est un anion FAP⁻ de la formule générale (II-2)
[P(Cₚ₂F₂ₚ₂₊₁₋ₘ₂Hₘ₂)_{y2}F_{6-y2}]⁻ (II-2)
avec
p2 : 1 à 20,
m2 : 0, 1, 2 ou 3 et
y2 : 1, 2, 3 ou 4,
**caractérisé en ce qu'**un composé de la formule XXIX
R'-N₂⁺ Y⁻ XXIX,
où R' et Y⁻ présentent l'une des significations indiquées dans le cas de la formule XXVIII,
est amené à réagir avec le composé cyclique ou hétérocyclique aromatique R".

33. Composés de la formule XXIX
R'-N₂⁺ Y- XXIX
,
dans laquelle
R' représente aryle ou hétéroaryle et
où Y⁻ est un anion FAP⁻ de la formule générale (II-2)
[P(Cₚ₂F₂ₚ₂₊₁₋ₘ₂Hₘ₂)_{y2}F_{6-y2}]⁻ (II-2)
avec
p2 : 1 à 20,
m2 : 0, 1, 2 ou 3 et
y2 : 1, 2, 3 ou 4.

34. Utilisation des colorants selon l'une des revendications 1 à 26 pour colorer des matières plastiques et des fibres plastiques, pour la préparation d'encres d'impression flexographiques, en tant que pâtes de stylos à bille, en tant qu'encre de timbres, pour colorer le cuir et le papier, dans des formulations cosmétiques, dans l'industrie des peintures, en biochimie, en biologie, en médecine, en analytique ou en électronique.

35. Utilisation des colorants selon l'une des revendications 1 à 26 dans des systèmes d'acquisition de données, en reprographie, dans des microfiltres d'encre, en photogalvanie, en technologie laser ou dans l'industrie de la photographie.

36. Utilisation des colorants selon l'une des revendications 1 à 26 pour des enregistreurs de CD, des enregistreurs de DVD (DVD+R, DVD+RW), des disques Blu-ray (BD-ROM, BD-R, BD-RE), l'exposition directe des plaques, des filtres laser, le marquage laser ou la photopolymérisation.
